(19) Europäisches Patentamt
European Patent Office
Office européen des brevets

(11) EP 4 099 318 A1

(12) # EUROPEAN PATENT APPLICATION
published in accordance with Art. 153(4) EPC

(43) Date of publication:
**07.12.2022 Bulletin 2022/49**

(21) Application number: **21747477.4**

(22) Date of filing: **21.01.2021**

(51) International Patent Classification (IPC):
***G10L 15/04*** *(2013.01)* ***G10L 15/10*** *(2006.01)*
***G10L 15/22*** *(2006.01)*

(52) Cooperative Patent Classification (CPC):
**G10L 15/04; G10L 15/10; G10L 15/22**

(86) International application number:
**PCT/JP2021/002112**

(87) International publication number:
**WO 2021/153427 (05.08.2021 Gazette 2021/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2020 JP 2020014519**

(71) Applicant: **Sony Group Corporation**
**Tokyo 108-0075 (JP)**

(72) Inventors:
- **IWASE, Hiro**
**Tokyo 108-0075 (JP)**
- **KABE, Yasuo**
**Tokyo 108-0075 (JP)**
- **TAKI, Yuhei**
**Tokyo 108-0075 (JP)**
- **SAWAI, Kunihito**
**Tokyo 108-0075 (JP)**

(74) Representative: **2SPL Patentanwälte PartG mbB**
**Landaubogen 3**
**81373 München (DE)**

(54) **INFORMATION PROCESSING DEVICE AND INFORMATION PROCESSING METHOD**

(57) To enable a plurality of speeches of a user to be appropriately concatenated. An information processing device according to the present disclosure includes: an acquisition unit (131) that acquires first speech information indicating a first speech by a user, second speech information indicating a second speech by the user after the first speech, and respiration information regarding respiration of the user; and an execution unit (134) that executes processing of concatenating the first speech and the second speech by executing voice interaction control according to a respiratory state of the user based on the respiration information acquired by the acquisition unit.

*FIG. 6*

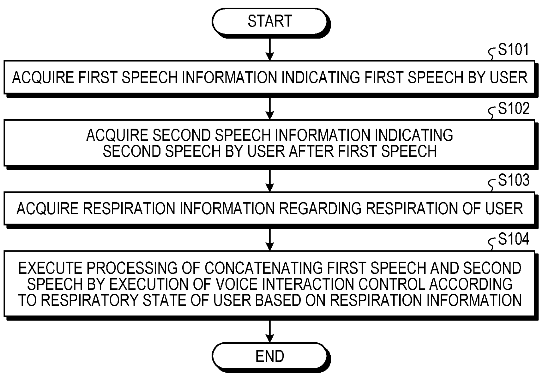


EP 4 099 318 A1

## Description

TECHNICAL FIELD

The present disclosure relates to an information processing device and an information processing method.

BACKGROUND ART

In recent years, techniques of voice interaction systems that communicate (interact) with a user by voice have been provided. For example, a technique of determining speech timing in a voice interaction system is known (for example, Patent Document 1).

CITATION LIST

PATENT DOCUMENT

Patent Document 1: Japanese Patent Application Laid-Open No. 2017-211596

SUMMARY OF THE INVENTION

PROBLEMS TO BE SOLVED BY THE INVENTION

According to the related art, the speech timing of the voice interaction system is determined on the basis of timing at which user's respiration changes from expiration to inspiration.

However, in the related art, it is not always possible to enable a plurality of speeches of the user to be appropriately concatenated. In the related art, only the timing at which the system side speaks to the user is determined, and there is a case where content of the user's speech cannot be correctly recognized in a case where the user's speech is intermittently made due to disturbance of the user's respiration or the like, for example. Therefore, it is desired to enable a plurality of speeches of the user to be appropriately concatenated.

Therefore, the present disclosure proposes an information processing device and an information processing method capable of enabling a plurality of speeches of the user to be appropriately concatenated.

SOLUTIONS TO PROBLEMS

To solve the above-described problem, an information processing device according to one aspect of the present disclosure includes an acquisition unit configured to acquire first speech information indicating a first speech by a user, second speech information indicating a second speech by the user after the first speech, and respiration information regarding respiration of the user, and an execution unit configured to execute processing of concatenating the first speech and the second speech by executing voice interaction control according to a respiratory state of the user based on the respiration information acquired by the acquisition unit.

BRIEF DESCRIPTION OF DRAWINGS

Fig. 1 is a diagram illustrating an example of information processing according to a first embodiment of the present disclosure.
Fig. 2 is a diagram illustrating a configuration example of an information processing system according to the first embodiment of the present disclosure.
Fig. 3 is a diagram illustrating a configuration example of a server device according to the first embodiment of the present disclosure.
Fig. 4 is a diagram illustrating an example of a threshold information storage unit according to the first embodiment of the present disclosure.
Fig. 5 is a diagram illustrating a configuration example of a terminal device according to the first embodiment of the present disclosure.
Fig. 6 is a flowchart illustrating a processing procedure of the information processing device according to the first embodiment of the present disclosure.
Fig. 7 is a sequence diagram illustrating a processing procedure of the information processing system according to the first embodiment of the present disclosure.
Fig. 8A is a flowchart illustrating processing of the information processing system according to the first embodiment of the present disclosure.
Fig. 8B is a flowchart illustrating the processing of the information processing system according to the first embodiment of the present disclosure.
Fig. 9 is a diagram illustrating an example of information processing according to a second embodiment of the present disclosure.
Fig. 10 is a diagram illustrating a configuration example of a server device according to the second embodiment of the present disclosure.
Fig. 11 is a diagram illustrating an example of a determination information storage unit according to the second embodiment of the present disclosure.
Fig. 12A is a flowchart illustrating processing of the information processing system according to the second embodiment of the present disclosure.
Fig. 12B is a flowchart illustrating the processing of the information processing system according to the second embodiment of the present disclosure.
Fig. 13 is a flowchart illustrating processing of the information processing system according to the second embodiment of the present disclosure.
Fig. 14 is a diagram illustrating an example of a relationship between a respiratory state and voice interaction control.
Fig. 15 is a diagram illustrating a functional configuration example of the information processing system.
Fig. 16 is a diagram illustrating an example of an observation target time in respiratory state vector detection.
Fig. 17 is a diagram illustrating an example of observation values in the respiratory state vector detection.
Fig. 18 is a diagram illustrating an example of a normal range by long span time observation elements.
Fig. 19A is a diagram illustrating an example of a relationship between each element of a respiratory state vector and a respiratory state of a user.
Fig. 19B is a diagram illustrating an example of a relationship between each element of a respiratory state vector and a respiratory state of a user.
Fig. 19C is a diagram illustrating an example of a relationship between each element of a respiratory state vector and a respiratory state of a user.
Fig. 20A is a diagram illustrating an example of a relationship between each element of a respiratory state vector and a respiratory state of a user.
Fig. 20B is a diagram illustrating an example of a relationship between each element of a respiratory state vector and a respiratory state of a user.
Fig. 20C is a diagram illustrating an example of a relationship between each element of a respiratory state vector and a respiratory state of a user.
Fig. 21A is a diagram illustrating an example of a relationship between each element of a respiratory state vector and a respiratory state of a user.
Fig. 21B is a diagram illustrating an example of a relationship between each element of a respiratory state vector and a respiratory state of a user.
Fig. 21C is a diagram illustrating an example of a relationship between each element of a respiratory state vector and a respiratory state of a user.
Fig. 22A is a diagram illustrating an example of processing in normal times.
Fig. 22B is a diagram illustrating an example of processing during exercise.
Fig. 23A is a diagram illustrating an example of processing during exercise.
Fig. 23B is a diagram illustrating an example of processing after returning to normal times from during exercise.
Fig. 24 is a hardware configuration diagram illustrating an example of a computer that implements functions of an information processing device.

## MODE FOR CARRYING OUT THE INVENTION

Hereinafter, embodiments of the present disclosure will be described in detail with reference to the drawings. Note that an information processing device and an information processing method according to the present application are not limited by the embodiments. Furthermore, in each of the following embodiments, the same parts are denoted by the same reference numerals, and redundant description will be omitted.

The present disclosure will be described according to the following order of items.

1. First Embodiment

    1-1. Overview of Information Processing According to First Embodiment of Present Disclosure

1-1-1. Background and Effects, and the Like
1-1-2. Sensor Example

1-1-2-1. Contact Type
1-1-2-2. Non-contact Type

1-1-3. Processing Example in which Influence on Speech is Taken Into Consideration
1-1-3-1. Voice Speech Influence Level
1-1-4. Voice Interaction Control Example

1-1-4-1. Concatenation of OOD Speeches
1-1-4-2. Speech Concatenation Based on Co-occurrence Relationship

1-2. Configuration of Information Processing System According to First Embodiment
1-3. Configuration of Information Processing Device According to First Embodiment
1-4. Configuration of Terminal Device According to First Embodiment
1-5. Procedure of Information Processing According to First Embodiment

1-5-1. Procedure of Processing Related to Information Processing Device
1-5-2. Procedure of Processing Related to Information Processing System
1-5-3. Specific Example of Processing Related to Information Processing System

2. Second Embodiment

2-1. Overview of Information Processing According to Second Embodiment
2-1-1. Processing Example in which Influence on Speech is Taken Into Consideration
2-1-1-1. Voice Speech Influence Level
2-2. Configuration of Information Processing Device According to Second Embodiment
2-3. Procedure of Information Processing According to Second Embodiment
2-3-1. Effects and the Like
2-4. Relationship Example Between Respiratory State and Voice Interaction Control

3. Configuration and Processing of Information Processing System

3-1. Functional Configuration Example of Information Processing System
3-2. Respiratory State Vector

3-2-1. Example of Observation Target Time in Respiratory State Vector Detection
3-2-2. Example of Observation Value in Respiratory State Vector Detection
3-2-3. Example of Normal Range by Long Span Time Observation Element
3-2-4. Example of Relationship Between Each Element of Respiratory State Vector and Respiratory State of User

3-2-4-1. Example of Relationship With Speed
3-2-4-2. Example of Relationship With Frequency
3-2-4-3. Example of Relationship With Depth

3-3. Processing Example 1

3-3-1. Processing Example in Normal Times
3-3-2. Processing Example During Exercise

3-4. Processing Example 2

3-4-1. Processing Example During Exercise
3-4-2. Processing Example After Calming Down

4. Other Embodiments

4-1. Modification

4-1-1. Example of Case Where Attention of User Is Distracted By Others
4-1-2. Application Example to System Speech
4-1-3. Modification by Personalized Learning
4-1-4. Other modifications

4-2. Configuration Example of Performing Processing of Voice Interaction Control on Client Side
4-3. Other Configuration Examples
4-4. Others

5. Effects According to Present Disclosure
6. Hardware Configuration

[1. First Embodiment]

[1-1. Overview of Information Processing According to First Embodiment of Present Disclosure]

Fig. 1 is a diagram illustrating an example of information processing according to a first embodiment of the present disclosure. The information processing according to the first embodiment of the present disclosure is implemented by an information processing system 1 (see Fig. 2) including a server device 100 (see Fig. 3) and a terminal device 10 (see Fig. 5).

The server device 100 is an information processing device that executes the information processing according to the first embodiment. In the example of Fig. 1, the server device 100 executes control (hereinafter also referred to as "voice interaction control") according to a respiratory state of a user based on respiration information. Furthermore, the example of Fig. 1 illustrates a case where the server device 100 executes processing of concatenating first speech information indicating a first speech by the user and second speech information indicating a second speech by the user after the first speech by executing the voice interaction control.

In the example of Fig. 1, an index value "$H_b$" (hereinafter also referred to as a "degree of roughness "$H_b$"") indicating a degree of roughness of respiration of the user is used as information indicating the respiratory state of the user. The degree of roughness "$H_b$" is a scalar value indicating the respiratory state of the user. Note that the information indicating the respiratory state of the user is not limited to the degree of roughness "$H_b$". For example, the information indicating the respiratory state of the user may be various types of information indicating the respiratory state of the user, such as a vector "$H_v$" (hereinafter also referred to as a "respiratory state vector "$H_v$"") indicating the respiratory state of the user, and details of this point will be described below.

Furthermore, the first speech and the second speech are relative concepts, and for example, one speech by the user becomes the first speech with respect to a speech by the user after the one speech, and becomes the second speech with respect to a speech by the user before the one speech. As described above, the first speech and the second speech are relative concepts, and the first speech becomes the second speech with respect to a speech before the first speech. The second speech is the first speech with respect to a speech after the second speech. In other words, the first speech and the second speech mentioned here are names for enabling speeches to be distinguished and expressed on the basis of a context of speeches of a certain user. Note that, hereinafter, in a case where the second speech is set as a processing target while maintaining the relationship with the first speech, a speech after the second speech may be referred to as a third speech, and a speech after the third speech may be referred to as a fourth speech.

Furthermore, Fig. 1 illustrates a case of extending a timeout time as an example of the voice interaction control, but the voice interaction control is not limited to the extension of the timeout time. For example, the voice interaction control may be various types of control related to concatenation of a plurality of speeches of the user, such as concatenation of out-of-domain (OOD) speeches and concatenation of speeches based on a co-occurrence relationship. Details of this point will be described below. Furthermore, the example of Fig. 1 illustrates a case where sensor information detected by a respiration sensor 171 (see Fig. 5) of the terminal device 10 used by the user is used as the respiration information. Note that the example of Fig. 1 illustrates a case where the respiration information indicating the respiration of the user is detected by the respiration sensor 171 using a millimeter wave radar. However, the sensor is not limited to a millimeter wave radar, and any sensor may be used as long as the sensor can detect the respiration information of the user. This point will be described below.

Hereinafter, Fig. 1 will be specifically described. Each processing illustrated in Fig. 1 may be performed by either device of the server device 100 or the terminal device 10 of the information processing system 1. The processing in which the information processing system 1 is described as a main body of the processing may be performed by any device included in the information processing system 1. Hereinafter, a case where the server device 100 performs processing of executing processing (concatenation processing) of concatenating the first speech and the second speech by a user U1 by executing the voice interaction control, using the respiration information indicating the respiration of the user U1 detected by the terminal device 10, will be described as an example. Note that, in Fig. 1, the case where the server device 100 performs the voice interaction control processing (information processing) will be described as an example, but the terminal device 10 may perform determination processing (information processing). This point will be described below.

In the example of Fig. 1, the information processing system 1 acquires the respiration information regarding the respiration of the user U1. For example, the server device 100 acquires the respiration information indicating the respiration of the user U1 from terminal device 10 used by the user U1. The server device 100 calculates the degree of roughness "$H_b$" indicating the respiratory state of user U1 using the acquired respiration information. The respiration information includes various types of information regarding the respiration of the user. The respiration information includes information of an inspiration amount of the user. The respiration information includes information such as a displacement amount, a cycle, and a rate of the respiration of the user. For example, the respiration information of the user U1 includes information such as a displacement amount, a cycle, and a rate of the respiration of the user U1.

In the example of Fig. 1, the server device 100 calculates the degree of roughness "$H_b$" on the basis of the displacement amount and the cycle of respiration. For example, the server device 100 calculates the degree of roughness "$H_b$" indicating the respiratory state of the user U1 using the following equation (1).

[Math. 1]

$$H_b = \frac{V_b}{\lambda_b} \cdots (1)$$

"$V_b$" (hereinafter also referred to as a "displacement amount "$V_b$"") in the above equation (1) indicates the displacement amount of the respiration performed in the most recent unit time T (for example, 10 seconds or the like). For example, the server device 100 calculates the displacement amount "$V_b$" using the following equation (2).

[Math. 2]

$$V_b = \sqrt{\sum_{i=1}^{n} (S_i - S_m)^2} \quad \cdots (2)$$

"n" (hereinafter also referred to as "the number of samples "n"") in the above equation (2) indicates the number of samples of the respiration sensor in the unit time T. For example, "n" indicates the number of pieces of sensor information (for example, the number of times of detection) detected by the respiration sensor 171 in the unit time T.

Furthermore, "$S_i$" (hereinafter also referred to as "observation value "$S_i$"") in the above equation (2) indicates an observation value of each sample of the respiration sensor. For example, "$S_i$" represents an observation value (for example, an inspiration amount) of the sensor information detected by the respiration sensor 171.

Furthermore, "$S_m$" (hereinafter also referred to as "average observation value "$S_m$"") in the above equation (2) indicates an average observation value of the respiration sensor of the most recent n samples. For example, "$S_m$" indicates an average observation value (for example, an average inspiration amount) of the number of samples "n" detected by the respiration sensor 171. For example, the server device 100 calculates the average observation value "$S_m$" using the following equation (3).

[Math. 3]

$$S_m = \frac{\sum_{i=1}^{n} S_i}{n} \cdots (3)$$

Furthermore, "n" and "$S_i$" in the above equation (3) are similar to "n" and "$S_i$" in the equation (2).

Furthermore, "$\lambda_b$" (hereinafter also referred to as "cycle "$\lambda_b$"") in the above equation (1) indicates the cycle of the respiration of the most recent n samples. For example, the server device 100 calculates the cycle "$\lambda_b$" from the number of intersections of the observation value "$S_i$" with the average observation value "$S_m$" and a reciprocal of the number of peaks. Note that the server device 100 may calculate the cycle "$\lambda_b$", appropriately using various methods such as an autocorrelation pitch detection and a cepstrum analysis.

The degree of roughness "$H_b$" calculated by the equation (1) becomes a higher value as the displacement amount "$V_b$" of the respiration per unit time is larger and the number of times is larger, that is, the cycle "$\lambda_b$" is shorter. For example, the degree of roughness "$H_b$" becomes a low value in a case where deep respiration is performed.

Note that the example of Fig. 1 illustrates the case of using the equation (1) but the server device 100 may calculate the degree of roughness "$H_b$" by another method. For example, the server device 100 may calculate the degree of roughness "$H_b$" on the basis of a respiration rate. For example, the server device 100 may calculate the degree of roughness "$H_b$" by root mean square (RMS) of the respiration rate. In this case, the server device 100 may calculate the degree of roughness "$H_b$" indicating the respiratory state of the user U1 by using the following equation (4).

[Math. 4]

$$H_b = \sqrt{\frac{\sum_{i=1}^{n} \Delta S_i^{\,2}}{n}} \cdots (4)$$

"n" in the above equation (4) is similar to "n" in the equation (2). "$\Delta S_i$" (hereinafter also referred to as a "difference value "$\Delta S_i$"") in the above equation (4) indicates a difference value from an observation value one sample before of the respiration sensor. For example, the difference value "$\Delta S_i$" indicates a difference value from an observation value one sample before among the observation values of the sensor information detected by the respiration sensor 171. The server device 100 calculates the difference value "$\Delta S_i$" using following equation (5).

[Math. 5]

$$\Delta S_i = S_i - S_{i-1} \cdots (5)$$

"$S_i$" in the above equation (5) is similar to "$S_i$" in the equation (2). "$S_{i-1}$" in the above equation (5) indicates, for example, the observation value one sample before.

Furthermore, the server device 100 may calculate the degree of roughness "$H_b$" by machine learning. In this case, the server device 100 may perform machine learning based on a plurality of pieces of observation data of the respiration sensor in which the degree of roughness of the respiration is labeled in stages to obtain (calculate) the degree of roughness "$H_b$" by a regression analysis.

As described above, the server device 100 detects (calculates) the degree of roughness of the respiration indicating the respiratory state of the user, using a displacement value of a respiration amount observed by the respiration sensor 171 in the voice interaction system. For example, the server device 100 calculates the displacement amount, the cycle, the rate, and the like of the respiration per unit time, and calculates the degree of roughness "$H_b$" of the respiration from these values. Note that the above is an example, and the server device 100 may calculate the degree of roughness "$H_b$", appropriately using various types of information.

In the example of Fig. 1, the server device 100 performs the processing of the voice interaction control, using the degree of roughness "$H_b$" calculated by the equation (1). The server device 100 performs a determination using the degree of roughness "$H_b$" of the respiration indicating the respiratory state. In a case where the degree of roughness "$H_b$" satisfies a condition, the server device 100 executes the voice interaction control. The degree of roughness "$H_b$" is a scalar value having a larger value as the respiration is rougher, and has a higher possibility that it is difficult to make a speech by voice as desired due to getting out of breath as the degree of roughness "$H_b$" is larger. There is a higher possibility that it is difficult to start the speech at timing at which the speech should be made or the speech is interrupted halfway as the degree of roughness "$H_b$" is larger. Therefore, the server device 100 uses a threshold (hereinafter also referred to as "specified threshold $H_{th}$") of the degree of roughness of the respiration. In a case where a comparison result between the degree of roughness "$H_b$" and the threshold (specified threshold "$H_{th}$") satisfies a condition, the server device 100 executes the voice interaction control. Here, the degree of roughness "$H_b$" is a scalar value having a larger value as the respiration is rougher. Therefore, the server device 100 executes the voice interaction control in the case where the degree of roughness "$H_b$" becomes equal to or larger than the specified threshold "$H_{th}$". Note that the server device 100 may execute the voice interaction control in a case where the degree of roughness "$H_b$" becomes larger than the specified threshold "$H_{th}$". The example of Fig. 1 will be specifically described below on the premise of the above-described points.

The example of Fig. 1 illustrates processing in a case of not executing the voice interaction control, and then illustrates processing in a case of executing the voice interaction control. First, as illustrated in state information ST1, a case where the respiratory state of the user U1 is a normal state is illustrated at time t10. For example, the server device 100 acquires the respiration information of the user U1 at time t10, and calculates the degree of roughness "$H_b$", using the respiration information and the equation (1). Then, the server device 100 compares the calculated degree of roughness

"$H_b$" with the specified threshold "$H_{th}$" Since the degree of roughness "$H_b$" is smaller than the specified threshold "$H_{th}$", the server device 100 determines that the respiratory state of the user U1 at time t10 is normal.

Note that the example of Fig. 1 illustrates a case where the respiratory state of the user U1 is determined to be normal during a period from time t10 to time t12. Therefore, a case is illustrated in which the voice interaction control is not executed during the period from time t10 to time t12, and extension of a silent timeout time "$t_r$" in voice recognition speech end determination is not performed, which is an example of the timeout time. As described above, hereinafter, "$t_r$" indicates the silent timeout time of the voice recognition speech end determination. Hereinafter, the silent timeout time "$t_r$" in the voice recognition speech end determination may be referred to as a "voice recognition timeout time "$t_r$"" or a "silent timeout time "$t_r$"", or the like. The example of Fig. 1 illustrates a case where the length of the voice recognition timeout time "$t_r$" that is not extended is a time length TL1. Furthermore, as the timeout time, there is a silent timeout time "$t_s$" of a voice interaction session end, and the like, which will be described below. Thus, hereinafter, "$t_s$" indicates the silent timeout time of the voice interaction session end. Hereinafter, the silent timeout time "$t_s$" of the voice interaction session end may be referred to as a "session timeout time "$t_s$"" or a "silent timeout time "$t_s$"", or the like.

The user U1 makes a speech UT1 "Play music" at time t11. After the voice recognition timeout time "$t_r$" has elapsed, processing such as voice recognition is executed. For example, the information processing system 1 generates information of intent (Intent) of the speech UT1 of the user and attribute information (Entity) of the speech UT1 from the speech UT1 of the user by natural language understanding (NLU). Note that the information processing system 1 may use any technique regarding natural language understanding as long as the information regarding the intent (Intent) and the attribute information (Entity) can be acquired from the speech of the user. In the example of Fig. 1, since the speech UT1 of "Play music" is a speech by which the intent of the user U1 is interpretable, the information processing system 1 executes the function corresponding to the speech UT1. For example, the information processing system 1 causes the terminal device 10 of the user U1 to play music.

Next, as illustrated in state information ST2, a case where the respiratory state of the user U1 is a state other than normal (hereinafter also referred to as "non-normal") at time t12 is illustrated. For example, the server device 100 acquires the respiration information of the user U1 at time t12, and calculates the degree of roughness "$H_b$", using the respiration information and the equation (1). Then, the server device 100 compares the calculated degree of roughness "$H_b$" with the specified threshold "$H_{th}$" Since the degree of roughness "$H_b$" is equal to or larger than the specified threshold "$H_{th}$", the server device 100 determines that the respiratory state of the user U1 at time t12 is non-normal. That is, a case where the respiratory state of the user U1 changes from the normal state to the non-normal state at time t12 is illustrated.

Note that the example of Fig. 1 illustrates a case where the respiratory state of the user U1 is determined to be non-normal at and after time t12. Specifically, a case is illustrated in which the user U1 is exercising at and after time t12 and is in an out-of-breath state, and the respiratory state is determined to be non-normal. Therefore, the voice interaction control is executed at and after the time t12, and the voice recognition timeout time "$t_r$" is extended. For example, the server device 100 executes the voice interaction control and extends the voice recognition timeout time "$t_r$". In the example of Fig. 1, the server device 100 extends the length of the voice recognition timeout time "$t_r$" from the time length TL1 to a time length TL2. For example, the server device 100 may extend the length of the voice recognition timeout time "$t_r$" by a predetermined length or may vary the extended time in consideration of the influence on the speech. For example, the server device 100 may determine the extended time using the voice speech influence level "$E_u$" indicating the degree of influence on the speech. Note that the extension of the time using the voice speech influence level "$E_u$" will be described below.

In Fig. 1, it is assumed that the information processing system 1 is performing a system output of "A message has arrived from Mr. ∞. Shall I read out?" immediately before time t13. In response to the system output, the user U1 makes a speech UT11 "read" at time t13. Then, the user U1 makes a speech UT12 of "out" at time t14. In this case, the speech UT11 of "read" corresponds to the first speech, and the speech UT12 of "out" corresponds to the second speech.

Here, the time length between the time at which the speech UT11 of "read" ends and the time at which the speech UT12 of "out" starts (time t14) is longer than the time length TL1 and shorter than the time length TL2. Therefore, in the case where the voice recognition timeout time "$t_r$" is not extended and the voice recognition timeout time "$t_r$" is the time length TL1, the voice recognition timeout time "$t_r$" ends before the speech UT12 of "out". In this case, the voice recognition processing is performed only with the speech UT11 of "read". In this case, since the speech UT11 of "read" is not a speech by which the intent of the user U1 is interpretable, the information processing system 1 regards the speech UT11 as a speech by which the intent is uninterpretable (OOD speech). As described above, in the case where the voice recognition timeout time "$t_r$" is not extended, the information processing system 1 cannot appropriately interpret the speech of the user U1.

On the other hand, in the example of Fig. 1, the voice recognition timeout time "$t_r$" is extended, and the voice recognition timeout time "$t_r$" is the time length TL2. Therefore, since the speech UT12 of "out" has been spoken within the voice recognition timeout time "$t_r$" since the time when the speech UT11 of "read" has ended, the server device 100 concatenates the speech UT11 and the speech UT12. For example, the server device 100 concatenates the speech UT11 of "read" and the speech UT12 of "out" and performs the processing such as the voice recognition with a speech UT13 of "read out".

In this case, since the speech UT13 "read out" is a speech by which the intent of the user U1 is interpretable, the information processing system 1 executes a function corresponding to the speech UT13. For example, the information processing system 1 causes the terminal device 10 of the user U1 to output the message from Mr. oo by voice. As described above, the information processing system 1 appropriately enables a plurality of speeches of the user to be concatenated by executing the voice interaction control for extending the timeout time.

[1-1-1. Background and Effects, and the Like]

For example, when the voice interaction system is used, it is difficult for the user to make a speech as desired due to conflict with respiration in a state where the user is out of breath during or immediately after exercise. In such a situation, the user may not be able to start the speech at timing at which the user should make the speech, or the speech may be interrupted in the middle, so that the speech may not be conveyed to the system as intended. There are many use cases where it is not possible to use a hand during exercise and it is desirable to perform an operation by voice, and a technique that enables a device operation by voice interaction even during exercise without deteriorating response performance in normal times is desired.

Therefore, in the example of Fig. 1, the information processing system 1 executes the voice interaction control for extending the timeout time on the basis of the roughness of the respiration of the user. Thereby, the information processing system 1 appropriately enables a plurality of speeches of the user to be concatenated by executing the voice interaction control for extending the timeout time on the basis of roughness of respiration.

Furthermore, as examples of the respiratory state in which the voice speech becomes difficult due to out of breath by exercise include a case where the respiration becomes shallow due to tension, stress, concentration, or the like, a case of arrested respiration or hyperventilation, a case where the frequency of respiration decreases due to drowsiness, a case of respiratory physiological phenomena such as cough and sneeze, and a case where short-term respiration stops (becomes shallow) due to surprise or strain. Even in such a case, the information processing system 1 appropriately enables a plurality of speeches of the user to be concatenated by executing the voice interaction control. Details of this point will be described below.

Furthermore, the user speech end detection and the interaction session end determination in the voice interaction system is performed by timeout processing by a lapse of a certain time of a silence period in which the user does not make a speech. When the speech is delayed or interrupted in a situation where the user is out of breath, the system cannot accept the speech due to the timeout processing. Meanwhile, when the timeout time is extended, the reception time at the time of out of breath increases but the system response speed in normal times decreases. Therefore, a technique for solving this tradeoff is required.

Therefore, in the example of Fig. 1, the information processing system 1 executes the voice interaction control for extending the timeout time on the basis of the roughness of the respiration of the user. Thereby, the information processing system 1 can suppress the extension of the timeout time in a case where the user is in the normal state, that is, there is no need to extend the timeout time. Thereby, the information processing system 1 can solve the tradeoff in which the reception time at the time of out of breath increases but the system response speed in normal times decreases when the timeout time is extended. That is, the information processing system 1 can appropriately extend the timeout time by extending the timeout time only in a case where there is need to extend the timeout time is needed.

Furthermore, the information processing system 1 maintains natural system response performance of voice interaction during normal times, and enables the user to perform voice operation without forced speech while holding off respiration even in the situation where the user is out of breath, such as during exercise. The information processing system 1 is expected to produce an effect particularly with a wearable device or the like that is assumed to be operated by voice without using a hand while exercising. The information processing system 1 introduces the above-described voice interaction control into the voice interaction control at the time of notification from the system to the user, so that the voice interaction started due to the system is performed in consideration of the respiratory state of the user at that time, which is highly effective.

[1-1-2. Sensor Example]

In the example of Fig. 1, the case where the millimeter wave radar is used as an example of the respiration sensor 171 that detects the respiration information indicating the respiration of the user has been described, but the respiration sensor 171 is not limited to the millimeter wave radar and may be any sensor as long as the sensor can detect the respiration information of the user. This point will be described below by way of example.

[1-1-2-1. Contact Type]

In the example of Fig. 1, the detection of the respiration information using the respiration sensor 171 using the millimeter wave radar, that is, a non-contact type sensor has been described as an example, but the sensor used for the detection (acquisition) of the respiration information is not limited to the non-contact type, and may be a contact type. Hereinafter, an example of a contact-type sensor will be described.
The respiration sensor 171 may be a wearable sensor. As the respiration sensor 171, a contact-type sensor of various modes such as a band type, a jacket type, and a mask type may be used.
In a case where a band-type sensor is used as the respiration sensor 171, the information processing system 1 acquires the displacement amount of the respiration from expansion and contraction of a band wound around a chest or abdomen of the user. In a case where a jacket-type sensor is used as the respiration sensor 171, the information processing system 1 embeds a band in a jacket worn by the user. Furthermore, it is possible to improve the accuracy of respiration detection by providing sensors at a plurality of positions (directions).
Furthermore, in a case where an acceleration sensor is used as the respiration sensor 171, the information processing system 1 may observe movement of the chest by an acceleration sensor mounted on a wearable device such as a neck hanging device or a smartphone worn on an upper body of the user and estimate the respiration amount. Furthermore, in a case where a mask-type sensor is used as the respiration sensor 171, the information processing system 1 detects the speeds of expiration and inspiration by an air volume sensor or an atmospheric pressure sensor mounted on the mask, and estimates the depth and the cycle from the accumulated displacement amount.
Furthermore, a virtual reality (VR) headset that covers a mouth of the user may be used as the respiration sensor 171. In this case, a disadvantage in a real world can be ignored because VR is used by the respiration sensor 171 that performs respiration sensing with a noise cut-off microphone. Furthermore, in a case where a proximity microphone is used as the respiration sensor 171, the information processing system 1 recognizes sound of breath discharged by the proximity microphone, recognizes a temporal change amount of the expiration, and estimates the depth and speed of the respiration. For example, the information processing system 1 recognizes the sound of noise generated when the microphone is hit by the breath discharged using the proximity microphone, recognizes the temporal change amount of the expiration, and estimates the depth and speed of the respiration.

[1-1-2-2. Non-contact Type]

Furthermore, the non-contact-type sensor is not limited to the millimeter wave radar, and various non-contact-type sensors may be used as the respiration sensor 171. Hereinafter, examples of non-contact-type sensors other than the millimeter wave radar will be described.
As the respiration sensor 171, a method of image sensing, a method of respiration detection from temperature around the nose, a proximity sensor, or a radar other than the millimeter wave radar may be used.
In a case where image sensing is used for the respiration sensor 171, the information processing system 1 recognizes the temporal change amounts of expiration and inspiration at different temperatures with a thermo camera, and estimates the depth, cycle, and speed of the respiration. Furthermore, the information processing system 1 may perform image sensing on the breath that becomes white in cold weather, recognize the temporal change amount of the expiration, and estimate the depth, cycle, and speed of the respiration.
For example, regarding the method of detecting the respiration from the temperature around the nose, the following disclosure is given.

- Respiration Sensing Method without Botheration

<https://shingi.jst.go.jp/past_abst/abst/p/09/919/t ama2.pdf>
For example, regarding the respiration detection using the proximity sensor, the following disclosure is given.

- Capacitive Film Proximity Sensor to Observe Movement and Respiration of Person

<https://www.aist.go.jp/aist_j/press_release/pr2016 /pr20160125/pr20160125.html>
For example, regarding the respiration detection using a radar, the following disclosure is given.

- Heart rate/respiration Detection Sensor
  "GZS -350 series"

<https://www.ipros.jp/product/detail/2000348329/>
Furthermore, in the case that the millimeter wave radar is used as the respiration sensor 171 as illustrated in Fig. 1, the information processing system 1 detects the movement of the chest of the user using a phase difference of a reception signal of the millimeter wave radar, and estimates the respiration amount. For example, the terminal device 10 generates the respiration information of the user by detecting the movement of the chest of the user by the phase difference of the reception signal of the millimeter wave radar using the sensor information detected by the respiration sensor 171 and estimating the respiration amount. Then, the terminal device 10 transmits the generated respiration information of the user to the server device 100.

Furthermore, the server device 100 may generate the respiration information of the user. In this case, the terminal device 10 transmits the sensor information detected by the respiration sensor 171 to the server device 100. Then, the server device 100 that has received the sensor information may generate the respiration information of the user by detecting the movement of the chest of the user by the phase difference of the reception signal of the millimeter wave radar using the received sensor information, and estimating he respiration amount may be estimated.

Note that the above-described sensor is merely an example of a sensor used for acquiring the respiration information, and any sensor may be used as long as the sensor can acquire the respiration information. The information processing system 1 may detect the respiration information using any sensor as long as the sensor can detect the respiration information indicating the respiration of the user.

The sensor unit 17 of the terminal device 10 includes at least one of the above-described sensors, and detects the respiration information by the sensor. Note that the information processing system 1 may generate the respiration information using the sensor information detected by the sensor of the sensor unit 17. For example, the terminal device 10 or the server device 100 may generate the respiration information using the sensor information (point cloud data) detected by respiration sensor 171 (millimeter wave radar). In this case, the terminal device 10 or the server device 100 may generate the respiration information from the sensor information (point cloud data) detected by the respiration sensor 171 (millimeter wave radar) by appropriately using various techniques.

[1-1-3. Processing Example in which Influence on Speech is Taken Into Consideration]

As described above, the information processing system 1 may vary the extended time in consideration of the influence on the speech. As described above, the information processing system 1 may perform the processing of the voice interaction control using the degree of influence on the speech. This point will be described below.

The information processing system 1 performs voice interaction control when the detected respiratory state becomes a state that affects a speech. For example, when the degree of roughness "$H_b$" of the respiration becomes equal to or larger than the specified threshold "$H_{th}$", the information processing system 1 determines that the respiratory state of the user is the state that affects a speech and performs the voice interaction control. Furthermore, when the respiratory state vector "$H_v$" to be described below falls outside a normal range "$R_N$" to be described below, the information processing system 1 may determine that the respiratory state of the user is the state that affects a speech and perform the voice interaction control. For example, when the degree of roughness "$H_b$" of the respiration becomes equal to or larger than the specified threshold "$H_{th}$", the information processing system 1 performs the voice interaction control.

For example, the information processing system 1 temporarily interrupts a session of the voice interaction (voice interaction session) when the semantic understanding result of the user speech is uninterpretable, and waits until the degree of roughness "$H_b$" becomes equal to or less than (or becomes less than) the specified threshold "$H_{th}$" and then resumes the voice interaction session. As described above, in the case where the semantic understanding processing result of the user speech is OOD (uninterpretable), the information processing system 1 interrupts the interaction session, waits until the respiratory state becomes a state in which a normal voice speech can be made, and then resumes the interaction session.

For example, the information processing system 1 saves the state of the voice interaction session and temporarily interrupts the voice interaction session in the case where Intent from NLU is OOD in the state where the degree of roughness "$H_b$" is equal to or larger than the specified threshold "$H_{th}$". The information processing system 1 resumes the voice interaction session from the saved state when detecting that the degree of roughness "$H_b$" becomes smaller than the specified threshold value "$H_{th}$". Details of a control flow in which the information processing system 1 interrupts and resumes the OOD speech during exercise and an interaction session after calming down after a while will be described with reference to Figs. 23A and 23B.

For example, the information processing system 1 extends the silent timeout time "$t_r$" or "$t_s$" in the voice recognition speech end determination or the voice interaction session end determination as the degree of roughness "$H_b$" of the respiration becomes larger. The information processing system 1 makes the extended time length longer as the degree of roughness "$H_b$" becomes larger.

[1-1-3-1. Voice Speech Influence Level]

For example, the information processing system 1 may determine the extended time using the voice speech

influence level "$E_u$" indicating the degree of influence on the speech. For example, the information processing system 1 calculates the voice speech influence level "$E_u$" using the degree of roughness "$H_b$" of the respiration.

For example, the information processing system 1 calculates the voice speech influence level "$E_u$" using the following equation (6). For example, the information processing system 1 determines that the user is in a respiratory state that affects the speech when the degree of roughness "$H_b$" becomes equal to or larger than the specified threshold "$H_{th}$", and calculates the voice speech influence level "$E_u$" using the equation (6).

[Math. 6]

$$E_u = H_b \quad \cdots(6)$$

In the case of the above equation (6), the value of the degree of roughness "$H_b$" is used as the value of the voice speech influence level "$E_u$". Note that the calculation of the voice speech influence level "$E_u$" is not limited to the use of the equation (6), and for example, the information processing system 1 may calculate the voice speech influence level "$E_u$" using the following equation (7).

[Math. 7]

$$E_u = H_b - H_{th} \quad \cdots(7)$$

In the case of the above equation (7), the difference between the degree of roughness "$H_b$" and the specified threshold "$H_{th}$" is used as the voice speech influence level "$E_u$". Note that the equations (6) and (7) are merely examples, and the information processing system 1 may calculate the voice speech influence level "$E_u$" using various equations.

Then, the information processing system 1 determines the extended time length using the calculated voice speech influence level "$E_u$". For example, the information processing system 1 extends the silent timeout times "$t_r$" and "$t_s$" by increasing the extended time as the voice speech influence level "$E_u$" is larger. For example, the information processing system 1 may use the value of the voice speech influence level "$E_u$" as the extended time length, or may use a value obtained by multiplying the voice speech influence level "$E_u$" by a predetermined coefficient as the extended time length. For example, a first value obtained by multiplying the voice speech influence level "$E_u$" by a first coefficient may be used as the time length for extending the silent timeout time "$t_r$". For example, a second value obtained by multiplying the voice speech influence level "$E_u$" by a second coefficient may be used as the time length for extending the silent timeout time "$t_s$".

Furthermore, the information processing system 1 may use a value output by a predetermined function having the voice speech influence level "$E_u$" as an input (variable) as the extended time length. For example, an output value of a first function having the voice speech influence level "$E_u$" as an input (variable) may be used as the time length for extending the silent timeout time "$t_r$". For example, an output value of a second function having the voice speech influence level "$E_u$" as an input (variable) as the time length for extending the silent timeout time "$t_s$". Note that the above is an example, and the information processing system 1 may determine the length for extending each timeout time by appropriately using various types of information.

As described above, the information processing system 1 extends the silent timeout time "$t_r$" of the voice recognition speech end determination and the silent timeout time "$t_s$" of the voice interaction session end according to the respiratory state. The information processing system 1 extends the silent timeout times "$t_r$" and "$t_s$" longer as the value of the voice speech influence level "$E_u$" becomes larger. For example, the information processing system 1 extends the silent timeout times "$t_r$" and "$t_s$" by the time proportional to the voice speech influence level "$E_u$". Details of the control flow of the silent timeout times "$t_r$" and "$t_s$" in normal times and during exercise will be described with reference to Figs. 22A and 22B.

[1-1-4. Voice Interaction Control Example]

As described above, the voice interaction control is not limited to the extension of the timeout time. Hereinafter, the voice interaction control other than the extension of the timeout time will be described. For example, when the degree of roughness "$H_b$" of the respiration becomes equal to or larger than the specified threshold "$H_{th}$", the information processing system 1 determines that the respiratory state of the user is the state that affects a speech and performs the voice interaction control. Furthermore, when the respiratory state vector "$H_v$" to be described below falls outside a normal range "$R_N$" to be described below, the information processing system 1 may determine that the respiratory state of the user is the state that affects a speech and perform the voice interaction control. Furthermore, the information processing system 1 does not perform the voice interaction control in the case where the user’s respiration is normal.

[1-1-4-1. Concatenation of OOD Speeches]

For example, the voice interaction control may be concatenation of OOD speeches. In this case, the information processing system 1 executes concatenation of OOD speeches as the voice interaction control.
For example, in a case where the semantic understanding processing result of the user speech is OOD (uninterpretable) and the semantic understanding processing result of the previous user speech is also OOD, the information processing system 1 may concatenate user speech text of the previous speech (first speech) and the current speech (second speech), input the concatenated speech text (concatenated speech text) to NLU to obtain Intent and Entity.
In the example of Fig. 1, Intent of the previous speech UT11 of "read" of the user U1 is OOD, and Intent of the current speech UT12 of "out" is also OOD. Therefore, the information processing system 1 can obtain Intent "ReadOut" by inputting "read out" (speech UT13) obtained by concatenating the two speeches to NLU as the concatenated speech text.
The server device 100 executes the above-described concatenation processing of concatenation of OOD speeches. The server device 100 executes the processing of concatenating the first speech and the second speech by executing the voice interaction control for concatenating the first speech and the second speech according to the semantic understanding processing result of the first speech in a case where the semantic understanding processing result of the second speech is uninterpretable. The server device 100 executes the processing of concatenating the first speech and the second speech by executing the voice interaction control for concatenating the first speech with an uninterpretable semantic understanding processing result and the second speech with an uninterpretable semantic understanding processing result. As a result, the server device 100 can generate the interpretable speech UT13 of "read out" by concatenating the uninterpretable speech UT11 and the uninterpretable speech UT12, as described above.
Note that the information processing system 1 may concatenate all of the first OOD speech to the current OOD speech in a case where three or more user speeches become OOD in succession. Then, the information processing system 1 may obtain Intent and Entity by inputting the concatenated speech as concatenated speech text to NLU. For example, the server device 100 concatenates the first speech with an uninterpretable semantic understanding processing result and the second speech with an uninterpretable semantic understanding processing result. Then, the server device 100 acquires the third speech information indicating the third speech by the user after the second speech, and executes processing of concatenating the second speech and the third speech in the case where the semantic understanding processing result of the third speech is uninterpretable. Thereby, the server device 100 can generate information of a speech (concatenated speech) in which the first speech, the second speech, and the third speech are concatenated in this order.

[1-1-4-2. Speech Concatenation Based on Co-occurrence Relationship]

For example, the voice interaction control may be concatenation of speeches based on a co-occurrence relationship. In this case, the information processing system 1 executes concatenation of speeches based on the co-occurrence relationship as the voice interaction control.
In a case where the first word or clause (hereinafter also referred to as "component") of the user speech text and the last word (or segment) of the previous user speech text are in the co-occurrence relationship, the information processing system 1 may concatenate the previous and current user speech texts and input the concatenated speech text (concatenated speech text) to NLU to obtain Intent and Entity.
As an example of determination as to whether or not there is a co-occurrence relationship, the information processing system 1 calculates a probability that the first word (or clause) of the current speech text will appear next to the last word (or segment) of the previous user speech text on a large-scale speech corpus. Then, the information processing system 1 determines that there is a co-occurrence relationship in a case where the appearance probability is equal to or larger than a specified value (for example, a value such as 0.1 or 30%) or more. Furthermore, the information processing system 1 determines that there is no co-occurrence relationship in a case where the appearance probability is smaller than the specified value.
Furthermore, as a co-occurrence relationship determination example using personalization, the information processing system 1 calculates a probability that the first word (or clause) of the current speech text will appear next to the last word (or segment) of the previous user speech text in the past user speech text (history). Then, the information processing system 1 determines that there is the co-occurrence relationship in the case where the appearance probability is equal to or larger than the specified value. Furthermore, the information processing system 1 determines that there is no co-occurrence relationship in a case where the appearance probability is smaller than the specified value.
In the example of Fig. 1, "read" that is the last word of the previous speech UT11 and "out" that is the first word of the current speech UT12 are in the co-occurrence relationship. For example, a probability that "out" appears next to "read" on the large-scale speech corpus or a user speech text history is equal to or larger than a specified value. Therefore, the information processing system 1 can obtain Intent "ReadOut" by inputting "read out" (speech UT13) obtained by concatenating the two speeches UT11 and UT12 to NLU as the concatenated speech text.

The server device 100 executes the above-described concatenation processing of speeches based on the co-occurrence relationship. The server device 100 executes the processing of concatenating the first speech and the second speech by executing the voice interaction control for concatenating the first speech and the second speech in a case where a first component (word or clause) that is spoken last in the first speech and a second component (word or clause) that is spoken first in the second speech satisfy a condition regarding co-occurrence. The server device 100 executes the processing of concatenating the first speech and the second speech by executing the voice interaction control for concatenating the first speech and the second speech in a case where a probability that the second component appears next to the first component is equal to or larger than a specified value. As a result, the server device 100 can generate the speech UT13 of "read out" by concatenating the speech UT11 and the speech UT12, as described above.

Note that the information processing system 1 may concatenate all of the first speech determined to be in the co-occurrence relationship to the current speech in a case where three or more user speeches are in the co-occurrence relationship in succession. For example, in a case where the appearance probability of the last word of the previous speech and the first word of the next speech becomes equal to or larger than the specified value, the information processing system 1 may concatenate all the speeches from the first speech determined to be in the co-occurrence relationship to the current speech. Then, the information processing system 1 may obtain Intent and Entity by inputting the concatenated speech as concatenated speech text to NLU. For example, the server device 100 concatenates the first speech and the second speech that satisfy the co-occurrence condition. Then, the server device 100 acquires the third speech information indicating the third speech by the user after the second speech, and executes the processing of concatenating the second speech and the third speech in a case where a component that is spoken last in the second speech and a component that is spoken first in the third speech satisfy a condition regarding co-occurrence. Thereby, the server device 100 can generate information of a speech (concatenated speech) in which the first speech, the second speech, and the third speech are concatenated in this order.

Note that the above-described each processing is an example of the voice interaction control, and the information processing system 1 may execute any control as the voice interaction control as long as the control enables appropriate concatenation.

[1-2. Configuration of Information Processing System According to First Embodiment]

The information processing system 1 illustrated in Fig. 2 will be described. As illustrated in Fig. 2, the information processing system 1 includes the terminal device 10, the server device 100, and a plurality of devices 50-1, 50-2, and 50-3. Hereinafter, the devices 50-1 to 50-3 and the like may be referred to as device(s) 50 in a case where the devices are not distinguished from each other. Note that, although three devices 50-1, 50-2, and 50-3 are illustrated in Fig. 2, the information processing system 1 may include more than three (for example, 20, or 100 or more) devices 50. The terminal device 10, the server device 100, and the device 50 are communicably connected in a wired or wireless manner via a predetermined communication network (network N). Fig. 2 is a diagram illustrating a configuration example of the information processing system according to the first embodiment. Note that the information processing system 1 illustrated in Fig. 2 may include a plurality of the terminal devices 10 and a plurality of the server devices 100.

The server device 100 is a computer that executes processing of concatenating the first speech by the user and the second speech by the user after the first speech by executing the voice interaction control according to the respiratory state of the user based on the respiration information regarding the respiration of the user. The server device 100 is an information processing device that extends the timeout time as the voice interaction control according to the respiratory state of the user based on the respiration information regarding the respiration of the user. The server device 100 executes the concatenation processing of concatenating the first speech by the user and the second speech by the user after the first speech. Furthermore, the server device 100 is a computer that transmits various types of information to the terminal device 10. The server device 100 is a server device used to provide services related to various functions.

Furthermore, the server device 100 may include software modules of voice signal processing, voice recognition, speech semantic analysis, interaction control, and the like. The server device 100 may have a function of the voice recognition. For example, the server device 100 may have functions of natural language understanding (NLU) and automatic speech recognition (ASR). For example, the server device 100 may estimate information regarding intent (intention) and entity (target) of the user from input information by the speech of the user. The server device 100 functions as a voice recognition server having the functions of natural language understanding and automatic speech recognition.

The terminal device 10 is a terminal device that detects the respiration information indicating the respiration of the user by a sensor. For example, the terminal device 10 detects the respiration information indicating the respiration of the user by the respiration sensor 171. The terminal device 10 is an information processing device that transmits the respiration information of the user to a server device such as the server device 100. Furthermore, the terminal device 10 may have a function of voice recognition such as the natural language understanding and the automatic speech recognition. For example, the terminal device 10 may estimate information regarding intent (intention) and entity (target) of the user from the input information by the speech of the user.

The terminal device 10 is a device used by the user. The terminal device 10 accepts an input by the user. The terminal device 10 accepts a voice input by the speech of the user or an input by an operation of the user. The terminal device 10 displays information according to the input of the user. The terminal device 10 may be any device as long as the device can implement the processing in the embodiment. The terminal device 10 may be any device as long as the device has a function to detect the respiration information of the user and transmit the respiration information to the server device 100. For example, the terminal device 10 may be a device such as a smartphone, a smart speaker, a television, a tablet terminal, a notebook personal computer (PC), a desktop PC, a mobile phone, or a personal digital assistant (PDA). The terminal device 10 may be a wearable terminal (wearable device) or the like worn by the user. For example, the terminal device 10 may be a wristwatch-type terminal, a glasses-type terminal, or the like.

The devices 50 are various devices used by the user. The devices 50 are various devices such as Internet of Things (IoT) devices. The devices 50 are IoT devices such as home appliances. For example, the device 50 may be any device as long as the device has a communication function, and can communicate with the server device 100 and the terminal device 10 and perform processing according to an operation request from the server device 100 and the terminal device 10. For example, the device 50 may be a so-called home appliance such as a lighting fixture (lighting device), a music player, a television, a radio, an air conditioner (air conditioning device), a washing machine, or a refrigerator, or may be a product installed in a house such as a ventilator or floor heating.

Furthermore, the device 50 may be, for example, an information processing device such as a smartphone, a tablet terminal, a notebook PC, a desktop PC, a mobile phone, or a PDA. Furthermore, for example, the device 50 may be any device as long as the device can implement the processing in the embodiment. Note that the device 50 may include the terminal device 10. That is, the device to be operated using the respiration of the user may be the terminal device 10.

[1-3. Configuration of Information Processing Device According to First Embodiment]

Next, a configuration of the server device 100, which is an example of an information processing device that executes information processing according to the first embodiment, will be described. Fig. 3 is a diagram illustrating a configuration example of the server device according to the first embodiment of the present disclosure.

As illustrated in Fig. 3, the server device 100 includes a communication unit 110, a storage unit 120, and a control unit 130. Note that the server device 100 may include an input unit (for example, a keyboard, a mouse, or the like) that accepts various operations from an administrator or the like of the server device 100, and a display unit (for example, a liquid crystal display or the like) for displaying various types of information.

The communication unit 110 is implemented by, for example, a network interface card (NIC) or the like. Then, the communication unit 110 is connected to the network N (see Fig. 2) in a wired or wireless manner, and transmits and receives information to and from another information processing device such as the terminal device 10. Furthermore, the communication unit 110 may transmit and receive information to and from a user terminal (not illustrated) used by the user.

The storage unit 120 is implemented by, for example, a semiconductor memory element such as a random access memory (RAM) or a flash memory, or a storage device such as a hard disk or an optical disk. As illustrated in Fig. 3, the storage unit 120 according to the first embodiment includes a respiration information storage unit 121, a user information storage unit 122, a threshold information storage unit 123, and a functional information storage unit 124.

The storage unit 120 stores various types of information in addition to the above information. The storage unit 120 stores information of a voice recognition application (program) that implements the voice recognition function. For example, the server device 100 can execute the voice recognition by activating the voice recognition application (also simply referred to as "voice recognition"). The storage unit 120 stores various types of information to be used for the voice recognition. The storage unit 120 stores information of a dictionary (voice recognition dictionary) to be used for a voice recognition dictionary. The storage unit 120 stores information of a plurality of voice recognition dictionaries. The storage unit 120 stores information such as a long sentence voice recognition dictionary (long sentence dictionary), a middle sentence voice recognition dictionary (middle sentence dictionary), and a short sentence voice recognition dictionary (word/phrase dictionary).

The respiration information storage unit 121 according to the first exemplary embodiment stores various types of information regarding the respiration of the user. The respiration information storage unit 121 stores various types of information of the respiration information of each user in association with identification information (user ID) of each user. The respiration information storage unit 121 stores the respiration information indicating the respiration of the user. The respiration information storage unit 121 stores the respiration information including the displacement amount of the respiration of the user. The respiration information storage unit 121 stores the respiration information including the cycle of the respiration of the user. The respiration information storage unit 121 stores the respiration information including the rate of the respiration of the user. The respiration information storage unit 121 stores the respiration information including the inspiration amount of the user.

Note that the respiration information storage unit 121 may store various types of information according to a purpose, in addition to the above-described information. For example, the respiration information storage unit 121 may store various types of information necessary for generating graphs GR1 to GR6. For example, the respiration information storage unit 121 may store various types of information illustrated in the graphs GR1 to GR6.

The user information storage unit 122 according to the first embodiment stores various types of information regarding the user. For example, the user information storage unit 122 stores various types of information such as attribute information of each user.

The user information storage unit 122 stores information regarding the user such as the user ID, an age, a gender, and a residential place. For example, the user information storage unit 122 stores information regarding the user U1 such as the age, gender, and residential place of the user U1 in association with the user ID "U1" for identifying the user U1.

Furthermore, the user information storage unit 122 stores information for identifying a device (a television, a smartphone, or the like) used by each user in association with the user. The user information storage unit 122 stores information (terminal ID or the like) for identifying the terminal device 10 used by each user in association with the user.

Note that the user information storage unit 122 may store various types of information according to a purpose, in addition to the above-described information. For example, the user information storage unit 122 may store not only age and gender but also other demographic attribute information and psychographic attribute information. For example, the user information storage unit 122 may store information such as a name, a home, a work place, an interest, a family configuration, a revenue, and a lifestyle.

The threshold information storage unit 123 according to the first embodiment stores various types of information regarding a threshold. The threshold information storage unit 123 stores various types of information regarding a threshold to be used for determining whether or not to execute the voice interaction control. Fig. 4 is a diagram illustrating an example of the threshold information storage unit according to the first embodiment. The threshold information storage unit 123 illustrated in Fig. 4 includes items such as "threshold ID", "use", "threshold name", and "value".

The "threshold ID" indicates identification information for identifying the threshold. The "use" indicates a use of the threshold. The "threshold name" indicates a name (character string) of a threshold (variable) used as the threshold identified by the corresponding threshold ID. The "value" indicates a specific value of the threshold identified by the corresponding threshold ID.

The example of Fig. 4 indicates that the use of the threshold (threshold TH1) identified by a threshold ID "TH1" is a threshold to be used for determining roughness of the respiration. The threshold TH1 indicates a threshold to be used for comparison with the index value indicating the roughness of the respiration. The threshold TH1 indicates that the threshold is used as the threshold name "$H_{th}$". The value of the threshold TH1 indicates "VL1". Note that, in Fig. 4, the value is represented by an abstract code such as "VL1", but the value is a specific numerical value such as "0.5" or "1.8".

Note that the threshold information storage unit 123 may store various types of information according to a purpose, in addition to the above-described information.

The functional information storage unit 124 according to the first embodiment stores various types of information regarding functions. The functional information storage unit 124 stores information regarding each function executed in response to a user's input. The functional information storage unit 124 stores information regarding the input necessary for execution of the function. The functional information storage unit 124 stores input items necessary for execution of each function.

Furthermore, the functional information storage unit 124 may store various types of information regarding a device. The functional information storage unit 124 stores various types of information regarding a device corresponding to each function. For example, the functional information storage unit 124 can communicate with the server device 100 and stores various types of information of a device that can be an operation target. The functional information storage unit 124 may store a device ID indicating identification information for identifying a device and device type information indicating a type of a corresponding device. The functional information storage unit 124 stores functions and parameters of each device in association with the each device. The functional information storage unit 124 stores information indicating a state of each device in association with the each device. For example, the functional information storage unit 124 stores various types of information such as a parameter value of each device at that time in association with the each device. For example, the functional information storage unit 124 stores various types of information such as a parameter value of each device at the present time (the last time information has been acquired) in association with the each device. In the case where the device is a television, the functional information storage unit 124 stores an on/off state, volume, brightness, a channel, and the like at the present time in association with the device ID. Furthermore, in the case where the device is a lighting device, the functional information storage unit 124 stores an on/off state, brightness, color tone, and the like at the present time in association with the device ID.

Note that the functional information storage unit 124 may store various types of information according to a purpose, in addition to the above-described information.

Referring back to Fig. 3, the description will be continued. The control unit 130 is implemented by, for example, a central processing unit (CPU), a micro processing unit (MPU), or the like executing a program (for example, an information processing program or the like according to the present disclosure) stored inside the server device 100 using a random access memory (RAM) or the like as a work area. Furthermore, the control unit 130 is implemented by, for example, an integrated circuit such as an application specific integrated circuit (ASIC) or a field programmable gate array (FPGA).

As illustrated in Fig. 3, the control unit 130 includes an acquisition unit 131, a calculation unit 132, a determination unit 133, an execution unit 134, and a transmission unit 135, and implements or executes a function and an action of the information processing to be described below. Note that the internal configuration of the control unit 130 is not limited to the configuration illustrated in Fig. 3, and may be another configuration as long as the configuration performs the information processing to be described below. Furthermore, the connection relationship of the processing units included in the control unit 130 is not limited to the connection relationship illustrated in Fig. 3, and may be another connection relationship.

The acquisition unit 131 acquires various types of information. The acquisition unit 131 acquires the various types of information from an external information processing device. The acquisition unit 131 acquires the various types of information from the terminal device 10. The acquisition unit 131 acquires the various types of information detected by the sensor unit 17 of the terminal device 10 from the terminal device 10. The acquisition unit 131 acquires the various types of information detected by the respiration sensor 171 of the sensor unit 17 from the terminal device 10.

The acquisition unit 131 acquires various types of information from the storage unit 120. The acquisition unit 131 acquires various types of information from the respiration information storage unit 121, the user information storage unit 122, the threshold information storage unit 123, and the functional information storage unit 124. The acquisition unit 131 acquires various types of information calculated by the calculation unit 132. The acquisition unit 131 acquires various types of information determined by the determination unit 133.

The acquisition unit 131 acquires the first speech information indicating the first speech by the user, the second speech information indicating the second speech by the user after the first speech, and the respiration information regarding the respiration of the user. The acquisition unit 131 acquires the third speech information indicating the third speech by the user after the second speech. The acquisition unit 131 acquires the respiration information including the displacement amount of the respiration of the user. The acquisition unit 131 acquires the respiration information including the cycle of the respiratory of the user. The acquisition unit 131 acquires the respiration information including the rate of the respiration of the user. The acquisition unit 131 acquires the respiration information indicating the respiration of the user U1 from the terminal device 10 used by the user U1.

The calculation unit 132 calculates various types of information. For example, the calculation unit 132 calculates various types of information on the basis of information from an external information processing device or information stored in the storage unit 120. The calculation unit 132 calculates various types of information on the basis of information from another information processing device such as the terminal device 10. The calculation unit 132 calculates various types of information on the basis of the information stored in the respiration information storage unit 121, the user information storage unit 122, the threshold information storage unit 123, and the functional information storage unit 124.

The calculation unit 132 calculates various types of information on the basis of the various types of information acquired by the acquisition unit 131. The calculation unit 132 calculates various types of information on the basis of various types of information determined by the determination unit 133.

The calculation unit 132 calculates the index value indicating the respiratory state of the user using the respiration information. The calculation unit 132 calculates the degree of roughness "$H_b$", which is an index value, using the equation (1), equation (4), or the like. The calculation unit 132 calculates the displacement amount "$V_b$", using the equation (2). The calculation unit 132 calculates the average observation value "$S_m$", using the equation (3). The calculation unit 132 calculates the cycle "$A_b$" from the number of intersections of the observation value "$S_i$" with the average observation value "$S_m$" and the reciprocal of the number of peaks. The calculation unit 132 calculates the difference value "$\Delta S_i$" using the equation (5).

The determination unit 133 determines various types of information. The determination unit 133 gives a decision for various types of information. The determination unit 133 makes various determinations. The determination unit 133 predicts various types of information. The determination unit 133 classifies various types of information. The determination unit 133 extracts various types of information. The determination unit 133 specifies various types of information. The determination unit 133 selects various types of information. The determination unit 133 determines various types of information on the basis of information from an external information processing device and information stored in the storage unit 120. The determination unit 133 determines various types of information on the basis of information from another information processing device such as the terminal device 10. The determination unit 133 determines various types of information on the basis of the information stored in the respiration information storage unit 121, the user information storage unit 122, the threshold information storage unit 123, and the functional information storage unit 124.

The determination unit 133 determines various types of information on the basis of the various types of information acquired by the acquisition unit 131. The determination unit 133 determines various types of information on the basis of the various types of information calculated by the calculation unit 132. The determination unit 133 determines various types of information on the basis of processing executed by the execution unit 134.

The determination unit 133 determines whether or not to execute the voice interaction control by comparing the information calculated by the calculation unit 132 with a threshold. The determination unit 133 determines whether or not to execute the voice interaction control using the threshold. The determination unit 133 determines whether or not to execute the voice interaction control by comparing the degree of roughness "$H_b$" with the threshold. The determination unit 133 determines to execute the voice interaction control in the case where the degree of roughness "$H_b$" is equal to or larger than the specified threshold "$H_{th}$". Then, the determination unit 133 compares the degree of roughness "$H_b$" with the specified threshold "$H_{th}$" In the case where the degree of roughness "$H_b$" is smaller than the specified threshold "$H_{th}$", the determination unit 133 determines that the respiratory state of the user is normal. In the case where the degree of roughness "$H_b$" is equal to or larger than the specified threshold "$H_{th}$", the determination unit 133 determines that the respiratory state of the user is non-normal.

The execution unit 134 executes various types of processing. The execution unit 134 determines execution of various types of processing. The execution unit 134 executes various types of processing on the basis of information from an external information processing device The execution unit 134 executes various types of processing on the basis of the information stored in the storage unit 120. The execution unit 134 executes various types of processing on the basis of the information stored in the respiration information storage unit 121, the user information storage unit 122, the threshold information storage unit 123, and the functional information storage unit 124.

The execution unit 134 executes various types of processing on the basis of the various types of information acquired by the acquisition unit 131. The execution unit 134 executes various types of processing on the basis of the various types of information calculated by the calculation unit 132. The execution unit 134 executes various types of processing on the basis of the various types of information determined by the determination unit 133.

The execution unit 134 generates various types of information. The execution unit 134 generates various types of information on the basis of the information from an external information processing device or information stored in the storage unit 120. The execution unit 134 generates various types of information on the basis of information from another information processing device such as the terminal device 10. The execution unit 134 generates various types of information on the basis of the information stored in the respiration information storage unit 121, the user information storage unit 122, the threshold information storage unit 123, and the functional information storage unit 124.

The execution unit 134 executes processing according to a calculation result by the calculation unit 132. The execution unit 134 executes processing according to the determination by the determination unit 133. The execution unit 134 executes the voice interaction control in a case where the determination unit 133 determines to execute the voice interaction control.

The execution unit 134 executes the processing of concatenating the first speech and the second speech by executing the voice interaction control according to the respiratory state of the user based on the respiration information acquired by acquisition unit 131. In a case where the index value satisfies the condition, the execution unit 134 executes the processing of concatenating the first speech and the second speech by executing the voice interaction control. The execution unit 134 executes the processing of concatenating the first speech and the second speech by executing the voice interaction control in a case where a comparison result between the index value and a threshold satisfies the condition.

The execution unit 134 executes processing of extending the timeout time as the voice interaction control. The execution unit 134 executes the processing of concatenating the first speech and the second speech by executing the voice interaction control for extending the timeout time regarding voice interaction. The execution unit 134 executes the processing of concatenating the first speech and the second speech by executing the voice interaction control for extending the timeout time to be used for voice recognition speech end determination. The execution unit 134 executes processing of concatenating the second speech information indicating the second speech by the user and the first speech before an extended timeout time elapses from the first speech by executing the voice interaction control for extending the timeout time to the extended timeout time.

The execution unit 134 executes the processing of concatenating the speech determined to be OOD as the voice interaction control. The execution unit 134 executes the processing of concatenating the first speech and the second speech by executing the voice interaction control for concatenating the first speech and the second speech according to a semantic understanding processing result of the first speech in the case where a semantic understanding processing result of the second speech is uninterpretable. The execution unit 134 executes the processing of concatenating the first speech and the second speech by executing the voice interaction control for concatenating the first speech with an uninterpretable semantic understanding processing result and the second speech with an uninterpretable semantic understanding processing result. In a case where the semantic understanding processing result of the third speech is uninterpretable, the execution unit 134 executes the processing of concatenating the second speech and the third speech.

The execution unit 134 executes the processing of concatenating speeches in which components (words or segments) in the speeches have a predetermined co-occurrence relationship as the voice interaction control. The execution unit 134 executes the processing of concatenating the first speech and the second speech by executing the voice interaction control for concatenating the first speech and the second speech in a case where a first component that is spoken last in the first speech and a second component that is spoken first in the second speech satisfy a condition regarding co-occurrence. The execution unit 134 executes the processing of concatenating the first speech and the second speech by executing the voice interaction control for concatenating the first speech and the second speech in the case where a probability that the second component appears next to the first component is equal to or larger than a specified value. The execution unit 134 executes the processing of concatenating the first speech and the second speech by executing the voice interaction control for concatenating the first speech and the second speech in the case where a probability that the second component appears next to the first component is equal to or larger than a specified value in a speech history of the user. In a case where a component spoken last in the second speech and a component spoken first in the third speech satisfy a condition regarding co-occurrence, the execution unit 134 executes the processing of concatenating the second speech and the third speech.

The execution unit 134 does not execute the voice interaction control in a case where the respiratory state of the user is a normal state. The execution unit 134 executes the voice interaction control in normal times (normal mal voice interaction control) in the case where the respiratory state of the user is the normal state.

In the case where the degree of roughness "$H_b$" satisfies a condition, the execution unit 134 executes the voice interaction control. In the case where the comparison result between the degree of roughness "$H_b$" and the specified threshold "$H_{th}$" satisfies a condition, the execution unit 134 executes the voice interaction control. The execution unit 134 executes the voice interaction control in the case where the degree of roughness "$H_b$" becomes equal to or larger than the specified threshold "$H_{th}$".

The execution unit 134 concatenates the speech UT11 and the speech UT12. The server device 100 concatenates the speech UT11 of "read" and the speech UT12 of "out" to generate the speech UT13 of "read out".

The transmission unit 135 transmits various types of information. The transmission unit 135 transmits various types of information to an external information processing device. The transmission unit 135 provides various types of information to an external information processing device. For example, the transmission unit 135 transmits various types of information to another information processing device such as the terminal device 10. The transmission unit 135 provides the information stored in the storage unit 120. The transmission unit 135 transmits the information stored in the storage unit 120.

The transmission unit 135 provides various types of information on the basis of information from another information processing device such as the terminal device 10. The transmission unit 135 provides various types of information on the basis of the information stored in the storage unit 120. The transmission unit 135 provides various kinds of information on the basis of the information stored in the respiration information storage unit 121, the user information storage unit 122, the threshold information storage unit 123, or the functional information storage unit 124.

The transmission unit 135 transmits information indicating a function to be executed by the terminal device 10 to the terminal device 10. The transmission unit 135 transmits information indicating a function determined to be executed by the execution unit 134 to the terminal device 10. The transmission unit 135 transmits various types of information to the terminal device 10 in response to an instruction from the execution unit 134. The transmission unit 135 transmits information instructing the terminal device 10 to activate the voice recognition application.

The transmission unit 154 transmits information to be output by the terminal device 10 of the user to the terminal device 10. The transmission unit 154 transmits information to be output to the terminal device 10 of the user U1 to the terminal device 10. The transmission unit 154 transmits information of a message to be output by voice to the terminal device 10 of the user U1 to the terminal device 10. The transmission unit 154 transmits information of a message from Mr. oo to the user U1 to the terminal device 10 of the user U1.

[1-4. Configuration of Terminal Device According to First Embodiment]

Next, a configuration of the terminal device 10, which is an example of an information processing device that executes information processing according to the first embodiment, will be described. Fig. 5 is a diagram illustrating a configuration example of a terminal device according to the first embodiment of the present disclosure.

As illustrated in Fig. 5, the terminal device 10 includes a communication unit 11, an input unit 12, an output unit 13, a storage unit 14, a control unit 15, a display unit 16, and a sensor unit 17.

The communication unit 11 is implemented by, for example, an NIC, a communication circuit, or the like. The communication unit 11 is connected to the network N (the Internet or the like) in a wired or wireless manner, and transmits and receives information to and from other devices such as the server device 100 via the network N.

The input unit 12 accepts various inputs. The input unit 12 accepts detection by the sensor unit 17 as an input. The input unit 12 accepts input of respiration information indicating respiration of the user. The input unit 12 accepts an input of the respiration information detected by the sensor unit 17. The input unit 12 accepts an input of the respiration information detected by the respiration sensor 171. The input unit 12 accepts input of the respiration information based on point cloud data detected by the respiration sensor 171. The input unit 12 accepts an input of speech information of the user. The input unit 12 accepts input of the respiration information of the user who performs an input by a body motion. The input unit 12 accepts a gesture or a line-of-sight of the user as an input.

Various operations are input from the user to the input unit 12. The input unit 12 accepts a sound as an input by the sensor unit 17 having a function to detect a voice. The input unit 12 accepts, as input information, voice information detected by a microphone (sound sensor) that detects a voice. The input unit 12 accepts a voice by a user's speech as the input information. The input unit 12 accepts the speech UT1 of the user U1. The input unit 12 accepts the speech UT11 of the user U1. The input unit 12 accepts the speech UT12 of the user U1.

Furthermore, the input unit 12 may accept an operation (user operation) on the terminal device 10 used by the user as an operation input by the user. The input unit 12 may accept information regarding a user's operation using a remote controller via the communication unit 11. Furthermore, the input unit 12 may include a button provided on the terminal device 10, or a keyboard or a mouse connected to the terminal device 10.

For example, the input unit 12 may have a touch panel capable of implementing functions equivalent to those of a remote controller, a keyboard, and a mouse. In this case, various types of information are input to the input unit 12 via the display unit 16. The input unit 12 accepts various operations from the user via a display screen by a function of a touch panel implemented by various sensors. That is, the input unit 12 accepts various operations from the user via the display unit 16 of the terminal device 10. For example, the input unit 12 accepts an operation such as a designation operation by the user via the display unit 16 of the terminal device 10. For example, the input unit 12 functions as an acceptance unit that accepts a user's operation by the function of a touch panel. In this case, the input unit 12 and an acceptance unit 153 may be integrated. Note that, as a method of detecting the user's operation by the input unit 12, a capacitance method is mainly adopted in a tablet terminal, but any method may be adopted as long as the user's operation can be detected and the function of a touch panel can be implemented, such as a resistive film method, a surface acoustic wave method, an infrared method, and an electromagnetic induction method, which are other detection methods.

For example, the input unit 12 accepts the speech of the user U1 as an input. The input unit 12 accepts the speech of the user U1 detected by the sensor unit 17 as an input. The input unit 12 accepts, as an input, the speech of the user U1 detected by the sound sensor of the sensor unit 17.

The output unit 13 outputs various types of information. The output unit 13 has a function to output a voice. For example, the output unit 13 includes a speaker that outputs sound. The output unit 13 outputs various types of information by voice according to the control by the execution unit 152. The output unit 13 outputs information by voice to the user. The output unit 13 outputs information displayed on the display unit 16 by voice.

The storage unit 14 is implemented by, for example, a semiconductor memory element such as a RAM or a flash memory, or a storage device such as a hard disk or an optical disk. The storage unit 14 stores information of the voice recognition application (program) that implements the voice recognition function. For example, the terminal device 10 can execute the voice recognition by activating the voice recognition application. The storage unit 14 stores various types of information to be used for displaying information. The storage unit 14 stores various types of information to be used for the voice recognition. The storage unit 14 stores information of a dictionary (voice recognition dictionary) to be used for a voice recognition dictionary.

Referring back to Fig. 5, the description will be continued. The control unit 15 is implemented by, for example, a CPU, an MPU, or the like executing a program (for example, an information processing program according to the present disclosure) stored inside the terminal device 10 using a RAM or the like as a work area. Furthermore, the control unit 15 may be implemented by, for example, an integrated circuit such as an ASIC or an FPGA.

As illustrated in Fig. 5, the control unit 15 includes a reception unit 151, an execution unit 152, an acceptance unit 153, and a transmission unit 154, and implements or executes a function and an action of information processing to be described below. Note that the internal configuration of the control unit 15 is not limited to the configuration illustrated in Fig. 5, and may be another configuration as long as the configuration performs the information processing to be described below.

The reception unit 151 receives various types of information. The reception unit 151 receives various types of information from an external information processing device. The reception unit 151 receives various types of information from another information processing device such as the server device 100.

The reception unit 151 receives information instructing activation of the voice recognition from the server device 100. The reception unit 151 receives information instructing activation of the voice recognition application from the server device 100.

The reception unit 151 receives execution instructions of various functions from the server device 100. For example, the reception unit 151 receives information designating a function from the server device 100 as a function execution instruction. The reception unit 151 receives content. The reception unit 151 receives content to be displayed from the server device 100. The reception unit 151 receives information to be output by the output unit 13 from the server device 100. The reception unit 151 receives information to be displayed by the display unit 16 from the server device 100.

The execution unit 152 executes various types of processing. The execution unit 152 determines execution of various types of processing. The execution unit 152 executes various types of processing on the basis of information from an external information processing device The execution unit 152 executes various types of processing on the basis of the information from the server device 100. The execution unit 152 executes various types of processing in accordance with an instruction from the server device 100. The execution unit 152 executes various types of processing on the basis of the information stored in the storage unit 14. The execution unit 152 activates the voice recognition.

The execution unit 152 controls various outputs. The execution unit 152 controls voice output by the output unit 13. The execution unit 152 controls various displays. The execution unit 152 controls display on the display unit 16. The execution unit 152 controls display on the display unit 16 in accordance with reception by the reception unit 151. The execution unit 152 controls display on the display unit 16 on the basis of the information received by the reception unit 151. The execution unit 152 controls the display on the display unit 16 on the basis of the information accepted by the acceptance unit 153. The execution unit 152 controls display on the display unit 16 in accordance with acceptance by the acceptance unit 153.

The acceptance unit 153 accepts various types of information. The acceptance unit 153 accepts an input by the user via the input unit 12. The acceptance unit 153 accepts the speech by the user as an input. The acceptance unit 153 accepts an operation by the user. The acceptance unit 153 accepts a user's operation for the information displayed by the display unit 16. The acceptance unit 153 accepts a character input by the user.

The transmission unit 154 transmits various types of information to an external information processing device. For example, the transmission unit 154 transmits various types of information to another information processing device such as the terminal device 10. The transmission unit 154 transmits the information stored in the storage unit 14.

The transmission unit 154 transmits various types of information on the basis of information from another information processing device such as the server device 100. The transmission unit 154 transmits various types of information on the basis of the information stored in the storage unit 14.

The transmission unit 154 transmits the sensor information detected by the sensor unit 17 to the server device 100. The transmission unit 154 transmits the respiration information of the user U1 detected by the respiration sensor 171 of the sensor unit 17 to the server device 100.

The transmission unit 154 transmits the input information input by the user to the server device 100. The transmission unit 154 transmits the input information input by voice by the user to the server device 100. The transmission unit 154 transmits the input information input by a user's operation to the server device 100.

The transmission unit 154 transmits the first speech information indicating the first speech by the user to the server device 100. The transmission unit 154 transmits the second speech information indicating the second speech by the user after the first speech to the server device 100. The transmission unit 154 transmits the respiration information regarding the respiration of the user to the server device 100. The transmission unit 154 transmits the third speech information indicating the third speech by the user after the second speech to the server device 100. The transmission unit 154 transmits the respiration information including the displacement amount of the respiration of the user to the server device 100. The transmission unit 154 transmits the respiration information including the cycle of the respiration of the user to the server device 100. The transmission unit 154 transmits the respiration information including the rate of the respiration of the user to the server device 100.

The display unit 16 is provided in the terminal device 10 and displays various types of information. The display unit 16 is implemented by, for example, a liquid crystal display, an organic electro-luminescence (EL) display, or the like. The display unit 16 may be implemented by any means as long as the information provided from the server device 100 can be displayed. The display unit 16 displays various types of information under the control of the execution unit 152.

The display unit 16 displays various types of information on the basis of the information from the server device 100. The display unit 16 displays the information received from the server device 100.

The display unit 16 displays content. The display unit 16 displays content received by the reception unit 151.

The sensor unit 17 detects predetermined information. The sensor unit 17 detects the respiration information of the user. The sensor unit 17 includes the respiration sensor 171 as means for detecting the respiration information indicating the respiration of the user. The sensor unit 17 detects the respiration information using the respiration sensor 171.

The sensor unit 17 detects the respiration information using the respiration sensor 171. The sensor unit 17 detects the respiration information by the respiration sensor 171 using a millimeter wave radar. Furthermore, the sensor unit 17 is not limited to a millimeter wave radar, and may include the respiration sensor 171 having any configuration as long as the respiration information of the user can be detected. The respiration sensor 171 may be an image sensor. The respiration sensor 171 may be a wearable sensor. As the respiration sensor 171, either a contact-type sensor or a non-contact-type sensor may be used.

Furthermore, the sensor unit 17 is not limited to the above, and may include various sensors. The sensor unit 17 may include a sensor (position sensor) that detects position information, such as a global positioning system (GPS) sensor. Note that the sensor unit 17 is not limited to the above, and may include various sensors. Furthermore, the terminal device 10 may include a light source (light source unit) such as a light emitting diode (LED) for notifying the user by light. For example, the light source unit blinks according to the control by the execution unit 152.

[1-5. Procedure of Information Processing According to First Embodiment]

Next, procedures of various types of information processing according to the first embodiment will be described with reference to Figs. 6 to 8B.

[1-5-1. Procedure of Processing Related to Information Processing Device]

First, a flow of processing according to the information processing device according to the first embodiment of the present disclosure will be described with reference to Fig. 6. Fig. 6 is a flowchart illustrating a processing procedure of the information processing device according to the first embodiment of the present disclosure. Specifically, Fig. 6 is a flowchart illustrating a procedure of information processing by the server device 100.

As illustrated in Fig. 6, the server device 100 acquires the first speech information indicating the first speech by the user (step S101). The server device 100 acquires the second speech information indicating the second speech by the user after the first speech (step S102). The server device 100 acquires the respiration information of the respiration of the user (step S103). Then, server device 100 executes the processing of concatenating the first speech and the second speech by executing the voice interaction control according to the respiratory state of the user based on the respiration information (step S104).

[1-5-2. Procedure of Processing Related to Information Processing System]

Next, a flow of processing according to the information processing system according to the first embodiment of the present disclosure will be described with reference to Fig. 7. Fig. 7 is a sequence diagram illustrating a processing procedure of the information processing system according to the first embodiment of the present disclosure.

As illustrated in Fig. 7, the terminal device 10 detects the respiration information indicating the speech of the user and the respiration of the user (step S201). For example, the terminal device 10 acquires the first speech information indicating the first speech by the user detected by a microphone (sound sensor). For example, the terminal device 10 acquires the second speech information indicating the second speech by the user after the first speech detected by the microphone (sound sensor). For example, the terminal device 10 acquires the respiration information of the user detected by the respiration sensor 171. Then, the terminal device 10 transmits the respiration information indicating the respiration of the user to the server device 100 (step S202). Note that the terminal device 10 may individually transmit each piece of information to the server device 100. The terminal device 10 may transmit each piece of information to the server device 100 at the timing of acquiring each piece of information.

The server device 100 executes the processing of concatenating speeches using the information acquired from the terminal device 10 (step S203). The server device 100 executes the processing of concatenating the first speech and the second speech by executing the voice interaction control according to the respiratory state of the user based on the respiration information.

Then, the server device 100 executes the processing such as the voice recognition, using post-concatenation speech information in which the first speech and the second speech are concatenated (step S204). Then, the server device 100 instructs the terminal device 10 to execute the function based on the result of the voice recognition or the like (step S205). The server device 100 instructs the terminal device 10 to execute the function by transmitting the information indicating the function to the terminal device 10. Then, the terminal device 10 executes the function in response to the instruction from the server device 100 (step S206).

[1-5-3. Specific Example of Processing Related to Information Processing System]

Next, an example of specific processing related to the information processing system will be described with reference to Figs. 8A and 8B. Figs. 8A and 8B are flowcharts illustrating processing of the information processing system according to the first embodiment of the present disclosure. Specifically, Figs. 8A and 8B are flowcharts related to the voice interaction session. Figs. 8A and 8B are flowcharts of the voice interaction control according to the degree of roughness "$H_b$" of the respiration. Note that, hereinafter, the case where the information processing system 1 performs the processing will be described as an example, but the processing illustrated in Figs. 8A and 8B may be performed by either the server device 100 or the terminal device 10 included in the information processing system 1.

As illustrated in Fig. 8A, the information processing system 1 determines whether or not the degree of roughness "$H_b$" of the respiration is equal to or larger than the specified threshold "$H_{th}$" (step S301).

In a case where the degree of roughness "$H_b$" of the respiration is equal to or larger than the specified threshold "$H_{th}$" (step S301: Yes), the information processing system 1 calculates the voice speech influence level "$E_u$" from the degree of roughness "$H_b$" (step S302).

Then, the information processing system 1 extends the silent timeout time "$t_r$" (the voice recognition timeout time "$t_r$") in the voice recognition speech end determination by the time proportional to the voice speech influence level "$E_u$" (step S303). Furthermore, the information processing system 1 extends the silent timeout time "$t_s$" (session timeout time "$t_s$") of the voice interaction session end by the time proportional to the voice speech influence level "$E_u$" (step S304). Then, the information processing system 1 performs the processing of step S305. As described above, the example of Figs. 8A and 8B illustrates the case where the information processing system 1 extends the timeout time as the voice interaction control as an example.

Furthermore, in the case where the degree of roughness "$H_b$" of the respiration is not equal to or larger than the specified threshold "$H_{th}$" (step S301: No), the information processing system 1 executes the processing of step S305 without executing the processing of steps S302 to S304. For example, in the case where the degree of roughness "$H_b$" of the respiration is less than the specified threshold "$H_{th}$", the information processing system 1 executes the processing of step S305 without executing the processing of steps S302 to S304.

In a case where the user has not spoken within the time of the session timeout time "$t_s$" (step S305: No), the information processing system 1 terminates the processing.

On the other hand, in a case where the user has spoken within the session timeout time "$t_s$" (step S305: Yes), the information processing system 1 determines whether or not the result of intent understanding (Intent) of the user speech is interpretable (step S306). For example, the information processing system 1 determines whether or not the result of intent understanding (Intent) of the user speech is not OOD.

In the case where the result of intent understanding (Intent) of the user speech is interpretable (step S306: Yes), the information processing system 1 determines whether or not an interaction scenario of the voice interaction session has been completed (step S307). For example, in a case where the result of intent understanding (Intent) of the user speech is other than OOD, the information processing system 1 performs the processing of step S307.

In a case where the interaction scenario of the voice interaction session has been completed (step S307: Yes), the information processing system 1 terminates the processing.

On the other hand, in a case where the interaction scenario of the voice interaction session has not been completed (step S307: No), the information processing system 1 returns to step S301 and repeats the processing.

Furthermore, in the case where the result of intent understanding (Intent) of the user speech is not interpretable (step S306: No), the information processing system 1 determines whether or not the degree of roughness "$H_b$" of the respiration is equal to or larger than the specified threshold "$H_{th}$" as illustrated in Fig. 8B (step S308). For example, in a case where the result of intent understanding (Intent) of the user speech is OOD, the information processing system 1 performs the processing of step S308.

In the case where the degree of roughness "$H_b$" of the respiration is equal to or larger than the specified threshold "$H_{th}$" (step S308: Yes), the information processing system 1 saves the state of the voice interaction session (step S309). Then, the information processing system 1 interrupts the voice interaction session (step S310).

Then, the information processing system 1 determines whether or not the degree of roughness "$H_b$" of the respiration is smaller than the specified threshold "$H_{th}$" (step S311). That is, the information processing system 1 determines whether or not the degree of roughness "$H_b$" of the respiration is less than the specified threshold "$H_{th}$".

In a case where the degree of roughness "$H_b$" of the respiration is not smaller than the specified threshold "$H_{th}$" (step S311: No), the information processing system 1 repeats the processing of step S311. For example, in a case where the degree of roughness "$H_b$" of the respiration is not less than the specified threshold "$H_{th}$", the information processing system 1 waits until the degree of roughness "$H_b$" of the respiration becomes less than the specified threshold "$H_{th}$", that is, until the respiration of the user calms down.

In the case where the degree of roughness "$H_b$" of the respiration is smaller than the specified threshold "$H_{th}$" (step S311: Yes), the information processing system 1 resumes the voice interaction session from a saved state (step S312). Then, the information processing system 1 executes the processing of step S305 in Fig. 8A.

On the other hand, in the case where the degree of roughness "$H_b$" of the respiration is not equal to or larger than the specified threshold "$H_{th}$" (step S 308: No), the information processing system 1 performs a system speech of rehearing the speech in which the user's Intent is OOD (step S313). For example, in the case where the degree of roughness "$H_b$" of the respiration is less than the specified threshold "$H_{th}$", that is, in the case where the user's respiration is calm, the information processing system 1 performs a rehearing speech (for example, "Please say that again" or the like) with respect to the speech in which the user's speech intent is uninterpretable. Then, the information processing system 1 executes the processing of step S305 in Fig. 8A.

[2. Second Embodiment]

From here, a second embodiment will be described. In the second embodiment, a case of using a vector (respiratory state vector "$H_v$") indicating a respiratory state of a user will be described as an example. Note that description of points similar to those of the first embodiment will be omitted as appropriate. In the second embodiment, an information processing system 1 includes a server device 100A instead of the server device 100.

[2-1. Overview of Information Processing According to Second Embodiment]

Fig. 9 is a diagram illustrating an example of information processing according to the second embodiment of the present disclosure. Information processing according to the second embodiment of the present disclosure is implemented by the information processing system 1 including the server device 100A and a terminal device 10 illustrated in Fig. 10.

The example of Fig. 9 illustrates a case of using the respiratory state vector "$H_v$" indicating the respiratory state of the user as information indicating the respiratory state of the user. Each processing illustrated in Fig. 9 may be performed by either device of the server device 100A or the terminal device 10 of the information processing system 1 according to the second embodiment. The processing in which the information processing system 1 according to the second embodiment is described as a main body of the processing may be performed by any device included in the information processing system 1 according to the second embodiment. Hereinafter, a case where the server device 100A performs processing of executing processing (concatenation processing) of concatenating a first speech and a second speech by a user U1 by executing voice interaction control, using the respiration information indicating the respiration of the user U1 detected by the terminal device 10, will be described as an example. Note that description of the same points in Fig. 9 as those in Fig. 1 will be omitted as appropriate.

In the example of Fig. 9, the information processing system 1 acquires the respiration information regarding the respiration of the user U1. For example, the server device 100A acquires the respiration information indicating the respiration of the user U1 from terminal device 10 used by the user U1. The server device 100A calculates the respiratory state vector "$H_v$" indicating the respiratory state of user U1 using the acquired respiration information.

In the example of Fig. 9, the server device 100A calculates a three-dimensional vector that generalizes and expresses a respiratory state that affects voice speech. The server device 100A calculates elements of the vector using both a respiration sensor observation value of a most recent long span time $T_l$ (for example, 10 seconds or the like) and a respiration sensor observation value of a most recent short span time $T_s$ (for example, 0.5 seconds or the like).

For example, the number of samples of the respiration sensor in the long span time $T_l$ is "$n_l$" (hereinafter also referred to as "the number of samples "$n_l$""). For example, "$n_l$" indicates the number of pieces of sensor information (for example, the number of times of detection) detected by a respiration sensor 171 in the long span time $T_l$.

For example, the number of samples of the respiration sensor in the short span time $T_s$ is "$n_s$" (hereinafter also referred to as "the number of samples "$n_s$""). For example, "$n_s$" indicates the number of pieces of sensor information (for example, the number of times of detection) detected by the respiration sensor 171 in the short span time $T_s$. For example, $n_l$ is much larger than $n_s$ ($n_l >> n_s$). Details of observation target times such as $n_l$ and $n_s$ will be described with reference to Fig. 16.

For example, the server device 100A calculates the respiratory state vector "$H_v$" indicating the respiratory state of the user U1 using following equation (8).

[Math. 8]

$$H_v = (d_b, f_b, v_b) \cdots (8)$$

"$d_b$" (hereinafter also referred to as "depth "$d_b$"") in the above equation (8) indicates the depth of the respiration of the user. For example, the server device 100A calculates the depth "$d_b$" using the following equation (9).

[Math. 9]

$$d_b = \sqrt{\frac{\sum_{i=1}^{N_{lp}} (S_{pi} - S_m)^2}{N_{lp}}} \cdots (9)$$

Furthermore, "$S_m$" (hereinafter also referred to as "average observation value "$S_m$"") in the above equation (9) indicates an average observation value of the respiration sensor of $n_l$ samples in the most recent long span time $T_l$. For

example, "$S_m$" indicates an average observation value (for example, an average inspiration amount) of the number of samples "$n_l$" detected by the respiration sensor 171 in the most recent long span time $T_l$. For example, the server device 100A calculates the average observation value "$S_m$" using the following equation (10).
[Math. 10]

$$S_m = \frac{\sum_{i=1}^{n_l} S_i}{n_l} \cdots (10)$$

"$S_i$" (hereinafter also referred to as "observation value "$S_i$"") in the above equation (10) indicates an observation value of each sample of the respiration sensor. For example, "$S_i$" represents the observation value (for example, the inspiration amount) of the sensor information detected by the respiration sensor 171.

"$n_l$" in the above equation (10) indicates $n_l$ samples in the most recent long span time $T_l$. For example, "$n_l$" indicates the number of pieces of sensor information detected by the respiration sensor 171 in the long span time $T_l$ (for example, the number of times of detection).

"$S_{pi}$" (hereinafter also referred to as "peak observation value "$S_{pi}$"") in the above equation (9) indicates each peak observation value of the respiration sensor. For example, the server device 100A detects a peak based on a maximum value, a minimum value, or the like between intersections and "$S_m$". For example, "$S_{pi}$" indicates a maximum value or a minimum value of each respiration in the observation values (for example, the inspiration amounts) of the sensor information detected by the respiration sensor 171.

"$N_{lp}$" (hereinafter also referred to as "the number of peak observations "$N_{lp}$""\) in the above equation (9) indicates the number of peak observation values included in the $n_l$ samples in the most recent long span time $T_l$. Note that details using illustration of each element will be described with reference to Fig. 17.

"$f_b$" (hereinafter also referred to as "frequency "$f_b$"") in the above equation (8) indicates a frequency of the respiration of the user. For example, the server device 100A calculates the frequency "$f_b$" according to the number of intersections with the average observation value "$S_m$" of the observation value "$S_i$" and the number of peaks "$N_{lp}$". Note that the server device 100A may calculate the frequency "$f_b$" appropriately using various methods such as an autocorrelation pitch detection and a cepstrum analysis. The above-described calculation of the depth "$d_b$" and the frequency depth "$f_b$" indicates an example of calculation from the observation value of the long span time.

Furthermore, "$v_b$" (hereinafter also referred to as "speed "$v_b$"") in the above equation (8) indicates a speed of the respiration of the user. For example, the server device 100A calculates a difference absolute value average of the observation values in the $n_s$ samples in the most recent short span time $T_s$ as the speed "$v_b$". For example, the server device 100A calculates the speed "$v_b$" using the following equation (11).
[Math. 11]

$$v_b = \sqrt{\frac{\sum_{i=1}^{n_s} \Delta {S_i}^2}{n_s}} \cdots (11)$$

"$n_s$" in the above equation (11) indicates $n_s$ samples in the most recent short span time $T_s$. For example, "$n_s$" indicates the number of pieces of sensor information (for example, the number of times of detection) detected by the respiration sensor 171 in the short span time $T_s$. "$\Delta S_i$" (hereinafter also referred to as a "difference value "$\Delta S_i$"") in the above equation (11) indicates a difference value from the observation value of one sample before of the respiration sensor. For example, the difference value "$\Delta S_i$" indicates a difference value from an observation value one sample before among the observation values of the sensor information detected by the respiration sensor 171. The server device 100A calculates the difference value "$\Delta S_i$" using following equation (12).
[Math. 12]

$$\Delta S_i = S_i - S_{i-1} \cdots (12)$$

"$S_i$" in the above equation (12) is similar to "$S_i$" in the equation (9). "$S_{i-1}$" in the above equation (12) indicates, for example, the observation value one sample before.

As described above, the server device 100A detects (calculates) the respiratory state vector indicating the respiratory state of the user, using a displacement value of a respiration amount observed by the respiration sensor 171 in a voice interaction system. The server device 100A detects (calculates) a generalized respiratory state vector. For example, the server device 100A calculates the depth/frequency of the respiration in the long span time and the speed of the respiration in the short span time as elements of the respiratory state vector "$H_v$". Note that the above is an example, and the server device 100A may calculate the respiratory state vector "$H_v$" appropriately using various types of information.

In the example of Fig. 9, the server device 100A performs processing of the voice interaction control, using the respiratory state vector "$H_v$" calculated by the equation (8). The server device 100A performs a determination using the respiratory state vector "$H_v$" of the respiration indicating the respiratory state. The server device 100A executes the voice interaction control in a case where the respiratory state vector "$H_v$" satisfies a condition. The respiratory state vector "$H_v$" is a vector that further deviates from a range in normal times (hereinafter also referred to as a "normal range "$R_N$"") as the respiration is more different from that in normal times. As the respiratory state vector "$H_v$" further deviates from the normal range "$R_N$" (distance is increased), a possibility of having a difficulty in making a desired speech by voice due to out of breath is higher. As the respiratory state vector "$H_v$" further deviates from the normal range "$R_N$" (distance increases), a possibility that a speech cannot be started easily at timing at which the speech should be made or the speech is interrupted halfway is higher. Therefore, the server device 100A uses information of the range (normal range "$R_N$") corresponding to the normal times of the respiratory state vector. The server device 100A executes the voice interaction control in a case where a comparison result between the respiratory state vector "$H_v$" and the normal range "$R_N$" satisfies a condition. As described above, in the respiratory state vector "$H_v$", the normal range "$R_N$" indicating a normal range (space) that is a respiratory state in which a voice speech can be normally performed is defined, and when the respiratory state vector "$H_v$" falls outside the normal range "$R_N$", the information processing system 1 executes the processing of the voice interaction control. The normal range "$R_N$" will be described below in detail. An example of Fig. 9 will be specifically described below on the premise of the above-described points.

The example of Fig. 9 illustrates processing in a case of not executing the voice interaction control, and then illustrates processing in a case of executing the voice interaction control. First, as illustrated in state information ST1, a case where the respiratory state of the user U1 is a normal state is illustrated at time t10. For example, the server device 100A acquires respiration information of the user U1 at time t10, and calculates the respiratory state vector "$H_v$", using the respiration information and the equation (8). Then, the server device 100A compares the calculated respiratory state vector "$H_v$" with the normal range "$R_N$". Since the respiratory state vector "$H_v$" is within the normal range "$R_N$", the server device 100A determines that the respiratory state of the user U1 at time t10 is normal.

Note that the example of Fig. 9 illustrates a case where the respiratory state of the user U1 is determined to be normal during a period from time t10 to time t12. Therefore, a case is illustrated in which the voice interaction control is not executed during the period from time t10 to time t12, and extension of a silent timeout time "$t_r$" in voice recognition speech end determination is not performed, which is an example of a timeout time.

The user U1 makes a speech UT1 "Play music" at time t11. After the voice recognition timeout time "$t_r$" has elapsed, processing such as voice recognition is executed. For example, the information processing system 1 generates information of intent (Intent) of the speech UT1 of the user and entity (Entity) of the speech UT1 from the speech UT1 of the user by natural language understanding (NLU). Note that the information processing system 1 may use any technique regarding natural language understanding as long as the information regarding the intent (Intent) and the attribute information (Entity) can be acquired from the speech of the user. In the example of Fig. 9, since the speech UT1 of "Play music" is a speech by which the intent of the user U1 is interpretable, the information processing system 1 executes a function corresponding to the speech UT1. For example, the information processing system 1 causes the terminal device 10 of the user U1 to play music.

Next, as illustrated in state information ST2, a case where the respiratory state of the user U1 is a state other than normal (non-normal) at time t12 is illustrated. For example, the server device 100A acquires respiration information of the user U1 at time t12, and calculates the respiratory state vector "$H_v$", using the respiration information and the equation (8). Then, the server device 100A compares the calculated respiratory state vector "$H_v$" with the normal range "$R_N$". Since the respiratory state vector "$H_v$" is out of the normal range "$R_N$", the server device 100A determines that the respiratory state of user U1 at time t12 is non-normal. That is, a case where the respiratory state of the user U1 changes from the normal state to the non-normal state at time t12 is illustrated.

Note that the example of Fig. 9 illustrates a case where the respiratory state of the user U1 is determined to be non-normal at and after time t12. Specifically, a case is illustrated in which the user U1 is exercising at and after time t12 and is in an out-of-breath state, and the respiratory state is determined to be non-normal. Therefore, the voice interaction control is executed at and after the time t12, and the voice recognition timeout time "$t_r$" is extended. For example, the server device 100A executes the voice interaction control and extends the voice recognition timeout time "$t_r$". In the example of Fig. 9, the server device 100A extends the length of the voice recognition timeout time "$t_r$" from a time length TL1 to a time length TL2.

In Fig. 9, it is assumed that the information processing system 1 is performing a system output of "A message has arrived from Mr. oo. Shall I read out?" immediately before time t13. In response to the system output, the user U1 makes a speech UT11 "read" at time t13. Then, the user U1 makes a speech UT12 of "out" at time t14. In this case, the speech UT11 of "read" corresponds to the first speech, and the speech UT12 of "out" corresponds to the second speech.

Here, the time length between the time at which the speech UT11 of "read" ends and the time at which the speech UT12 of "out" starts (time t14) is longer than the time length TL1 and shorter than the time length TL2. Therefore, in the case where the voice recognition timeout time "$t_r$" is not extended and the voice recognition timeout time "$t_r$" is the time length TL1, the voice recognition timeout time "$t_r$" ends before the speech UT12 of "out". In this case, the voice recognition processing is performed only with the speech UT11 of "read". In this case, since the speech UT11 of "read" is not a speech by which the intent of the user U1 is interpretable, the information processing system 1 regards the speech UT11 as a speech by which the intent is uninterpretable (OOD speech). As described above, in the case where the voice recognition timeout time "$t_r$" is not extended, the information processing system 1 cannot appropriately interpret the speech of the user U1.

On the other hand, in the example of Fig. 9, the voice recognition timeout time "$t_r$" is extended, and the voice recognition timeout time "$t_r$" is the time length TL2. Therefore, since the speech UT12 of "out" has been spoken within the voice recognition timeout time "$t_r$" since the time when the speech UT11 of "read" has ended, the server device 100A concatenates the speech UT11 and the speech UT12. For example, the server device 100A concatenates the speech UT11 of "read" and the speech UT12 of "out" and performs the processing such as the voice recognition with a speech UT13 of "read out".

In this case, since the speech UT13 "read out" is a speech by which the intent of the user U1 is interpretable, the information processing system 1 executes a function corresponding to the speech UT13. For example, the information processing system 1 causes the terminal device 10 of the user U1 to output the message from Mr. oo by voice. As described above, the information processing system 1 appropriately enables a plurality of speeches of the user to be concatenated by executing the voice interaction control for extending the timeout time.

[2-1-1. Processing Example in which Influence on Speech is Taken Into Consideration]

The information processing system 1 according to the second embodiment may vary an extended time in consideration of an influence on a speech. As described above, the information processing system 1 may perform the processing of the voice interaction control using a degree of influence on the speech. This point will be described below.

The information processing system 1 performs the voice interaction control when the detected respiratory state becomes a state that affects a speech. For example, the information processing system 1 executes the voice interaction control in the case where the respiratory state vector "$H_v$" falls outside the normal range "$R_N$".

For example, the information processing system 1 temporarily interrupts a session of a voice interaction (voice interaction session) when a semantic understanding result of the user speech is uninterpretable, and waits until the respiratory state vector "$H_v$" falls within the normal range "$R_N$" and then resumes the voice interaction session. As described above, in the case where the semantic understanding processing result of the user speech is OOD (uninterpretable), the information processing system 1 interrupts the interaction session, waits until the respiratory state becomes a state in which a normal voice speech can be made, and then resumes the interaction session.

For example, in a case where the Intent from NLU is OOD in the state where the respiratory state vector "$H_v$" is out of the normal range "$R_N$", the information processing system 1 saves the state of the voice interaction session and temporarily interrupts the voice interaction session. When detecting that the respiratory state vector "$H_v$" falls within the normal range "$R_N$", the information processing system 1 resumes the voice interaction session from the saved state. Details of a control flow in which the information processing system 1 interrupts and resumes the OOD speech during exercise and an interaction session after calming down after a while will be described with reference to Figs. 23A and 23B.

For example, the information processing system 1 extends silent timeout times "$t_r$" and "$t_s$" in voice recognition speech end determination and voice interaction session end determination as the vector distance of the respiratory state vector "$H_v$" from the normal range "$R_N$" increases. The information processing system 1 makes the extended time length longer as the vector distance of the respiratory state vector "$H_v$" from the normal range "$R_N$" increases.

[2-1-1-1. Voice Speech Influence Level]

For example, the information processing system 1 may determine the extended time using a voice speech influence level "$E_u$" indicating a degree of influence on a speech. The information processing system 1 calculates the voice speech influence level "$E_u$" using the respiratory state vector "$H_v$".

As described above, in the case of using the respiratory state vector "$H_v$", the information processing system 1 defines the normal range "$R_N$" that means the respiratory state in which the voice speech can be normally performed in the three-dimensional vector space represented by the respiratory state vector "$H_v$". Then, the information processing system 1 defines a point corresponding to a center of the normal range "$R_N$" as a normal respiration origin "$O_N$". For example, the information processing system 1 calculates the normal respiration origin "$O_N$" using the following equation (13).

[Math. 13]

$$O_N = (d_o, f_o, v_o) \quad \cdots (13)$$

A depth "$d_0$" in the above equation (13) indicates a depth at the point corresponding to the center of the normal range "$R_N$". A frequency "$f_0$" in the above equation (13) indicates a frequency at the point corresponding to the center of the normal range "$R_N$". Furthermore, a speed "$v_0$" in the above equation (13) indicates a speed at the point corresponding to the center of the normal range "$R_N$".

Note that the equation (13) is an example, and the information processing system 1 may calculate the normal respiration origin "$O_N$" by appropriately using various types of information, in addition to the equation (13). For example, the information processing system 1 may define the normal range "$R_N$" or the normal respiration origin "$O_N$ the basis of" as a preset fixed value on the basis of the depth, frequency, and speed at the time of normal respiration. The information processing system 1 may use the preset normal range "$R_N$" or normal respiration origin "$O_N$". Furthermore, the information processing system 1 may define the values as values learned in a modification by personalized learning to be described below.

The information processing system 1 calculates the voice speech influence level "$E_u$" using the information of the normal respiration origin "$O_N$". For example, the information processing system 1 calculates the voice speech influence level "$E_u$" using the following equation (14). For example, the information processing system 1 determines that a state in which the respiratory state vector "$H_v$" falls outside the normal range "$R_N$" is a respiratory state that affects the speech, and calculates the voice speech influence level "$E_u$" using the equation (14).

[Math. 14]

$$E_u = \sqrt{(d_b - d_o)^2 + (f_b - f_o)^2} \quad \cdots (14)$$

In the case of the above equation (14), a vector distance (scalar value) between the normal respiration origin "$O_N$" and the respiratory state vector "$H_v$" on a ($d_b$, $f_b$) plane, which is the long span time observation result, is used as the value of the voice speech influence level "$E_u$". Note that the equation (14) is merely an example, and the information processing system 1 may calculate the voice speech influence level "$E_u$" using various equations.

Then, the information processing system 1 determines the extended time length using the calculated voice speech influence level "$E_u$". Note that, since this point is similar to the first embodiment, description is omitted. The information processing system 1 extends the silent timeout time "$t_r$" of the voice recognition speech end determination or the silent timeout time "$t_s$" of the voice interaction session end according to the respiratory state. The information processing system 1 extends the silent timeout times "$t_r$" and "$t_s$" longer as the value of the voice speech influence level "$E_u$" becomes larger. For example, the information processing system 1 extends the silent timeout times "$t_r$" and "$t_s$" by the time proportional to the voice speech influence level "$E_u$". Details of the control flow of the silent timeout times "$t_r$" and "$t_s$" in normal times and during exercise will be described with reference to Figs. 22A and 22B.

Furthermore, in the case of detection of the respiratory state vector "$H_v$", the information processing system 1 extends the silent timeout times "$t_r$" and "$t_s$" until the speed "$v_b$" becomes smaller than a threshold "$v_f$" when the instantaneous respiration speed "$v_b$" is equal to or larger than (faster than) the threshold "$v_f$" under a condition of $d_b \leq d_0$ or $f_b \leq f_0$. Furthermore, the information processing system 1 extends the silent timeout times "$t_r$" and "$t_s$" until the speed "$v_b$" becomes larger than a threshold "$v_s$" when the speed "$v_b$" is equal to or smaller than (slower than) the threshold "$v_s$" under a condition of $d_b \geq d_0$ or $f_b \geq f_0$. The information processing system 1 extends the timeout times by a period in which the user cannot temporarily speak in a case where the speed of the respiration instantaneously increases due to a physiological phenomenon of a respiratory system or in a case where the speed of the respiration instantaneously decreases (stops) due to surprise or strain.

[2-2. Configuration of Information Processing Device According to Second Embodiment]

Next, a configuration of the server device 100A, which is an example of an information processing device that executes information processing according to the second embodiment, will be described. Fig. 10 is a diagram illustrating a configuration example of a server device according to the second embodiment of the present disclosure.

As illustrated in Fig. 10, the server device 100A includes a communication unit 110, a storage unit 120A, and a control unit 130A.

The storage unit 120A is implemented by, for example, a semiconductor memory element such as a RAM or a flash memory, or a storage device such as a hard disk or an optical disk. As illustrated in Fig. 10, the storage unit 120A according to the second embodiment includes a respiration information storage unit 121, a user information storage unit 122, a determination information storage unit 123A, and a functional information storage unit 124.

The determination information storage unit 123A according to the second embodiment stores various types of information regarding information (determining information) to be used for determination. The determination information storage unit 123A stores various types of information to be used for determining whether or not to execute the voice interaction control. Fig. 11 is a diagram illustrating an example of the determination information storage unit according to the second embodiment of the present disclosure. The determination information storage unit 123A illustrated in Fig. 11 includes items such as "determination information ID", "use", "name", and "content".

The "determination information ID" indicates identification information for identifying determination information. The "use" indicates use of the determination information. The "name" indicates a name (character string) of the determination information (variable) identified by the corresponding determination information ID. The "content" indicates specific content (value or the like) of the determination information identified by the corresponding determination information ID.

In the example of Fig. 11, the use of the determination information (determination information JD1) identified by the determination information ID "JD1" indicates the determination information to be used for determination of the normal range. The determination information JD1 indicates determination information (normal range) to be used for comparison with the respiratory state vector. The determination information JD1 indicates that the information is used as the name "$R_N$". The content of the determination information JD1 indicates "range information AINF1". Note that Fig. 11 illustrates the content with an abstract code such as "range information AINF1", but the content is assumed to be specific information (vector, numerical value, or the like) such as "(1.2, 32, 2.8, ...)" or "2.6". For example, the "range information AINF1" may be information (numerical value) indicating a distance from the origin (for example, $O_N$) or may be N-dimensional vector information indicating a range.

Note that the determination information storage unit 123A may store various types of information according to a purpose, in addition to the above-described information.

As illustrated in Fig. 10, the control unit 130A includes an acquisition unit 131, a calculation unit 132A, a determination unit 133A, an execution unit 134, and a transmission unit 135, and implements or executes a function and an action of the information processing to be described below. The acquisition unit 131 acquires information from the determination information storage unit 123A.

The calculation unit 132A calculates various types of information similarly to the calculation unit 132. The calculation unit 132A calculates various types of information on the basis of the information in the determination information storage unit 123A. The calculation unit 132A calculates the vector indicating the respiratory state of the user using the respiration information. The calculation unit 132A calculates the respiratory state vector "$H_v$" that is a vector, using the equation (8) and the like. The calculation unit 132A calculates the depth "$d_b$", using the equation (9). The calculation unit 132A calculates the average observation value "$S_m$", using the equation (10). The calculation unit 132A detects a peak from a maximum value, a minimum value, or the like between intersections and "$S_m$", and calculates a peak observation value "$S_{pi}$". The calculation unit 132A calculates (counts) the number of peak observations "$N_{lp}$". The calculation unit 132A calculates the speed "$v_b$", using the equation (11). The calculation unit 132A calculates a difference value "$\Delta S_i$", using the equation (12).

The determination unit 133A determines various types of information similarly to the determination unit 133. The determination unit 133A determines various types of information on the basis of the information in the determination information storage unit 123A. The determination unit 133A determines whether or not to execute the voice interaction control by comparing the information calculated by the calculation unit 132 with the normal range. The determination unit 133A determines whether or not to execute the voice interaction control using the information of the normal range. The determination unit 133A determines whether or not to execute the voice interaction control by comparing respiratory state vector "$H_v$" with the normal range. The determination unit 133A determines to execute the voice interaction control in the case where the respiratory state vector "$H_v$" falls outside the normal range "$R_N$".

The determination unit 133A determines whether or not to execute the voice interaction control by comparing the information calculated by the calculation unit 132 with the normal range. The determination unit 133A determines whether or not to execute the voice interaction control using the normal range. The determination unit 133A determines whether or not to execute the voice interaction control by comparing respiratory state vector "$H_v$" with the normal range. The determination unit 133A determines to execute the voice interaction control in the case where the respiratory state vector "$H_v$" falls outside the normal range "$R_N$". The determination unit 133A compares the respiratory state vector "$H_v$" with the normal range "$R_N$". The determination unit 133A determines that the respiratory state of the user is normal in the case where the respiratory state vector "$H_v$" is within normal range "$R_N$". The determination unit 133A determines that the respiratory state of the user is non-normal in the case where the respiratory state vector "$H_v$" is out of the normal range "$R_N$".

The execution unit 134 executes various types of processing similarly to the execution unit 134 according to the first embodiment. The execution unit 134 executes various types of processing on the basis of the information of the determination information storage unit 123A. The execution unit 134 executes the voice interaction control in a case where the determination unit 133A determines to execute the voice interaction control. In the case where the vector satisfies the condition, the execution unit 134 executes the processing of concatenating the first speech and the second speech by executing the voice interaction control. In the case where the vector falls outside the normal range, the execution unit 134 executes the processing of concatenating the first speech and the second speech by executing the voice interaction control.

The execution unit 134 executes voice interaction control in a case where the respiratory state vector "$H_v$" satisfies a condition. The execution unit 134 executes voice interaction control in a case where a comparison result between the respiratory state vector "$H_v$" and the normal range "$R_N$" satisfies a condition. The execution unit 134 executes the voice interaction control in the case where the respiratory state vector "$H_v$" falls outside the normal range "$R_N$".

[2-3. Procedure of Information Processing According to Second Embodiment]

Next, an example of specific processing related to the information processing system will be described with reference to Figs. 12A and 12B and Fig. 13. Figs. 12A and 12B and Fig. 13 are flowcharts illustrating processing of the information processing system according to the second embodiment of the present disclosure. Specifically, Figs. 12A, 12B, and 13 are flowcharts related to a voice interaction session. Figs. 12A, 12B, and 13 illustrate a voice interaction control flowchart with the respiratory state vector "$H_v$" including an extended silent timeout time with the speed "$v_b$". Note that, hereinafter, the case where the information processing system 1 according to the second embodiment performs the processing will be described as an example, but the processing illustrated in Figs. 12A, 12B, and 13 may be performed by either the server device 100A or the terminal device 10 included in the information processing system 1 according to the second embodiment.

As illustrated in Fig. 12A, the information processing system 1 determines whether or not respiratory state vector "$H_v$" of the respiration falls outside the normal range "$R_N$" (step S401).

In the case where the respiratory state vector "$H_v$" of the respiration falls outside the normal range "$R_N$" (step S401: Yes), the information processing system 1 calculates the voice speech influence level "$E_u$" from the respiratory state vector "$H_v$" and the normal respiration origin "$O_N$" (step S402).

Then, the information processing system 1 extends the voice recognition timeout time "$t_r$" by the time proportional to the voice speech influence level "$E_u$" (step S403). Furthermore, the information processing system 1 extends the session timeout time "$t_s$" by the time proportional to the voice speech influence level "$E_u$" (step S404). Then, the information processing system 1 performs the processing of step S405 illustrated in Fig. 13. As described above, the example of Figs. 12A, 12B, and 13 illustrates the case where the information processing system 1 extends the timeout time as the voice interaction control as an example.

Furthermore, in the case where the respiratory state vector "$H_v$" of the respiration does not fall outside the normal range "$R_N$" (step S401: No), the information processing system 1 executes the processing of step S405 illustrated in Fig. 13 without performing the processing of steps S402 to S404. For example, in the case where the respiratory state vector "$H_v$" of the respiration falls within the normal range "$R_N$", the information processing system 1 executes the processing of step S405 illustrated in Fig. 13 without performing the processing of steps S402 to S404.

As illustrated in Fig. 13, the information processing system 1 determines whether or not the condition that the depth "$d_b$" of the respiratory state vector "$H_v$" is equal to or less than the depth "$d_0$" at the time of normal respiration or the frequency "$f_b$" is equal to or less than the frequency "$f_0$" at the time of normal respiration is satisfied (step S405). The information processing system 1 executes the processing of step S407 without performing the processing of step S406 in the case where the condition that the depth "$d_b$" of the respiratory state vector "$H_v$" is equal to or less than the depth "$d_0$" at the time of normal respiration or the frequency "$f_b$" is equal to or less than the frequency "$f_0$" at the time of normal respiration is not satisfied (step S405: No). For example, the information processing system 1 executes the processing of step S407 without performing the processing of step S406 in the case where the depth "$d_b$" of the respiratory state vector "$H_v$" is not equal to or less than the depth "$d_0$" of the normal respiration origin "$O_N$" or the frequency "$f_b$" is not equal to or less than the frequency "$f_0$" of the normal respiration origin "$O_N$".

Meanwhile, the information processing system 1 determines whether or not the speed "$v_b$" of the respiratory state vector "$H_v$" is smaller than the threshold "$v_f$" (step S406) in the case where the condition that the depth "$d_b$" of the respiratory state vector "$H_v$" is equal to or less than the depth "$d_0$" at the time of normal respiration or the frequency "$f_b$" is equal to or less than the frequency "$f_0$" at the time of normal respiration (step S405: Yes).

The information processing system 1 determines whether or not the condition that the depth "$d_b$" of the respiratory state vector "$H_v$" is equal or larger than the depth "$d_0$" at the time of normal respiration or the frequency "$f_b$" is equal to or larger than the frequency "$f_0$" at the time of normal respiration is satisfied (step S407) in the case where the speed "$v_b$" of the respiratory state vector "$H_v$" is smaller than the threshold "$v_f$" (step S406: Yes).

The information processing system 1 executes the processing of step S409 without performing the processing of step S408 in the case where the condition that the depth "$d_b$" of the respiratory state vector "$H_v$" is equal or larger

than the depth "$d_0$" at the time of normal respiration or the frequency "$f_b$" is equal to or larger than the frequency "$f_0$" at the time of normal respiration is not satisfied (step S407: No). For example, the information processing system 1 executes the processing of step S409 without performing the processing of step S408 in the case where the depth "$d_b$" of the respiratory state vector "$H_v$" is not equal or larger than the depth "$d_0$" of the normal respiration origin "$O_N$" or the frequency "$f_b$" is not equal to or larger than the frequency "$f_0$" of the normal respiration origin "$O_N$".

Meanwhile, the information processing system 1 determines whether or not the speed "$v_b$" of the respiratory state vector "$H_v$" is larger than the threshold "$v_s$" (step S408) in the case where the condition that the depth "$d_b$" of the respiratory state vector "$H_v$" is equal or larger than the depth "$d_0$" at the time of normal respiration or the frequency "$f_b$" is equal to or larger than the frequency "$f_0$" at the time of normal respiration (step S407: Yes).

The information processing system 1 performs the processing of step S409 in the case where the speed "$v_b$" of the respiratory state vector "$H_v$" is larger than the threshold "$v_s$" (step S408: Yes).

The information processing system 1 determines whether or not the session timeout time "$t_s$" has elapsed without a speech or the voice recognition timeout time "$t_r$" has elapsed with a speech (step S409). For example, the information processing system 1 determines whether or not a condition (hereinafter also referred to as "speech end determination condition" that the session timeout time "$t_s$" has elapsed without a speech or the voice recognition timeout time "$t_r$" has elapsed with a speech is satisfied.

Furthermore, the information processing system 1 performs the processing of step S410 in the case where the condition that the session timeout time "$t_s$" has elapsed without a speech or the voice recognition timeout time "$t_r$" has elapsed with a speech is not satisfied (step S409: No). The information processing system 1 performs the processing of step S410 in the case where the speech end determination condition is not satisfied. For example, the information processing system 1 executes the processing of step S410 in the case where the session timeout time "$t_s$" has not elapsed without a speech or the voice recognition timeout time "$t_r$" has not elapsed with a speech.

The information processing system 1 waits for the short span time "$T_s$" and waits for update of the respiratory state vector "$H_v$" (step S410). Thereafter, the information processing system 1 returns to step S405 and repeats the processing.

Furthermore, the information processing system 1 waits until the speed "$v_b$" becomes smaller than the threshold "$v_f$" (step S411) in the case where the speed "$v_b$" of the respiratory state vector "$H_v$" is not smaller than threshold "$v_f$" (step S406: No). The information processing system 1 waits until the speed "$v_b$" becomes smaller than the threshold "$v_f$" in the case where the speed "$v_b$" of the respiratory state vector "$H_v$" is equal to or larger than the threshold "$v_f$". Thereafter, the information processing system 1 returns to step S401 in Fig. 12A and repeats the processing.

Furthermore, the information processing system 1 waits until the speed "$v_b$" becomes larger than the threshold "$v_s$" (step S412) in the case where the speed "$v_b$" of the respiratory state vector "$H_v$" is not larger than threshold "$v_s$" (step S408: No). The information processing system 1 waits until the speed "$v_b$" becomes larger than the threshold "$v_s$" in the case where the speed "$v_b$" of the respiratory state vector "$H_v$" is equal to or smaller than the threshold "$v_s$". Thereafter, the information processing system 1 returns to step S401 in Fig. 12A and repeats the processing.

Furthermore, the information processing system 1 performs the processing of step S413 in Fig. 12A in the case where the condition that the session timeout time "$t_s$" has elapsed without a speech or the voice recognition timeout time "$t_r$" has elapsed with a speech is satisfied (step S409: Yes). The information processing system 1 performs the processing of step S413 in Fig. 12A in the case where the speech end determination condition is satisfied.

The information processing system 1 determines whether or not the user has not spoken within the session timeout time "$t_s$" (step S413). In a case where the user has not spoken within the time of the session timeout time "$t_s$" (step S413: No), the information processing system 1 terminates the processing.

On the other hand, in a case where the user has spoken within the session timeout time "$t_s$" (step S413: Yes), the information processing system 1 determines whether or not the result of intent understanding (Intent) of the user speech is interpretable (step S414). For example, the information processing system 1 determines whether or not the result of intent understanding (Intent) of the user speech is not OOD.

In the case where the result of intent understanding (Intent) of the user speech is interpretable (step S414: Yes), the information processing system 1 determines whether or not an interaction scenario of the voice interaction session has been completed (step S415). For example, in a case where the result of intent understanding (Intent) of the user speech is other than OOD, the information processing system 1 performs the processing of step S415.

In a case where the interaction scenario of the voice interaction session has been completed (step S415: Yes), the information processing system 1 terminates the processing.

On the other hand, in a case where the interaction scenario of the voice interaction session has not been completed (step S415: No), the information processing system 1 returns to step S401 and repeats the processing.

Furthermore, in the case where the result (Intent) of intent understanding of the user speech is not interpretable (step S414: No), the information processing system 1 determines whether or not the respiratory state vector "$H_v$" of the respiration falls outside the normal range "$R_N$" as illustrated in Fig. 12B (step S416). For example, in a case where the result of intent understanding (Intent) of the user speech is OOD, the information processing system 1 performs the processing of step S416 in Fig. 12B.

As illustrated in Fig. 12B, the information processing system 1 determines whether or not respiratory state vector "$H_v$" of the respiration falls outside the normal range "$R_N$" (step S416). The information processing system 1 saves the state of the voice interaction session (step S417) in the case where the respiratory state vector "$H_v$" of the respiration falls outside the normal range "$R_N$" (step S416: Yes). Then, the information processing system 1 interrupts the voice interaction session (step S418).

Then, the information processing system 1 determines whether or not the respiratory state vector "$H_v$" of the respiration does not fall within the normal range "$R_N$" (step S419). That is, the information processing system 1 determines whether or not respiratory state vector "$H_v$" of the respiration falls outside the normal range "$R_N$".

The information processing system 1 repeats the processing of step S419 in the case where the respiratory state vector "$H_v$" of the respiration does not fall within the normal range "$R_N$" (step S419: No). For example, the information processing system 1 waits until the respiratory state vector "$H_v$" of the respiration falls within the normal range "$R_N$", that is, the respiration of the user calms down in the case where the respiratory state vector "$H_v$" of the respiration does not fall within the normal range "$R_N$".

The information processing system 1 resumes the voice interaction session from the saved state (step S420) in the case where the respiratory state vector "$H_v$" of the respiration falls within the normal range "$R_N$" (step S419: Yes). Then, the information processing system 1 executes the processing of step S413 in Fig. 12A.

On the other hand, in the case where the respiratory state vector "$H_v$" of the respiration does not fall outside the normal range "$R_N$" (step S416: No), the information processing system 1 performs the system speech of rehearing the speech in which the user's Intent is OOD (step S421). For example, in the case where the respiratory state vector "$H_v$" of the respiration falls within the normal range "$R_N$", that is, in the case where the user's respiration is calm, the information processing system 1 performs the rehearing speech (for example, "Please say that again" or the like) with respect to the speech in which the user's speech intent is uninterpretable. Then, the information processing system 1 executes the processing of step S413.

[2-3-1. Effects and the Like]

For example, as examples of the respiratory state in which the voice speech becomes difficult due to out of breath by exercise include a case where the respiration becomes shallow due to tension, stress, concentration, or the like, a case of arrested respiration or hyperventilation, a case where the frequency of respiration decreases due to drowsiness, a case of respiratory physiological phenomena such as cough and sneeze, and a case where short-term respiration stops (becomes shallow) due to surprise or strain. The information processing system 1 enables a plurality of speeches of the user to be appropriately concatenated by the above-described processing even in such a case.

Furthermore, the information processing system 1 resumes the interaction session after the respiration is recovered to a normal voice recognition rate when the voice recognition rate due to out of breath is lowered (at the time of OOD speech) by the above-described processing. Therefore, the information processing system 1 can suppress unnecessary restatement such as when the user is out of breath and the voice recognition cannot be performed. Furthermore, the information processing system 1 exhibits effects other than out of breath due to exercise. For example, the information processing system 1 can obtain similar effects to those in the case of out of breath due to exercise even in a situation where it is difficult to speak due to physiological phenomena such as tension/stress, concentration/arrested respiration, hyperventilation, drowsiness, cough and sneeze, or surprise/strain by the voice interaction control using a generalized respiratory state vector.

[2-4. Relationship Example Between Respiratory State and Voice Interaction Control]

Here, a relationship between the respiratory state of the user and the voice interaction control of the information processing system 1 will be described with reference to Fig. 14. Fig. 14 is a diagram illustrating an example of a relationship between the respiratory state and the voice interaction control. For example, Fig. 14 illustrates an influence of the instantaneous speed of the respiration "$v_b$" on the voice speech and an interaction control method.

The table illustrated in Fig. 14 illustrates examples of state/behavior of the user affecting the speech and the interaction control, corresponding to the observed respiratory state including the depth "$d_b$", the frequency "$f_b$", the short-term speed "$v_b$" of the respiration of the user, and the like.

For example, in a case where the depth "$d_b$", the frequency "$f_b$", and the short-term speed "$v_b$" are all normal, the case indicates that the user's state/behavior is estimated to be able to make a normal speech in a calm state. Furthermore, as the interaction control in this case, the voice recognition timeout time "$t_r$" during the speech and the session timeout time "$t_s$" before the speech are controlled with priority given to response.

Furthermore, the case indicates that (normal) control is performed assuming that the processing after the OOD speech is not caused by the respiration. In a case where at least one of the depth "$d_b$", the frequency "$f_b$", or the short-term speed "$v_b$" is not normal, the case indicates that control to resume the interaction is performed when the respiratory state vector "$H_v$" falls within the normal range "$R_N$" for the processing after the OOD speech.

For example, in a case where the depth "$d_b$" is deep, the frequency "$f_b$" is high, and the short-term speed "$v_b$" is fast, the case indicates that the user's state/behavior is estimated to be out of breath or hyperventilation. Furthermore, as the interaction control in this case, the voice recognition timeout time "$t_r$" during the speech and the session timeout time "$t_s$" before the speech are extended in proportion to the voice speech influence level "$E_u$".

For example, in a case where the depth "$d_b$" is deep or normal, the frequency "$f_b$" is high or normal, and the short-term speed "$v_b$" is (instantaneously) fast, the case indicates that the user's state/behavior is estimated to be a respiratory physiological phenomenon such as cough, sneezing, yawning, or sighing. Furthermore, as the interaction control in this case, the voice recognition timeout time "$t_r$" during the speech and the session timeout time "$t_s$" before the speech are extended in proportion to the voice speech influence level "$E_u$". Furthermore, in this case, the voice recognition timeout time "$t_r$" during the speech and the session timeout time "$t_s$" before the speech are extended by a period in which the speed "$v_b$" is equal to or larger than the threshold "$v_f$". For example, the voice recognition timeout time "$t_r$" during the speech and the session timeout time "$t_s$" before the speech are extended during a period in which the speed "$v_b$" is equal to or larger than the threshold "$v_f$".

For example, in a case where the depth "$d_b$" is shallow, the frequency "$f_b$" is low, and the short-term speed "$v_b$" is slow, the case indicates that the user's state/behavior is estimated to be focused or arrested respiration. Furthermore, as the interaction control in this case, the voice recognition timeout time "$t_r$" during the speech and the session timeout time "$t_s$" before the speech are extended in proportion to the voice speech influence level "$E_u$".

For example, in a case where the depth "$d_b$" is shallow or normal, the frequency "$f_b$" is low or normal, and the short-term speed "$v_b$" is (instantaneously) slow, it indicates that the user's state/behavior is estimated to hold his/her breath or allow breath to become shallow due to surprise or strain. Furthermore, as the interaction control in this case, the voice recognition timeout time "$t_r$" during the speech and the session timeout time "$t_s$" before the speech are extended in proportion to the voice speech influence level "$E_u$". Furthermore, in this case, the voice recognition timeout time "$t_r$" during the speech and the session timeout time "$t_s$" before the speech are extended by a period in which the speed "$v_b$" is equal to or smaller than the threshold "$v_s$". For example, the voice recognition timeout time "$t_r$" during the speech and the session timeout time "$t_s$" before the speech are extended during a period in which the speed "$v_b$" is equal to or smaller than the threshold "$v_s$".

[3. Configuration and Processing of Information Processing System]

From here, the configuration and processing of the information processing system will be described below with reference to Figs. 15 to 23B. Note that the points to be described below may be applied to either the information processing system 1 according to the first embodiment or the information processing system 1 according to the second embodiment.

[3-1. Functional Configuration Example of Information Processing System]

Fig. 15 is a diagram illustrating a functional configuration example of the information processing system. In Fig. 15, the left side of the broken line BS corresponds to components on the terminal device 10 side, and the right side of the broken line BS corresponds to components on the server device 100 side. The broken line BS indicates an example of allocation of functions between the terminal device 10 and the server device 100 in the information processing system 1. In Fig. 15, each component illustrated on the left side of the broken line BS is implemented by the terminal device 10. Furthermore, in Fig. 15, each component illustrated on the right side of the broken line BS in Fig. 15 is implemented by the server device 100. Note that a boundary (interface) of a device configuration in the information processing system 1 is not limited to the broken line BS, and the functions allocated to the terminal device 10 and the server device 100 may be any combination.

In the information processing system 1, a user's speech voice is input to the system through a voice input device such as a microphone, and a speech section is detected by voice activity detection (VAD). In the information processing system 1, a signal detected as a speech section by the VAD undergoes automatic speech recognition (ASR) processing and converted into a text. In the information processing system 1, a speech intent (Intent) and attribute information (Entity) to be a speech target of the user speech converted into the text are estimated by semantic understanding processing (NLU) and input to the voice interaction session control. In the information processing system 1, in a case where the speech intent is uninterpretable in NLU, Intent is input to the voice interaction session control as out of domain (OOD) .

In the information processing system 1, the respiration of the user is observed as a displacement value of a respiration amount by the respiration sensor. In the information processing system 1, the respiratory state is detected from the observed displacement value of the respiration amount by the respiratory state detection, and is input to the voice interaction session control. In the information processing system 1 of Fig. 15, a degree of roughness "$H_b$" and the

respiratory state vector "$H_v$" are input to the voice interaction session control.

In the information processing system 1, a user speech text from ASR is also input to the voice interaction session control. In the voice interaction session control in the information processing system 1, a plurality of user speech texts is concatenated according to the respiratory state, and is input to NLU as a concatenated speech text. In the voice interaction session control in the information processing system 1 of Fig. 15, a plurality of user speech texts is concatenated according to the degree of roughness "$H_b$" and the respiratory state vector "$H_v$", and is input to NLU as the concatenated speech text.

In NLU in the information processing system 1, Intent and Entity are estimated for the concatenated speech text input from the voice interaction session control in addition to a user speech text input from ASR, and Intent and Entity are input to the voice interaction session control.

In the voice interaction session control in the information processing system 1, the silent timeout time of the voice recognition speech end determination and the voice interaction session end determination, and the interruption/resumption of the voice interaction session are controlled on the basis of the input respiratory state of the user and Intent and Entity of the speech. In the information processing system 1, response generation generates a system speech text in accordance with an instruction from voice interaction session control. In the information processing system 1, the system speech text undergoes voice synthesis processing and synthesized into a system speech voice signal, and then spoken to the user by voice through an output device such as a speaker. Note that the above is an example, and the information processing system 1 may implement each function by various configurations.

[3-2. Respiratory State Vector]

Next, points related to processing using the respiratory state vector will be described with reference to Figs. 16 to 21C.

[3-2-1. Example of Observation Target Time in Respiratory State Vector Detection]

Fig. 16 is a diagram illustrating an example of an observation target time in respiratory state vector detection. Fig. 16 illustrates an observation target time in the respiratory state vector detection. In Fig. 16, calculation of four respiratory state vectors "$H_v$" is illustrated as $H_v$ calculation #1 to #4. The bar corresponding to each of the $H_v$ calculations #1 to #4 indicates a sample to be observed corresponding to each calculation in an abstract manner.

As illustrated in Fig. 16, each of the $H_v$ calculation #1 to #4 is continuously performed while being shifted by the short span time $T_s$. That is, the information processing system 1 repeats the calculation of the respiratory state vector "$H_v$" in the cycle of the short span time $T_s$. The long span time $T_l$, "$n_l$", and "$n_s$" in Fig. 16 are similar to those described above, and thus description thereof is omitted.

As illustrated in Fig. 16, the respiratory state vector "$H_v$" is calculated for each short span time $T_s$ (the number of observation samples $n_s$). In this manner, the number of observation samples $n_l$ of the long span time $T_l$ is calculated in an overlapping manner for $n_l$ - $n_s$ samples.

[3-2-2. Example of Observation Value in Respiratory State Vector Detection]

Fig. 17 is a diagram illustrating an example of observation values in the respiratory state vector detection. A graph GR1 in Fig. 17 illustrates an example of various observation values in a certain long span time $T_l$. In Fig. 17, the average observation value "Sm" is illustrated by a solid line extending in a horizontal direction within the long span time $T_l$.

Furthermore, each of observed peak values "$S_{p1}$" to "$S_{p7}$" indicates a peak observation value of a maximum value or a minimum value between intersections and "$S_m$". An arrow extending in a vertical direction from the average observation value "Sm" toward the maximum value or the minimum value of the waveform indicates a term of "$S_{pi}$ - $S_m$" that is a target for calculating RMS by the above equation (9). Furthermore, in Fig. 17, since the number of observed peak values is seven observed peak values "$S_{p1}$" to "$S_{p7}$", the number of peaks "$N_{lp}$" is 7. For example, the information processing system 1 calculates an average of peak absolute values in the $n_l$ sample in the most recent long span time $T_l$ as the depth of the respiration. The information processing system 1 calculates the respiratory state vector "$H_v$" using such respiration information of the user.

[3-2-3. Example of Normal Range by Long Span Time Observation Element]

Fig. 18 is a diagram illustrating an example of the normal range by long span time observation elements. Fig. 18 illustrates a case where a right-left direction (horizontal direction) is an axis corresponding to the depth "$d_b$" and tan up-down direction (vertical direction) is an axis corresponding to the frequency "$f_b$".

Note that a depth direction of the paper surface of Fig. 18 is an axis corresponding to the speed "$v_b$". That is, Fig. 18 illustrates a cross-sectional view in a case where a three-dimensional space having the depth "$d_b$", the frequency "$f_b$", and the speed "$v_b$" as axes is viewed from an axial direction (depth direction) corresponding to the speed "$v_b$". For example, Fig. 18 illustrates a cross section at a position where the speed "$v_b$" is speed "$v_0$". Fig. 18 illustrates an example of definition of the normal range "$R_N$" by the long span time observation elements (the depth "$d_b$" and the frequency "$f_b$") of the respiratory state vector "$H_v$".

A central portion in Fig. 18 is a range corresponding to the normal range "$R_N$". The normal range "$R_N$" corresponds to the normal state of the user. For example, the normal range "$R_N$" corresponds to the state in which the user can speak as usual. Furthermore, in a case where the depth "$d_b$" and the frequency "$f_b$" are large, the case indicates that the user is exercising or in a hyperventilated state, the user cannot speak due to out of breath, the speak is interrupted, and the like. Furthermore, in a case where the depth "$d_b$" and the frequency "$f_b$" are small, the case indicates that the user is in a state of tension or stress, the voice becomes small, the voice tends to be muffled, it is difficult to hear what the user is saying, and the like.

Furthermore, in a case where the depth "$d_b$" and the frequency "$f_b$" are small, the case indicates that the user is in a state of concentration or arrested respiration, attention is not directed, the power of concentration itself is reduced, and the like. Furthermore, in a case where the depth "$d_b$" is large and the frequency "$f_b$" is small, the case indicates a drowsiness or sleep state, which is a suitable state for speech, but if it goes too far, it becomes difficult to speak due to drowsiness.

[3-2-4. Example of Relationship Between Each Element of Respiratory State Vector and Respiratory State of User]

Next, examples of a relationship between each element of the respiratory state vector and the respiratory state of the user will be described with reference to Figs. 19A to 21C. For example, Figs. 19A to 21C illustrate points related to short span time observation elements.

[3-2-4-1. Example of Relationship With Speed]

First, a relationship with speed will be described with reference to Figs. 19A to 19C. Figs. 19A to 19C are diagrams illustrating examples of the relationship between each element of the respiratory state vector and the respiratory state of the user. Figs. 19A to 19C illustrate cross sections orthogonal to the speed "$v_b$" (the depth of the paper surface) direction in Fig. 18.

Fig. 19A illustrates definition of the normal range "$R_N$" by the short span time observation element (the speed "$v_b$") of the respiratory state vector "$H_v$" in the case where the speed "$v_b$" is slow. That is, Fig. 19A illustrates a cross section on a front side of the paper surface of Fig. 18. The cross section illustrated in Fig. 19A includes an area (for example, the first, second, fourth quadrants, and the like) indicating that the user has held his/her breath due to surprise, strain, or the like or the breath has become shallow, and an area (for example, the third quadrant and the like) indistinguishable from the state of concentration or arrested respiration.

The information processing system 1 can estimate that the user has held his/her breath or the breath has become shallow due to surprise, strength, or the like when the instantaneous respiration speed becomes slow (becomes equal to or less than the threshold "$v_s$"). Note that the range of $f_b < f_0$ and $d_b < d_0$ is an area indistinguishable from concentration/arrested respiration.

Fig. 19B illustrates definition of the normal range "$R_N$" by the short span time observation element (the speed "$v_b$") of the respiratory state vector "$H_v$" in the case where the speed "$v_b$" is normal. That is, Fig. 19B illustrates a cross section on the paper surface of Fig. 18. In the cross section illustrated in Fig. 19B, the same similarly applies to Fig. 18 when the instantaneous respiration speed is normal.

Fig. 19C illustrates definition of the normal range "$R_N$" by the short span time observation element (the speed "$v_b$") of the respiratory state vector "$H_v$" in the case where the speed "$v_b$" is fast. That is, Fig. 19C illustrates a cross section on a depth side of the paper surface of Fig. 18. The cross section illustrated in Fig. 19C includes an area (for example, the second, third, fourth quadrants, and the like) indicating a physiological phenomenon of the respiratory organ such as cough, sneezing, or hiccup, and an area (for example, the first quadrant and the like) indistinguishable from the state during exercise or hyperventilation.

The information processing system 1 can estimate that it is a physiological phenomenon such as cough, sneezing, hiccup, yawning, or sighing when the instantaneous respiration speed increases (when the instantaneous respiration speed becomes equal to or larger than the threshold "$v_f$") Note that the range of $f_b > f_0$ and $d_b > d_0$ is an area indistinguishable from during exercise and hyperventilation.

[3-2-4-2. Example of Relationship With Frequency]

Second, a relationship with frequency will be described with reference to Figs. 20A to 20C. Figs. 20A to 20C are diagrams illustrating an example of a relationship between each element of a respiratory state vector and a respiratory state of a user. Figs. 20A to 20C illustrate cross sections orthogonal to the frequency "$f_b$" direction in Fig. 18. That is, Figs. 20A to 20C illustrate cross sections in a case where Fig. 18 is viewed from the vertical direction (up-down direction).

Fig. 20A illustrates definition of the normal range "$R_N$" by the short span time observation element (the frequency "$f_b$") of the respiratory state vector "$H_v$" in the case where the frequency "$f_b$" is low. That is, Fig. 20A illustrates a cross section at a position where the frequency is smaller than the frequency "$f_0$" of the axis of the frequency "$f_b$".

The information processing system 1 can estimate that it is a physiological phenomenon such as cough, sneezing, hiccup, yawning, or sighing when the instantaneous respiration speed becomes $v_b \geq v_f$ in the cross section illustrated in Fig. 20A. Furthermore, in the cross section illustrated in Fig. 20A, the information processing system 1 can estimate that the user has held his/her breath due to surprise, strain, or the like or the breath has become shallow when $v_b \leq v_s$ is satisfied except for the direction of concentration/arrested respiration ($d_b < d_0$).

Fig. 20B illustrates definition of the normal range "$R_N$" by the short span time observation element (the frequency "$f_b$") of the respiratory state vector "$H_v$" in the case where the frequency "$f_b$" is normal. That is, Fig. 20A illustrates a cross section at a position where the frequency "$f_b$" is the frequency "$f_0$".

The information processing system 1 can estimate that it is a physiological phenomenon such as cough, sneezing, hiccup, yawning, or sighing when the instantaneous respiration speed becomes $v_b \geq v_f$ in the cross section illustrated in Fig. 20B. Furthermore, in the cross section illustrated in Fig. 20B, the information processing system 1 can estimate that the user has held his/her breath due to surprise, strain, or the like or the breath has become shallow when $v_b \leq v_s$ is satisfied.

Fig. 20C illustrates definition of the normal range "$R_N$" by the short span time observation element (the frequency "$f_b$") of the respiratory state vector "$H_v$" in the case where the frequency "$f_b$" is high. That is, Fig. 20C illustrates a cross section at a position where the frequency is larger than the frequency "$f_0$" of the axis of the frequency "$f_b$".

The information processing system 1 can estimate that it is a physiological phenomenon such as cough, sneezing, hiccup, yawning, or sighing when the instantaneous respiration speed becomes $v_b \geq v_f$ except for the direction of exercise and hyperventilation ($d_b > d_0$) in the cross section illustrated in Fig. 20C. Furthermore, in the cross section illustrated in Fig. 20C, the information processing system 1 can estimate that the user has held his/her breath due to surprise, strain, or the like or the breath has become shallow when $v_b \leq v_s$ is satisfied.

[3-2-4-3. Example of Relationship With Depth]

Next, a relationship with depth will be described with reference to Figs. 21A to 21C. Figs. 21A to 21C are diagrams illustrating an example of a relationship between each element of a respiratory state vector and a respiratory state of a user. Figs. 21A to 21C illustrate cross sections orthogonal to the depth "$d_b$" direction of Fig. 18. That is, Figs. 21A to 21C illustrate cross sections in a case where Fig. 18 is viewed from the horizontal direction (right-left direction).

Fig. 21A illustrates definition of the normal range "$R_N$" by the short span time observation element (the depth "$d_b$") of the respiratory state vector "$H_v$" in the case where the depth "$d_b$" is shallow. That is, Fig. 21A illustrates a cross section at a position where the depth is smaller than the depth "$d_0$" of the axis of the depth "$d_b$".

The information processing system 1 can estimate that it is a physiological phenomenon such as cough, sneezing, hiccup, yawning, or sighing when the instantaneous respiration speed becomes $v_b \geq v_f$ in the cross section illustrated in Fig. 21A. Furthermore, in the cross section illustrated in Fig. 21A, the information processing system 1 can estimate that the user has held his/her breath due to surprise, strain, or the like or the breath has become shallow when $v_b \leq v_s$ is satisfied except for the direction of concentration/arrested respiration ($f_b < f_0$).

Fig. 21B illustrates definition of the normal range "$R_N$" by the short span time observation element (the depth "$d_b$") of the respiratory state vector "$H_v$" in the case where the depth "$d_b$" is normal. That is, Fig. 21A illustrates a cross section at a position where the depth "$d_b$" is the depth "$d_0$".

The information processing system 1 can estimate that it is a physiological phenomenon such as cough, sneezing, hiccup, yawning, or sighing when the instantaneous respiration speed becomes $v_b \geq v_f$ in the cross section illustrated in Fig. 21B. Furthermore, in the cross section illustrated in Fig. 21B, the information processing system 1 can estimate that the user has held his/her breath due to surprise, strain, or the like or the breath has become shallow when $v_b \leq v_s$ is satisfied.

Fig. 21C illustrates definition of the normal range "$R_N$" by the short span time observation element (the depth "$d_b$") of the respiratory state vector "$H_v$" in the case where the depth "$d_b$" is deep. That is, Fig. 21C illustrates a cross section at a position where the depth is larger than the depth "$d_0$" of the axis of the depth "$d_b$".

The information processing system 1 can estimate that it is a physiological phenomenon such as cough, sneezing, hiccup, yawning, or sighing when the instantaneous respiration speed becomes $v_b \geq v_f$ except for the direction of exercise and hyperventilation ($f_b > f_0$) in the cross section illustrated in Fig. 21C. Furthermore, in the cross section illustrated in Fig. 21C, the information processing system 1 can estimate that the user has held his/her breath due to surprise, strain, or the like or the breath has become shallow when $v_b \leq v_s$ is satisfied.

[3-3. Processing Example 1]

Next, an example of processing will be described with reference to Figs. 22A and 22B. Note that, in Figs. 22A and 22B, either the degree of roughness "$H_b$" or the respiratory state vector "$H_v$" may be used to estimate the respiratory state of the user. Note that, in Figs. 22A and 22B, description of points similar to those in Figs. 1 and 9 is omitted.

[3-3-1. Processing Example in Normal Times]

First, an example of processing in normal times will be described with reference to Fig. 22A. Fig. 22A is a diagram illustrating an example of processing in normal times. For example, Fig. 22A illustrates an example of a case where the degree of roughness "$H_b$" is less than the specified threshold "$H_{th}$" or the respiratory state vector "$H_v$" is within the normal range "$R_N$". That is, Fig. 22A illustrates a case where the silent timeout times "$t_r$" and "$t_s$" are not extended.

In Fig. 22A, the information processing system 1 performs a system output of "A message has arrived from Mr. oo. Shall I read out?". In response to the system output, the user U1 speaks "Read out" before the silent timeout time "$t_s$" elapses, which is the interaction session timeout time, after the end of the system output. Then, after the voice recognition timeout time "$t_r$" has elapsed, the information processing system 1 executes the processing such as the voice recognition. The information processing system 1 recognizes (estimates) Intent indicating the speech intent of the user U1 as "ReadOut".

Then, the information processing system 1 outputs the message of Mr. oo to the user U1 according to the result of the voice recognition. In Fig. 22A, the information processing system 1 outputs the message of Mr. oo "Can you come here right now?" to the user U1 by voice. Then, the information processing system 1 makes a speech of "Would you like to reply?".

In response to the system output, the user U1 speaks "reply" before the silent timeout time "$t_s$" elapses, which is the interaction session timeout time, after the end of the system output. Then, after the voice recognition timeout time "$t_r$" has elapsed, the information processing system 1 executes the processing such as the voice recognition. The information processing system 1 recognizes (estimates) Intent indicating speech intent of the user U1 as "Reply".

Then, the information processing system 1 makes a speech according to the result of the voice recognition. In Fig. 22A, the information processing system 1 makes a speech of "Give me a reply message, please".

In response to the system output, the user U1 makes a speech of "It's not possible right now" before the silent timeout time "$t_s$" elapses, which is the interaction session timeout time, after the end of the system output. Then, after the voice recognition timeout time "$t_r$" has elapsed, the information processing system 1 determines (estimates) "Dictation End". For example, the information processing system 1 transmits textual information of "It's not possible right now" to the terminal device 10 of Mr. oo.

Then, the information processing system 1 makes a speech in accordance with the processing. In Fig. 22A, the information processing system 1 makes a speech of "replied".

As described above, in the information processing system 1 does not extend the timeout time of the voice recognition and the interaction session when the user's respiration is normal. Therefore, the information processing system 1 can perform a response speech without causing an unnecessary waiting time after the user speech. Thereby, the information processing system 1 can provide a service without impairing existing interaction response performance in normal times.

[3-3-2. Processing Example During Exercise]

Next, an example of processing during exercise will be described with reference to Fig. 22B. Fig. 22B is a diagram illustrating an example of processing during exercise. For example, Fig. 22B is a diagram illustrating an example of processing while the user U1 is moving (exercising) by pedaling a bicycle. For example, Fig. 22B illustrates an example of a case where the degree of roughness "$H_b$" is equal to or larger than the specified threshold "$H_{th}$" or the respiratory state vector "$H_v$" falls outside the normal range "$R_N$". That is, Fig. 22B illustrates a case where the silent timeout times "$t_r$" and "$t_s$" are extended.

In Fig. 22B, the information processing system 1 performs a system output of "A message has arrived from Mr. oo. Shall I read out?". In response to the system output, the user U1 speaks "read" before the extended silent timeout time "$t_s$" elapses after the end of the system output, and speaks "out" before the extended silent timeout time "$t_r$" elapses. In this case, the speech of "read" corresponds to the first speech, and the speech of "out" corresponds to the second speech.

Here, the information processing system 1 extends the silent timeout time "$t_r$", which is the voice recognition timeout time, to be longer as the voice speech influence level "$E_u$" is larger. Thereby, even in the user's speech that is interrupted due to out of breath, the silent timeout time "$t_r$" that is the voice recognition timeout time is extended by the time according to the value of the voice speech influence level "$E_u$". Therefore, the information processing system 1 can accept even a plurality of discontinuous and intermittent speeches as one speech.

Then, after the voice recognition timeout time "$t_r$" has elapsed, the information processing system 1 executes the processing such as the voice recognition. The information processing system 1 executes the processing such as the voice recognition using "read out" in which the speech of "read" of the user U1 and the speech of "up" of the user U1 are concatenated as one speech. Then, the information processing system 1 recognizes (estimates) Intent indicating speech intent of the user U1 as "ReadOut".

Then, the information processing system 1 outputs the message of Mr. oo to the user U1 according to the result of the voice recognition. In Fig. 22B, the information processing system 1 outputs a message of Mr. oo to the user U1 "Can you come here right now?" by voice. Then, the information processing system 1 makes a speech of "Would you like to reply?".

Meanwhile, in Fig. 22B, since the user U1 is exercising and is out of breath, the user cannot respond for a while.

Here, the information processing system 1 extends the silent timeout time "$t_s$", which is the interaction session timeout time, to be longer as the voice speech influence level "$E_u$" is larger. Thereby, even in the case where the user cannot start a speech as desired due to out of breath, the silent timeout time "$t_s$" that is the interaction session timeout time is extended by the time according to the value of the voice speech influence level "$E_u$". Therefore, the information processing system 1 can suppress the end of the interactive session in the case where the user cannot start the speech as desired due to out of breath, and can accept the user's speech in the session.

In Fig. 22B, the user U1 speaks "reply" before the extended silent timeout time "$t_s$" elapses after the end of the system output, and speaks "please" before the extended silent timeout time "$t_r$" elapses. In this case, the speech of "reply" corresponds to the first speech, and the speech of "please" corresponds to the second speech.

Then, after the voice recognition timeout time "$t_r$" has elapsed, the information processing system 1 executes the processing such as the voice recognition. The information processing system 1 executes the processing such as the voice recognition using "reply please" in which the speech of "reply" of the user U1 and the speech of "please" of the user U1 are concatenated as one speech. The information processing system 1 recognizes (estimates) Intent indicating speech intent of the user U1 as "Reply".

Then, the information processing system 1 makes a speech according to the result of the voice recognition. In Fig. 22B, the information processing system 1 makes a speech of "Give me a reply message, please".

In response to the system output, the user U1 speaks "It's" before the silent timeout time "$t_s$" elapses, which is the interaction session timeout time, after the end of the system output, and speaks "not possible" before the extended silent timeout time "$t_r$" elapses. Then, the user U1 speaks "right" before the extended silent timeout time "$t_r$" elapses, and speaks "now" before the extended silent timeout time "$t_r$" elapses. In this case, the speech "It's" corresponds to the first speech, the speech "not possible" corresponds to the second speech, the speech "right" corresponds to the third speech, and the speech "now" corresponds to the fourth speech. Note that the speech "right" is the second speech for the speech "not possible". Furthermore, "now" is the third speech for the speech "not possible", and is a second speech for the speech "right".

Then, after the voice recognition timeout time "$t_r$" has elapsed, the information processing system 1 determines (estimates) "Dictation End". The information processing system 1 transmits, to the terminal device 10 of Mr. oo, textual information of "It's not possible right now" in which the speech of "Its", the speech of "not possible", the speech of "right", and the speech of "now" by the user U1 are concatenated into one speech.

As described above, since the voice recognition timeout time "$t_r$" is similarly extended at the time of dictating a free speech (Dictation), the information processing system 1 can prevent the message input from being terminated at an unintended position in the middle of the message input due to the interrupted speech.

Then, the information processing system 1 makes a speech in accordance with the processing. For example, the information processing system 1 makes a speech of "replied".

[3-4. Processing Example 2]

Next, an example of another processing will be described with reference to Figs. 23A and 23B. Note that, in Figs. 23A and 23B, either the degree of roughness "$H_b$" or the respiratory state vector "$H_v$" may be used to estimate the respiratory state of the user. For example, Figs. 23A and 23B are diagrams illustrating an example of processing while the user U1 is moving by riding a bicycle. Note that, in Figs. 23A and 23B, description of points similar to those in Figs. 1 and 9 is omitted.

[3-4-1. Processing Example During Exercise]

First, an example of processing in normal times will be described with reference to Fig. 23A. Fig. 23A is a diagram illustrating an example of processing during exercise. For example, Fig. 23A illustrates an example of a case where the degree of roughness "$H_b$" is equal to or larger than the specified threshold "$H_{th}$" or the respiratory state vector

"$H_v$" falls outside the normal range "$R_N$". That is, Fig. 23A illustrates a case where the silent timeout times "$t_r$" and "$t_s$" are extended.

In Fig. 23A, the information processing system 1 performs a system output of "A message has arrived from Mr. oo. Shall I read out?". In response to the system output, the user U1 speaks "read" before the extended silent timeout time "$t_s$" elapses after the end of the system output, and speaks "out" before the extended silent timeout time "$t_r$" elapses. In this case, the speech of "read" corresponds to the first speech, and the speech of "out" corresponds to the second speech. Fig. 23A illustrates a case where the user U1 is out of breath during exercise, and the information processing system 1 cannot recognize the speech of the user U1.

After the voice recognition timeout time "$t_r$" has elapsed, the information processing system 1 executes the processing such as the voice recognition. As described above, since the information processing system 1 has not been able to recognize the speech of the user U1, the information processing system 1 recognizes (estimates) Intent indicating the speech intent of the user U1 as "OOD". In other words, since the information processing system 1 has not been able to recognize the speech of the user U1, the information processing system 1 determines that the speech of the user U1 is uninterpretable.

Then, the information processing system 1 outputs the message of Mr. oo to the user U1 according to the result of the voice recognition. The information processing system 1 estimates that the degree of roughness "$H_b$" is equal to or larger than the specified threshold "$H_{th}$" or the respiratory state vector "$H_v$" is outside the normal range "$R_N$", and the state of the user is other than the normal time, and notifies the user U1 that the message will be notified again. In Fig. 23A, the information processing system 1 makes a speech "The message will be notified later again".

As described above, in the case where the user's respiration is rough, the speech is disturbed, and the voice recognition cannot be correctly performed, and the semantic understanding result is recognized (estimated) as OOD, the information processing system 1 saves the interaction state and temporarily interrupts the voice interaction session. There is a case where voice recognition cannot be correctly performed depending on the user's speech phrase when the respiration is rough, and in this case, there is a low possibility that voice recognition is correctly performed even if restatement is performed. Therefore, the information processing system 1 waits until the respiratory state of the user returns to a state that does not disturb the speech.

[3-4-2. Processing Example After Calming Down]

Next, an example of processing after calming down after exercise will be described with reference Fig. 23B. Fig. 23B is a diagram illustrating an example of processing after returning to normal times from during exercise. Specifically, Fig. 23B is a diagram illustrating an example of processing in a case where the state returns to the normal times of the user after elapse of time from the exercise of the user in Fig. 23A. For example, Fig. 23B illustrates an example of a case where the degree of roughness "$H_b$" is less than the specified threshold "$H_{th}$" or the respiratory state vector "$H_v$" is within the normal range "$R_N$". That is, Fig. 23B illustrates the case where the silent timeout times "$t_r$" and "$t_s$" are not extended.

In Fig. 23B, since the degree of roughness "$H_b$" indicating the respiratory state of the user U1 is less than the specified threshold "$H_{th}$", or the respiratory state vector "$H_v$" is within the normal range "$R_N$", the information processing system 1 performs the notification in Fig. 23A again. The information processing system 1 performs the system output of "A message has arrived from the said Mr. oo. Shall I read out?". In response to the system output, the user U1 speaks "Read out" before the silent timeout time "$t_s$" elapses, which is the interaction session timeout time, after the end of the system output. Then, after the voice recognition timeout time "$t_r$" has elapsed, the information processing system 1 executes the processing such as the voice recognition. The information processing system 1 recognizes (estimates) Intent indicating the speech intent of the user U1 as "ReadOut".

Then, the information processing system 1 outputs the message of Mr. oo to the user U1 according to the result of the voice recognition. In Fig. 23B, the information processing system 1 outputs the message of Mr. oo to the user U1 "Can you come here right now?" by voice. Then, the information processing system 1 makes a speech of "Would you like to reply?". Then, as illustrated in Fig. 22A, the information processing system 1 interacts with the user according to the response of the user, and provides a service according to the request of the user.

As described above, when the respiratory state of the user calms down and either the degree of roughness "$H_b$" being less than the specified threshold "$H_{th}$" or the respiratory state vector "$H_v$" falling within the normal range "$R_N$" is detected, the information processing system 1 resumes the voice interaction session from the saved interaction state. As a result, since the information processing system 1 can notify the user after the user becomes calm, the information processing system can appropriately provide a service.

[4. Other Embodiments]

The processing according to each of the above-described embodiments may be performed in various different forms (modifications) in addition to the above-described embodiments and modifications.

[4-1. Modification]

Hereinafter, each of modifications will be described.

[4-1-1. Example of Case Where Attention of User Is Distracted By Others]

First, an example of a case where attention of the user is distracted by others will be described. Specifically, an adaptation example of the interaction control by the respiratory state vector "$H_v$" in a use case where the attention of the user is distracted by others than the interaction with the system (information processing system 1) will be described.

For example, at the moment when the user's attention is distracted by others, the information processing system 1 performs processing as follows. In this case, since the instantaneous respiration speed "$v_b$" is equal to or less than the specified value "$v_s$" (threshold "$v_s$") (correlated with "surprise/strain" that makes the breath shallow), the information processing system 1 extends the silent timeout times "$t_r$" and" $t_s$" until the speed "$v_b$" returns to a value larger than the specified value "$v_s$".

Since the speed "$v_b$" returns to the value larger than the specified value "$v_s$" in a case where the attention is restored to the interaction with the system in a short time, the information processing system 1 cancels the extension of the silent timeout times "$t_r$" and "$t_s$" caused by the speed "$v_b$" in a short time.

For example, in a case where attention of the user is continuously distracted, the information processing system 1 performs processing as follows. Since the respiratory state vector "$H_v$" falls outside the normal range "$R_N$" (correlated with "concentration/tension" that makes the breath shallow) due to the depth "$d_b$", the information processing system 1 extends the silent timeout times "$t_r$" and "$t_s$" according to the voice speech influence level "$E_u$". In a case where there is no speech of the user even if the silent timeout time "$t_s$" has been extended so far, the information processing system 1 determines that the user has lost the intention of interaction with the system and thus times out and terminates the voice interaction session. Furthermore, in a case where the attention has been distracted by others and the user's speech to the system has been continuously interrupted even after the silent timeout time "$t_r$" has elapsed, the speech is interrupted halfway, resulting in the OOD speech, and the information processing system 1 interrupts the voice interaction session. The information processing system 1 resumes the voice interaction session when the respiratory state vector "$H_v$" falls within the normal range "$R_N$".

For example, in a case where a speech other than the interaction with the system is made, the information processing system 1 performs processing as follows. The speech to the target that has distracted the attention becomes an OOD speech, and the information processing system 1 interrupts the interaction session. The information processing system 1 waits until the respiratory state vector "$H_v$" falls within the normal range "$R_N$" (attention returns to the interaction with the system) and then resumes the voice interaction session.

[4-1-2. Application Example to System Speech]

Next, an application example to the system speech will be described.

When the degree of roughness "$H_b$" of the respiration is equal to or larger than the specified threshold "$H_{th}$" or the respiratory state vector "$H_v$" is out of the normal range "$R_N$", the information processing system 1 may decrease the speed of system speech by text-to-speech (TTS), increase the volume, or increase the pitch as the value of the voice speech influence level "$E_u$" increases. As described above, the information processing system 1 estimates that not only the user's ability of speaking but also a cognitive ability to listen and understand is deteriorated outside the normal range "$R_N$", and the information processing system changes a system-side speech mode by decreasing the speed of the system speech, increasing the volume, or increasing the pitch.

[4-1-3. Modification by Personalized Learning]

Next, a modification by personalized learning will be described.

For example, the information processing system 1 stores, as learning information, a set of the respiratory state vectors "$H_v$" (labels within the normal range) when the interaction is smoothly established, and a set of the respiratory state vectors "$H_v$" (labels outside the normal range) when the silent timeout times "$t_r$" and "$t_s$" time out or an OOD speech occurs. For example, the server device 100A stores the learning information in the storage unit 120. Then, the information processing system 1 may perform the normal range "$R_N$" determination for the respiratory state vector "$H_v$" by performing class identification through machine learning using the learning information.

Furthermore, for the normal respiration origin "$O_N$" = ($d_0$, $f_0$, $v_0$), a preset initial value may be set on the basis of the depth, frequency, and speed at the time of general normal respiration, and the information processing system 1 may update the initial value with a value at which the likelihood of the normal range "$R_N$" is maximized by the class identification among values around the initial value. For example, the information processing system 1 may assign (set) values of the depth "$d_b$", the frequency "$f_b$", and the speed "$v_b$" around the initial value, apply the values to a class identifier generated in the machine learning, and update the normal respiration origin "$O_N$" with a combination of the depth "$d_b$", the frequency "$f_b$", and the speed "$v_b$" that maximizes the likelihood of the normal range "$R_N$".

For example, the information processing system 1 stores a specific phrase P (the phrase itself is acquired from the speech after the respiratory state vector "$H_v$" falls within the normal range "$R_N$") that has become the OOD speech and the respiratory state vector "$H_{vp}$" at this time in association with each other. For example, server device 100A stores information in which the specific phrase P and the respiratory state vector "$H_{vp}$" are associated with each other in the storage unit 120.

For example, a case where the information processing system 1 performs a system notification in which the user is highly likely to make a response speech with the stored specific phrase P will be described. In this case, in a case where the voice speech influence level "$E_u$" calculated from the current respiratory state vector "$H_v$" is equal to or larger than the voice speech influence level "$E_u$" calculated from the respiratory state vector "$H_{vp}$" stored in association with the specific phrase P, the information processing system 1 may wait and delay the notification itself until the respiratory state vector "$H_v$" falls within the normal range "$R_N$". Furthermore, when performing similar system notification, the information processing system 1 may further extend the silent timeout times "$t_r$" and "$t_s$" from the time of the previous OOD speech.

With such personalized learning, the information processing system 1 can perform the interaction control optimized and adapted to (the difference in the influence of the respiration on the speech of) the user individual as the user further uses the system including the device and the like. Thereby, the information processing system 1 can absorb the difference in the influence of the respiration on the speech depending on an individual vital capacity or the like by personalized learning.

[4-1-4. Other modifications]

Next, other modifications will be described.

For example, in a case of a device equipped with an image display device for the user, the information processing system 1 performs processing as follows. In a case where the image display device for the user is mounted as in the terminal device 10 having the display unit 16, the information processing system 1 performs processing as follows.

The information processing system 1 displays, with an indicator, the degree of roughness "$H_b$" of the respiration or the voice speech influence level "$E_u$" calculated from the respiratory state vector "$H_v$". As described above, the information processing system 1 may feed back system behavior reasons such as the extension of the silent timeout times "$t_r$" and "$t_s$" and the interruption/resumption of the interaction to the user. Furthermore, the information processing system 1 may present the time until the timeout of the silent timeout times "$t_r$" and "$t_s$" by a countdown display or an indicator.

For example, in a case where an importance level of the system notification is set, the information processing system 1 performs processing as follows.

In the case of the notification with high importance, the information processing system 1 may store the notification when the extended silent timeout time "$t_s$" times out and the voice interaction session ends, and may perform re-notification after the respiration becomes normal. Furthermore, when the voice speech influence level "$E_u$" is higher than the specified value, the information processing system 1 may modify the system speech so that the user can respond with a simple speech such as Yes or No.

**[0376]** For example, in a case of a device equipped with a line-of-sight detection device, the information processing system 1 performs processing as follows. For example, in a case where the terminal device 10 used by the user has a line-of-sight detection function, the information processing system 1 performs processing as follows. In this case, the information processing system 1 may extend the silent timeout times "$t_r$" and "$t_s$" when the user is not looking at the voice interaction device by the line-of-sight detection.

[4-2. Configuration Example of Performing Processing of Voice Interaction Control on Client Side]

In the embodiment, as an example of the system configuration, the case where the server device 100 or 100A performs the processing of the voice interaction control and the like has been described, but the terminal device 10 may perform the processing of the voice interaction control. That is, the terminal device 10, which is a client-side device, may be an information processing device that performs the above-described processing of the voice interaction control. As described above, the system configuration of the information processing system 1 is not limited to the configuration in which the server devices 100 or 100A, which is the server-side device, performs the processing of the voice interaction control, and may be a configuration in which the terminal device 10, which is the client-side device, performs the above-described processing of the voice interaction control.

In the case where the terminal device 10 is an information processing device that performs the above-described processing of the voice interaction control, the processing of the voice interaction control is performed on the client side (terminal device 10) in the information processing system 1. Then, the server side (server device 100 or 100A) acquires various types of information from the terminal device 10 and performs various types of processing. In this case, the execution unit 152 of the terminal device 10 may have a function similar to that of the execution unit 134 of the server device 100 or 100A. Furthermore, the terminal device 10 may include a calculation unit that implements a function similar to that of the above-described calculation unit 132 and a determination unit that implements a function similar to that of the above-described determination unit 133. Furthermore, in this case, the server devices 100 or 100A may not include the calculation unit 132 or 132A and the determination unit 133 or 133A.

Furthermore, the information processing system 1 may have a system configuration in which the degree of roughness "$H_b$" that is a scalar value or the respiratory state vector "$H_v$" that is a vector is calculated on the client side (terminal device 10), and the processing of the voice interaction control is performed using the information of the degree of roughness "$H_b$" or the respiratory state vector "$H_v$" on the server side (server device 100 or 100A) that has received the information of the calculated degree of roughness "$H_b$" or respiratory state vector "$H_v$" from the client side. In this case, the terminal device 10 that is the client-side device may be an information processing device that performs the calculation processing of the above-described degree of roughness "$H_b$" and the respiratory state vector "$H_v$", and the server device 100 or 100A that is the server-side device may be an information processing device that performs the processing of the voice interaction control using the above-described degree of roughness "$H_b$" and respiratory state vector "$H_v$". In this case, for example, the calculation unit of the terminal device 10 performs the calculation processing, and the execution unit 134 of the server device 100 or 100A performs the processing of the voice interaction control.

Note that the above is an example, and any device may perform each processing in the information processing system 1. As described above, the information processing system 1 may have a system configuration in which either the client-side device (the terminal device 10) or the server-side device (the server device 100 or 100A) performs each processing.

[4-3. Other Configuration Examples]

In the above examples, the server devices 100 and 100A, and the terminal device 10 are separated from each other, but these devices may be integrated. Furthermore, the server device (information processing device) may perform the processing such as the voice interaction control using both the degree of roughness "$H_b$" and the respiratory state vector "$H_v$". In this case, the server device may be an information processing device having functions of both the server device 100 and the server device 100A.

[4-4. Others]

Furthermore, among the pieces of processing described in the above embodiments, the entire or part of the processing described as being automatically performed can be manually performed, or the entire or part of the processing described as being manually performed can be automatically performed by a known method. In addition, the processing procedures, specific names, and information including various data and parameters illustrated in the document and the drawings can be arbitrarily changed unless otherwise specified. For example, the various types of information illustrated in each drawing are not limited to the illustrated information.

Furthermore, each component of each device illustrated in the drawings is functionally conceptual, and is not necessarily physically configured as illustrated in the drawings. That is, a specific form of distribution and integration of each device is not limited to the illustrated form, and some or part thereof can be functionally or physically distributed and integrated in an arbitrary unit according to various loads, use conditions, and the like.

Furthermore, the above-described embodiments and modifications can be appropriately combined within a range in which the processing contents do not contradict each other.

Furthermore, the effects described in the present specification are merely examples and are not limited, and other effects may be exhibited.

[5. Effects According to Present Disclosure]

As described above, the information processing device (the server device 100 or 100A in the embodiment) according to the present disclosure includes an acquisition unit (the acquisition unit 131 in the embodiment) and an execution unit (the execution unit 134 in the embodiment). The acquisition unit acquires the first speech information indicating the first speech by the user, the second speech information indicating the second speech by the user after the first speech, and the respiration information regarding the respiration of the user. The execution unit executes the processing of concatenating the first speech and the second speech by executing the voice interaction control according to the respiratory state of the user based on the respiration information acquired by acquisition unit.

As described above, the information processing device according to the present disclosure can concatenate the intermittent speeches of the user by executing the processing of concatenating the first speech and the second speech after the first speech by executing the voice interaction control according to the respiratory state of the user. Therefore, the information processing device appropriately enables a plurality of speeches of the user to be concatenated.

Furthermore, the information processing device (the server device 100 in the embodiment) according to the present disclosure includes a calculation unit (the calculation unit 132 in the embodiment). The calculation unit calculates the index value indicating the respiratory state of the user using the respiration information. In the case where the index value satisfies the condition, the execution unit executes the processing of concatenating the first speech and the second speech by executing the voice interaction control. As described above, the information processing device calculates the index value indicating the respiratory state of the user, and in the case where the calculated index value satisfies the condition, the information processing device appropriately enables a plurality of speeches of the user to be concatenated by executing the processing of concatenating the first speech and the second speech by executing the voice interaction control.

Furthermore, the execution unit executes the processing of concatenating the first speech and the second speech by executing the voice interaction control in the case where the comparison result between the index value and the threshold satisfies the condition. As described above, in the case where the comparison result between the index value and the threshold satisfies the condition, the information processing device appropriately enables a plurality of speeches of the user to be concatenated by executing the processing of concatenating the first speech and the second speech by executing the voice interaction control.

Furthermore, the information processing device (the server device 100A in the embodiment) according to the present disclosure includes a calculation unit (the calculation unit 132A in the embodiment). The calculation unit calculates the vector indicating the respiratory state of the user using the respiration information. In the case where the vector satisfies the condition, the execution unit executes the processing of concatenating the first speech and the second speech by executing the voice interaction control. As described above, the information processing device calculates the vector indicating the respiratory state of the user, and in the case where the calculated vector satisfies the condition, the information processing device appropriately enables a plurality of speeches of the user to be concatenated by executing the processing of concatenating the first speech and the second speech by executing the voice interaction control.

Furthermore, in the case where the vector falls outside the normal range, the execution unit executes the processing of concatenating the first speech and the second speech by executing the voice interaction control. As described above, in the case where the vector falls outside the normal range, the information processing device appropriately enables a plurality of speeches of the user to be concatenated by executing the processing of concatenating the first speech and the second speech by executing the voice interaction control.

Furthermore, the execution unit executes the processing of concatenating the first speech and the second speech by executing the voice interaction control for extending the timeout time regarding voice interaction. As described above, the information processing device can appropriately concatenate speeches even in the case where the user's speech is intermittent for a long time in a case where the user gets out of breath due to exercise or the like by extending the timeout time for the voice interaction. Therefore, the information processing device appropriately enables a plurality of speeches of the user to be concatenated.

Furthermore, the execution unit executes the processing of concatenating the first speech and the second speech by executing the voice interaction control for extending the timeout time to be used for the voice recognition speech end determination. As described above, because the time for the voice recognition speech end determination is extended, the information processing device can appropriately concatenate speeches even in the case where the user's speech is intermittent for a long time in a case where the user gets out of breath due to exercise or the like by extending the timeout time to be used for the voice recognition speech end determination. Therefore, the information processing device appropriately enables a plurality of speeches of the user to be concatenated.

Furthermore, the execution unit executes the processing of concatenating the second speech information indicating the second speech by the user and the first speech before the extended timeout time elapses from the first speech by executing the voice interaction control for extending the timeout time to the extended timeout time. In this manner, the information processing device can concatenate the first speech and the second speech made after the first speech and before the extended timeout time elapses by extending the timeout time related to the voice interaction. Therefore, the information processing device appropriately enables a plurality of speeches of the user to be concatenated.

Furthermore, the execution unit executes the processing of concatenating the first speech and the second speech by executing the voice interaction control for concatenating the first speech and the second speech according to the semantic understanding processing result of the first speech in the case where the semantic understanding processing result of the second speech is uninterpretable. As described above, in the case where the semantic understanding processing result of the second speech is uninterpretable, the information processing device can appropriately concatenate the speeches by concatenating the first speech and the second speech according to the semantic understanding processing result of the first speech. Therefore, the information processing device appropriately enables a plurality of speeches of the user to be concatenated, and can increase the possibility of making an uninterpretable speech interpretable.

Furthermore, the execution unit executes the processing of concatenating the first speech and the second speech by executing the voice interaction control for concatenating the first speech with an uninterpretable semantic understanding processing result and the second speech with an uninterpretable semantic understanding processing result. As described above, in the case where the uninterpretable speeches are in succession, the information processing device can appropriately concatenate speeches by concatenating the first speech and the second speech. Therefore, the information processing device appropriately enables a plurality of speeches of the user to be concatenated, and can increase the possibility of making an uninterpretable speech interpretable.

Furthermore, the acquisition unit acquires the third speech information indicating the third speech by the user after the second speech. In the case where the semantic understanding processing result of the third speech is uninterpretable, the execution unit executes processing of concatenating the second speech and the third speech. As described above, in the case where the semantic understanding processing result of the third speech is uninterpretable, the information processing device can appropriately concatenate the speeches by executing the processing of concatenating the second speech and the third speech. Therefore, the information processing device appropriately enables a plurality of speeches of the user to be concatenated, and can increase the possibility of making an uninterpretable speech interpretable.

Furthermore, the execution unit executes the processing of concatenating the first speech and the second speech by executing the voice interaction control for concatenating the first speech and the second speech in the case where the first component that is spoken last in the first speech and the second component that is spoken first in the second speech satisfy the condition regarding co-occurrence. As described above, in the case where the last component of the first speech and the first component of the second speech satisfy the condition regarding co-occurrence, the information processing device can appropriately concatenate speeches that are highly likely to be successive in terms of content by concatenating the first speech and the second speech. Therefore, the information processing device appropriately enables a plurality of speeches of the user to be concatenated.

Furthermore, the execution unit executes the processing of concatenating the first speech and the second speech by executing the voice interaction control for concatenating the first speech and the second speech in the case where the probability that the second component appears next to the first component is equal to or larger than a specified value. As described above, in the case where the probability that the second component appears next to the first component is equal to or larger than the specified value, in the case of executing the processing of concatenating the first speech and the second speech by executing the voice interaction control of concatenating the first speech and the second speech, the information processing device can appropriately concatenate speeches that are highly likely to be successive in terms of content by concatenating the first speech and the second speech. Therefore, the information processing device appropriately enables a plurality of speeches of the user to be concatenated.

Furthermore, the execution unit executes the processing of concatenating the first speech and the second speech by executing the voice interaction control for concatenating the first speech and the second speech in the case where the probability that the second component appears next to the first component is equal to or larger than a specified value in the speech history of the user. In this manner, the information processing device can appropriately concatenate the speeches in consideration of the tendency of the user's speech by using the user's speech history. Therefore, the information processing device appropriately enables a plurality of speeches of the user to be concatenated.

Furthermore, the acquisition unit acquires the third speech information indicating the third speech by the user after the second speech. In the case where a component spoken last in the second speech and a component spoken first in the third speech satisfy a condition regarding co-occurrence, the execution unit executes the processing of concatenating the second speech and the third speech. As described above, in the case where the last component of the second speech and the first component of the third speech satisfy the condition regarding co-occurrence, the information processing device can appropriately concatenate speeches by executing the processing of concatenating the second speech and the third speech. Therefore, the information processing device appropriately enables a plurality of speeches of the user to be concatenated.

Furthermore, the acquisition unit acquires the respiration information including the displacement amount of the respiration of the user. As described above, by using the displacement amount of the respiration of the user, the Information processing device can more accurately take into account the respiratory state of the user and can concatenate a plurality of speeches of the user.

Furthermore, the acquisition unit acquires the respiration information including the cycle of the respiratory of the user. As described above, by using the cycle of the respiration of the user, the Information processing device can more accurately take into account the respiratory state of the user and can concatenate a plurality of speeches of the user.

Furthermore, the acquisition unit acquires the respiration information including the rate of the respiratory of the user. As described above, by using the rate of the respiration of the user, the information processing device can more accurately take into account the respiratory state of the user and can concatenate a plurality of speeches of the user.

Furthermore, the execution unit does not execute the voice interaction control in the case where the respiratory state of the user is the normal state. As described above, in the case where the respiratory state of the user is the normal state, the information processing device can suppress the influence of the voice interaction control on the processing in the normal state by not executing the voice interaction control and by performing the normal voice recognition processing in the case where the respiration of the user is normal. Therefore, the information processing device appropriately enables a plurality of speeches of the user to be concatenated.

[6. Hardware Configuration]

The information device such as the server device 100 or 100A or the terminal device 10 according to each of the above-described embodiments is implemented by a computer 1000 having a configuration as illustrated in Fig. 24, for example. Fig. 24 is a hardware configuration diagram illustrating an example of the computer 1000 that implements functions of an information processing device. Hereinafter, the server device 100 according to the first embodiment will be described as an example. The computer 1000 includes a CPU 1100, a RAM 1200, a read only memory (ROM) 1300, a hard disk drive (HDD) 1400, a communication interface 1500, and an input/output interface 1600. The units of the computer 1000 are connected by a bus 1050.

The CPU 1100 operates on the basis of programs stored in the ROM 1300 or the HDD 1400, and controls each unit. For example, the CPU 1100 expands the programs stored in the ROM 1300 or the HDD 1400 to the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records the programs executed by the CPU 1100, data used by the programs, and the like. Specifically, the HDD 1400 is a recording medium that records an information processing program according to the present disclosure as an example of program data 1450.

The communication interface 1500 is an interface for the computer 1000 to be connected to an external network 1550 (for example, the Internet). For example, the CPU 1100 receives data from another device or transmits data generated by the CPU 1100 to another device via the communication interface 1500.

The input/output interface 1600 is an interface for connecting the input/output device 1650 and the computer 1000. For example, the CPU 1100 receives data from an input device such as a keyboard or a mouse via the input/output interface 1600. Furthermore, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the server device 100 according to the first embodiment, the CPU 1100 of the computer 1000 implements the functions of the control unit 130 and the like by executing the information processing program loaded on the RAM 1200. Furthermore, the HDD 1400 stores the information processing program according to the present disclosure and data in the storage unit 120. Note that the CPU 1100 reads the program data 1450 from the HDD 1400 and executes the program data, but as another example, these programs may be acquired from another device via the external network 1550.

Note that the present technology can also have the following configurations.

(1) An information processing device including:

an acquisition unit configured to acquire first speech information indicating a first speech by a user, second speech information indicating a second speech by the user after the first speech, and respiration information regarding respiration of the user; and
an execution unit configured to execute processing of concatenating the first speech and the second speech by executing voice interaction control according to a respiratory state of the user based on the respiration information acquired by the acquisition unit.

(2) The information processing device according to (1), further including:

a calculation unit configured to calculate an index value indicating the respiratory state of the user using the respiration information, in which
the execution unit
executes the processing of concatenating the first speech and the second speech by executing the voice interaction control in a case where the index value satisfies a condition.

(3) The information processing device according to (2), in which

the execution unit
executes the processing of concatenating the first speech and the second speech by executing the voice interaction control in a case where a comparison result between the index value and a threshold satisfies the condition.

(4) The information processing device according to (1), further including:

a calculation unit configured to calculate a vector indicating the respiratory state of the user using the respiration information, in which
the execution unit
executes the processing of concatenating the first speech and the second speech by executing the voice interaction control in a case where the vector satisfies a condition.

(5) The information processing device according to (4), in which

the execution unit
executes the processing of concatenating the first speech and the second speech by executing the voice interaction control in a case where the vector is out of a normal range.

(6) The information processing device according to any one of (1) to (5), in which

the execution unit
executes the processing of concatenating the first speech and the second speech by executing the voice interaction control for extending a timeout time regarding voice interaction.

(7) The information processing device according to (6), in which

the execution unit
executes the processing of concatenating the first speech and the second speech by executing the voice interaction control for extending the timeout time to be used for voice recognition speech end determination.

(8) The information processing device according to (7), in which

the execution unit
executes processing of concatenating the second speech information indicating the second speech and the first speech by the user before an extended timeout time elapses from the first speech by executing the voice interaction control for extending the timeout time to the extended timeout time.

(9) The information processing device according to any one of (1) to (8), in which

the execution unit
executes the processing of concatenating the first speech and the second speech by executing the voice interaction control for concatenating the first speech and the second speech according to a semantic understanding processing result of the first speech in a case where a semantic understanding processing result of the second speech is uninterpretable.

(10) The information processing device according to (9), in which

the execution unit
executes the processing of concatenating the first speech and the second speech by executing the voice interaction control for concatenating the first speech with an uninterpretable semantic understanding processing result and the second speech with an uninterpretable semantic understanding processing result.

(11) The information processing device according to (9) or (10), in which

the acquisition unit
acquires third speech information indicating a third speech by the user after the second speech, and
the execution unit
executes processing of concatenating the second speech and the third speech in a case where a semantic understanding processing result of the third speech is uninterpretable.

(12) The information processing device according to any one of (1) to (11), in which

the execution unit
executes the processing of concatenating the first speech and the second speech by executing the voice interaction control for concatenating the first speech and the second speech in a case where a first component that is spoken last in the first speech and a second component that is spoken first in the second speech satisfy a condition regarding co-occurrence.

(13) The information processing device according to (12), in which

the execution unit
executes the processing of concatenating the first speech and the second speech by executing the voice interaction control for concatenating the first speech and the second speech in a case where a probability that the second component appears next to the first component is equal to or larger than a specified value.

(14) The information processing device according to (12) or (13), in which

the execution unit
executes the processing of concatenating the first speech and the second speech by executing the voice interaction control for concatenating the first speech and the second speech in a case where the probability that the second component appears next to the first component in a speech history of the user is equal to or larger than a specified value.

(15) The information processing device according to any one of (12) to (14), in which

the acquisition unit
acquires third speech information indicating a third speech by the user after the second speech; and
the execution unit
executes processing of concatenating the second speech and the third speech in a case where a component spoken last in the second speech and a component spoken first in the third speech satisfy a condition regarding co-occurrence.

(16) The information processing device according to any one of (1) to (15), in which

the acquisition unit
acquires the respiration information including a displacement amount of respiration of the user.

(17) The information processing device according to any one of (1) to (16), in which

the acquisition unit
acquires the respiration information including a cycle of respiration of the user.

(18) The information processing device according to any one of (1) to (17), in which

the acquisition unit
acquires the respiration information including a rate of respiration of the user.

(19) The information processing device according to any one of (1) to (18), in which

the execution unit
does not execute the voice interaction control in a case where the respiratory state of the user is a normal state.

(20) An information processing method of executing processing including:

acquiring first speech information indicating a first speech by a user, second speech information indicating a second speech by the user after the first speech, and respiration information regarding respiration of the user; and
executing processing of concatenating the first speech and the second speech by executing voice interaction control according to a respiratory state of the user based on the acquired respiration information.

REFERENCE SIGNS LIST

| | |
|---|---|
| 1 | Information processing system |
| 100, 100A | Server device (information processing device) |
| 110 | Communication unit |
| 120, 120A | Storage unit |
| 121 | Respiration information storage unit |
| 122 | User information storage unit |
| 123 | Threshold information storage unit |
| 123A | Determination information storage unit |
| 124 | Functional information storage unit |
| 130, 130A | Control unit |
| 131 | Acquisition unit |
| 132, 132A | Calculation unit |
| 133, 133A | Determination unit |
| 134 | Execution unit |
| 135 | Transmission unit |
| 10 | Terminal device |
| 11 | Communication unit |
| 12 | Input unit |
| 13 | Output unit |
| 14 | Storage unit |
| 15 | Control unit |
| 151 | Reception unit |
| 152 | Execution unit |
| 153 | Acceptance unit |
| 154 | Transmission unit |
| 16 | Display unit |
| 17 | Sensor unit |
| 171 | Respiration sensor |

## Claims

**1.** An information processing device comprising:

an acquisition unit configured to acquire first speech information indicating a first speech by a user, second speech information indicating a second speech by the user after the first speech, and respiration information regarding respiration of the user; and
an execution unit configured to execute processing of concatenating the first speech and the second speech by executing voice interaction control according to a respiratory state of the user based on the respiration information acquired by the acquisition unit.

**2.** The information processing device according to claim 1, further comprising:

a calculation unit configured to calculate an index value indicating the respiratory state of the user using the respiration information, wherein
the execution unit
executes the processing of concatenating the first speech and the second speech by executing the voice interaction control in a case where the index value satisfies a condition.

**3.** The information processing device according to claim 2, wherein

the execution unit
executes the processing of concatenating the first speech and the second speech by executing the voice interaction control in a case where a comparison result between the index value and a threshold satisfies the condition.

**4.** The information processing device according to claim 1, further comprising:

a calculation unit configured to calculate a vector indicating the respiratory state of the user using the respiration information, wherein
the execution unit
executes the processing of concatenating the first speech and the second speech by executing the voice interaction control in a case where the vector satisfies a condition.

**5.** The information processing device according to claim 4, wherein

the execution unit
executes the processing of concatenating the first speech and the second speech by executing the voice interaction control in a case where the vector is out of a normal range.

**6.** The information processing device according to claim 1, wherein

the execution unit
executes the processing of concatenating the first speech and the second speech by executing the voice interaction control for extending a timeout time regarding voice interaction.

**7.** The information processing device according to claim 6, wherein

the execution unit
executes the processing of concatenating the first speech and the second speech by executing the voice interaction control for extending the timeout time to be used for voice recognition speech end determination.

**8.** The information processing device according to claim 7, wherein

the execution unit
executes processing of concatenating the second speech information indicating the second speech and the first speech by the user before an extended timeout time elapses from the first speech by executing the voice interaction control for extending the timeout time to the extended timeout time.

**9.** The information processing device according to claim 1, wherein

the execution unit
executes the processing of concatenating the first speech and the second speech by executing the voice interaction control for concatenating the first speech and the second speech according to a semantic understanding processing result of the first speech in a case where a semantic understanding processing result of the second speech is uninterpretable.

**10.** The information processing device according to claim 9, wherein

the execution unit
executes the processing of concatenating the first speech and the second speech by executing the voice interaction control for concatenating the first speech with an uninterpretable semantic understanding processing result and the second speech with an uninterpretable semantic understanding processing result.

**11.** The information processing device according to claim 9, wherein

the acquisition unit
acquires third speech information indicating a third speech by the user after the second speech, and
the execution unit
executes processing of concatenating the second speech and the third speech in a case where a semantic understanding processing result of the third speech is uninterpretable.

**12.** The information processing device according to claim 1, wherein

the execution unit
executes the processing of concatenating the first speech and the second speech by executing the voice interaction control for concatenating the first speech and the second speech in a case where a first component that is spoken last in the first speech and a second component that is spoken first in the second speech satisfy a condition regarding co-occurrence.

**13.** The information processing device according to claim 12, wherein

the execution unit
executes the processing of concatenating the first speech and the second speech by executing the voice interaction control for concatenating the first speech and the second speech in a case where a probability that the second component appears next to the first component is equal to or larger than a specified value.

**14.** The information processing device according to claim 12, wherein

the execution unit
executes the processing of concatenating the first speech and the second speech by executing the voice interaction control for concatenating the first speech and the second speech in a case where the probability that the second component appears next to the first component in a speech history of the user is equal to or larger than a specified value.

**15.** The information processing device according to claim 12, wherein

the acquisition unit
acquires third speech information indicating a third speech by the user after the second speech; and
the execution unit
executes processing of concatenating the second speech and the third speech in a case where a component spoken last in the second speech and a component spoken first in the third speech satisfy a condition regarding co-occurrence.

**16.** The information processing device according to claim 1, wherein

the acquisition unit
acquires the respiration information including a displacement amount of respiration of the user.

**17.** The information processing device according to claim 1, wherein

the acquisition unit
acquires the respiration information including a cycle of respiration of the user.

**18.** The information processing device according to claim 1, wherein

the acquisition unit
acquires the respiration information including a rate of respiration of the user.

**19.** The information processing device according to claim 1, wherein

the execution unit
does not execute the voice interaction control in a case where the respiratory state of the user is a normal state.

**20.** An information processing method of executing processing comprising:

acquiring first speech information indicating a first speech by a user, second speech information indicating a second speech by the user after the first speech, and respiration information regarding respiration of the user; and
executing processing of concatenating the first speech and the second speech by executing voice interaction control according to a respiratory state of the user based on the acquired respiration information.

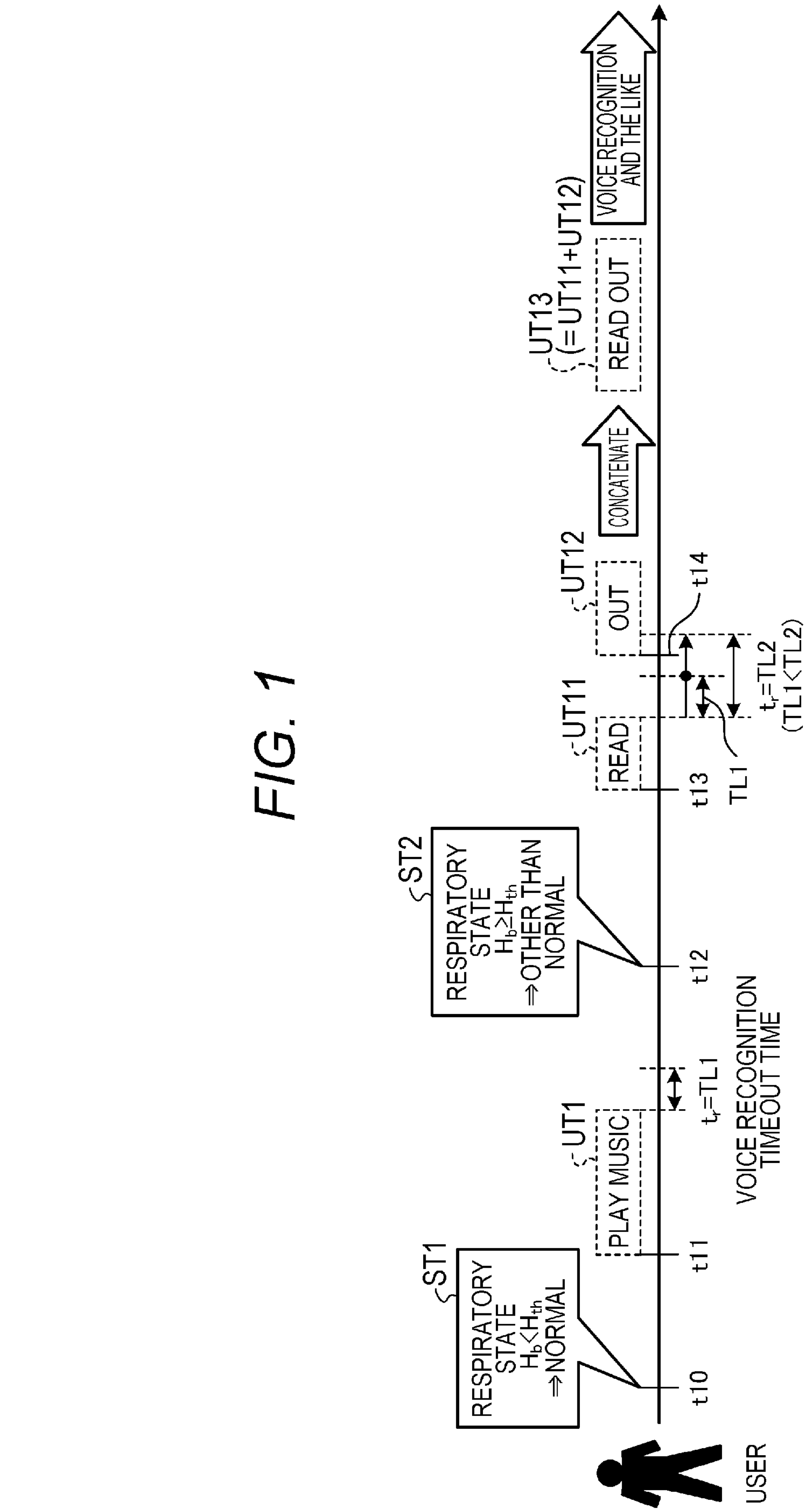
USER
RESPIRATORY STATE $H_b<H_{th}$ ⇒NORMAL
ST1
t10
t11
PLAY MUSIC
UT1
$t_r$=TL1
VOICE RECOGNITION TIMEOUT TIME
t12
RESPIRATORY STATE $H_b \geq H_{th}$ ⇒OTHER THAN NORMAL
ST2
t13
READ
UT11
TL1
OUT
UT12
t14
$t_r$=TL2
(TL1<TL2)
CONCATENATE
UT13
(=UT11+UT12)
READ OUT
VOICE RECOGNITION AND THE LIKE

FIG. 1

FIG. 2

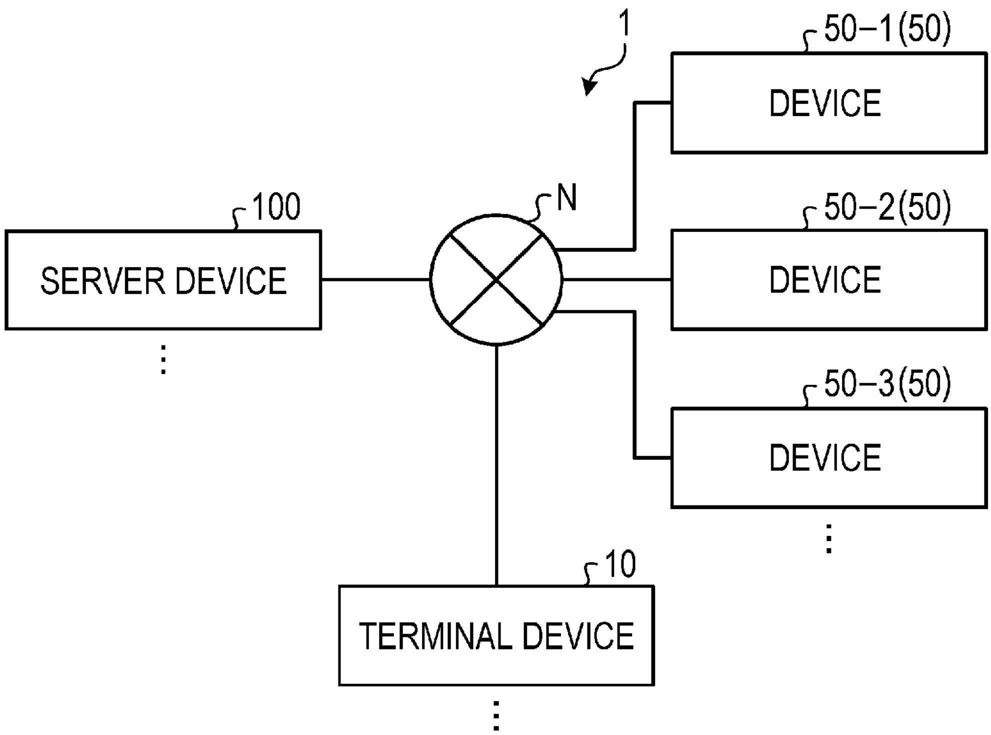
1
50−1(50)
DEVICE
100
N
SERVER DEVICE
50−2(50)
DEVICE
50−3(50)
DEVICE
10
TERMINAL DEVICE

FIG. 3

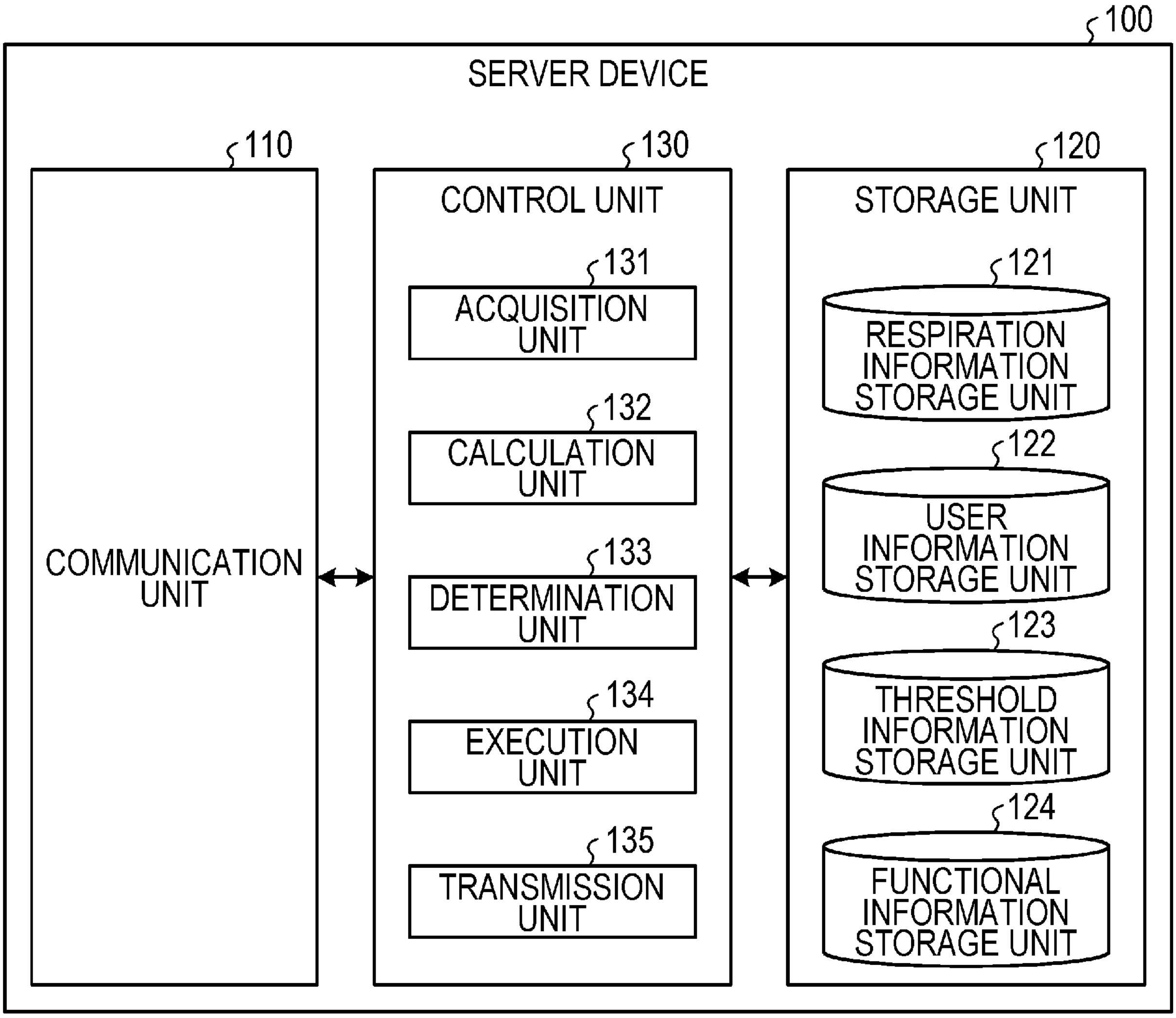


FIG. 4

123

| THRESHOLD ID | USE | THRESHOLD NAME | VALUE | ... |
|---|---|---|---|---|
| TH1 | ROUGHNESS OF RESPIRATION | $H_{th}$ | VL1 | ... |
| ... | ... | ... | ... | ... |

FIG. 5

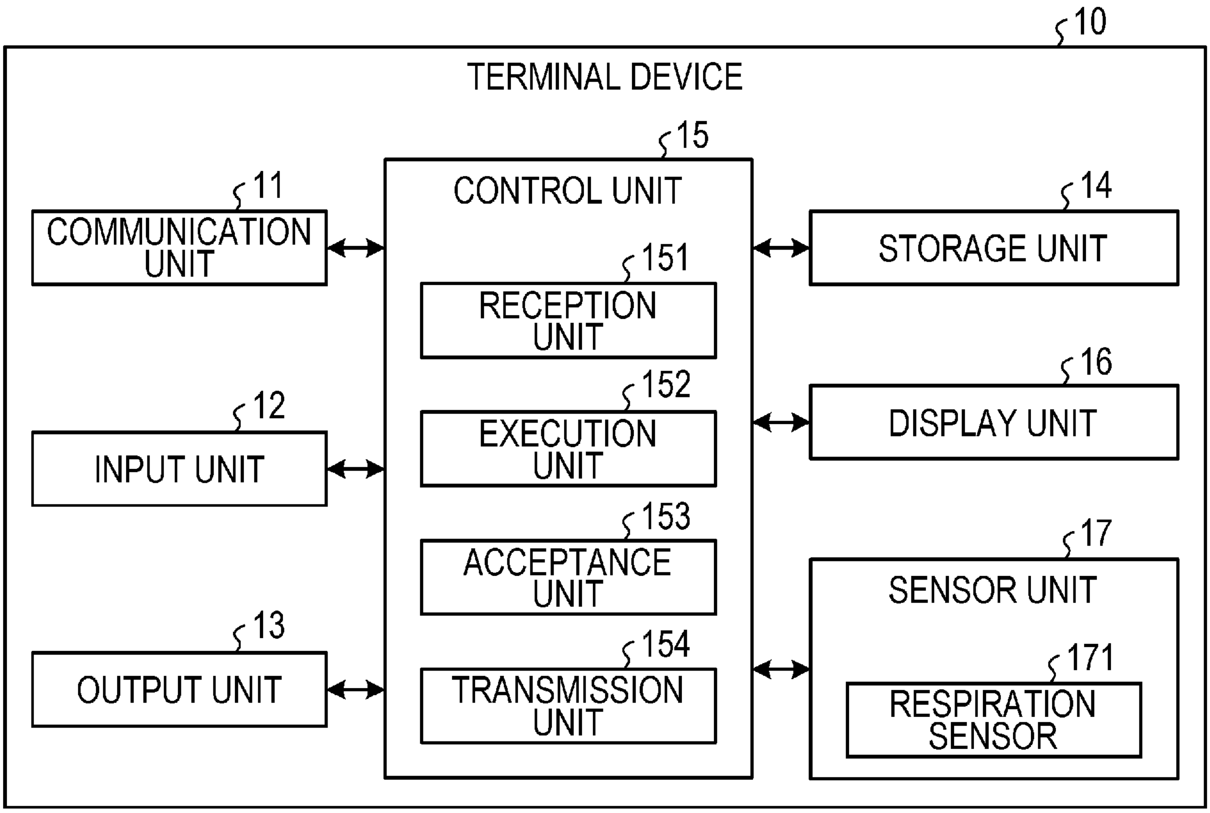
10
TERMINAL DEVICE
15
CONTROL UNIT
11
COMMUNICATION UNIT
151
RECEPTION UNIT
152
EXECUTION UNIT
153
ACCEPTANCE UNIT
154
TRANSMISSION UNIT
12
INPUT UNIT
13
OUTPUT UNIT
14
STORAGE UNIT
16
DISPLAY UNIT
17
SENSOR UNIT
171
RESPIRATION SENSOR

FIG. 6

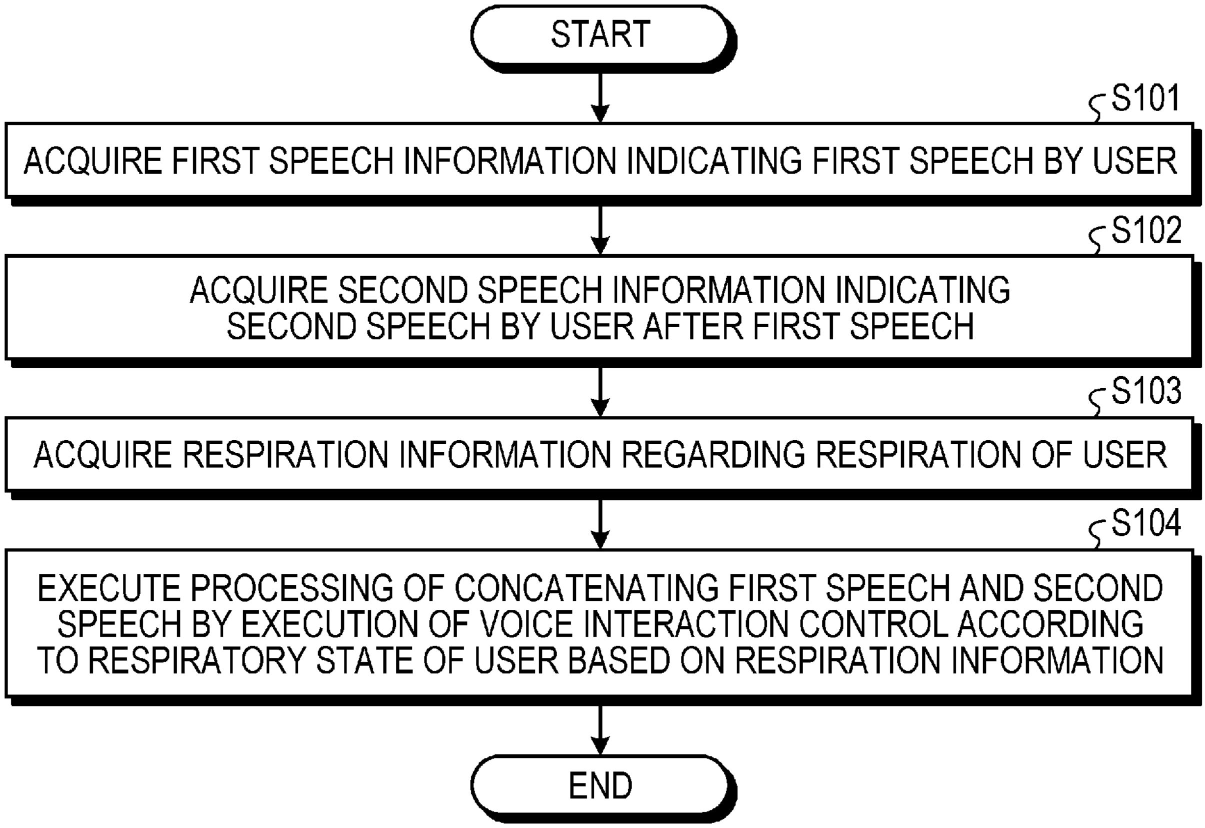
START
S101
ACQUIRE FIRST SPEECH INFORMATION INDICATING FIRST SPEECH BY USER
S102
ACQUIRE SECOND SPEECH INFORMATION INDICATING SECOND SPEECH BY USER AFTER FIRST SPEECH
S103
ACQUIRE RESPIRATION INFORMATION REGARDING RESPIRATION OF USER
S104
EXECUTE PROCESSING OF CONCATENATING FIRST SPEECH AND SECOND SPEECH BY EXECUTION OF VOICE INTERACTION CONTROL ACCORDING TO RESPIRATORY STATE OF USER BASED ON RESPIRATION INFORMATION
END

FIG. 7

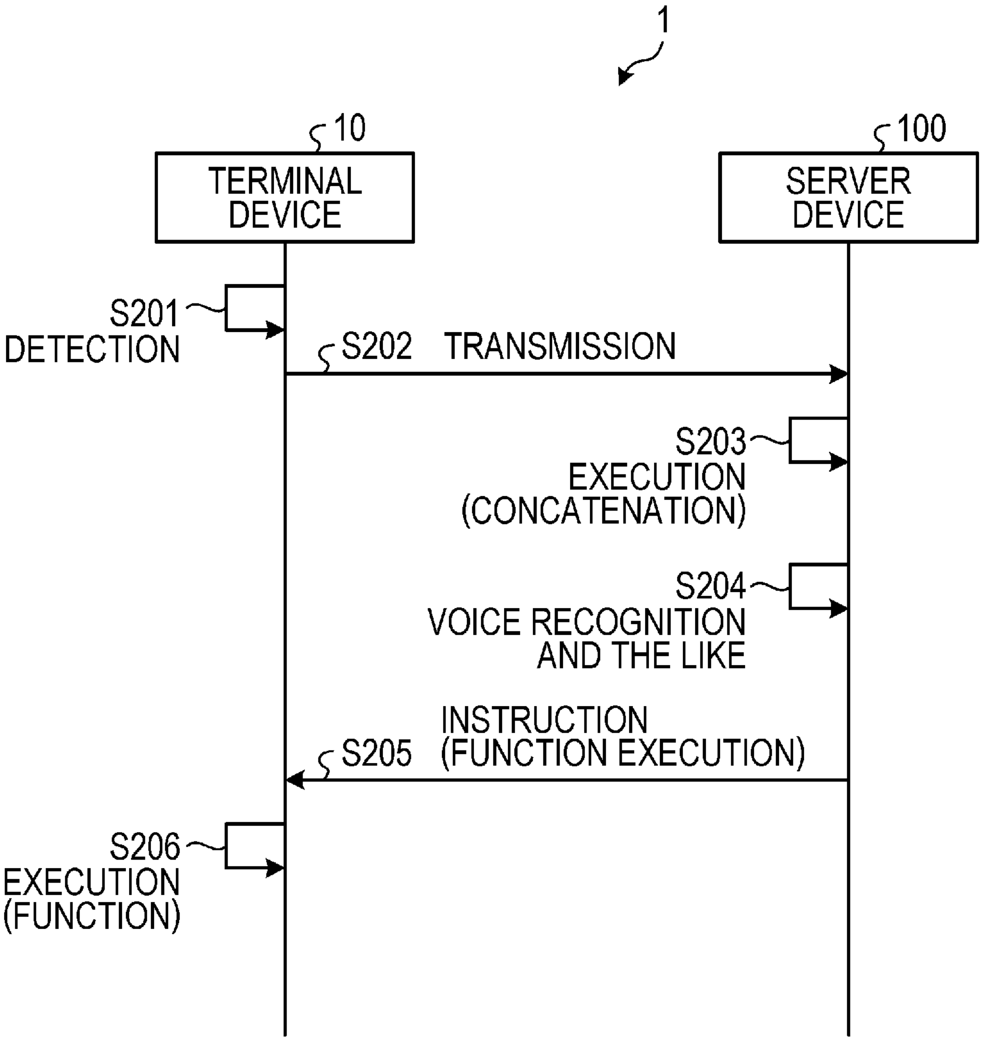
1
10
TERMINAL DEVICE
100
SERVER DEVICE
S201
DETECTION
S202 TRANSMISSION
S203
EXECUTION
(CONCATENATION)
S204
VOICE RECOGNITION
AND THE LIKE
INSTRUCTION
(FUNCTION EXECUTION)
S205
S206
EXECUTION
(FUNCTION)

FIG. 8A

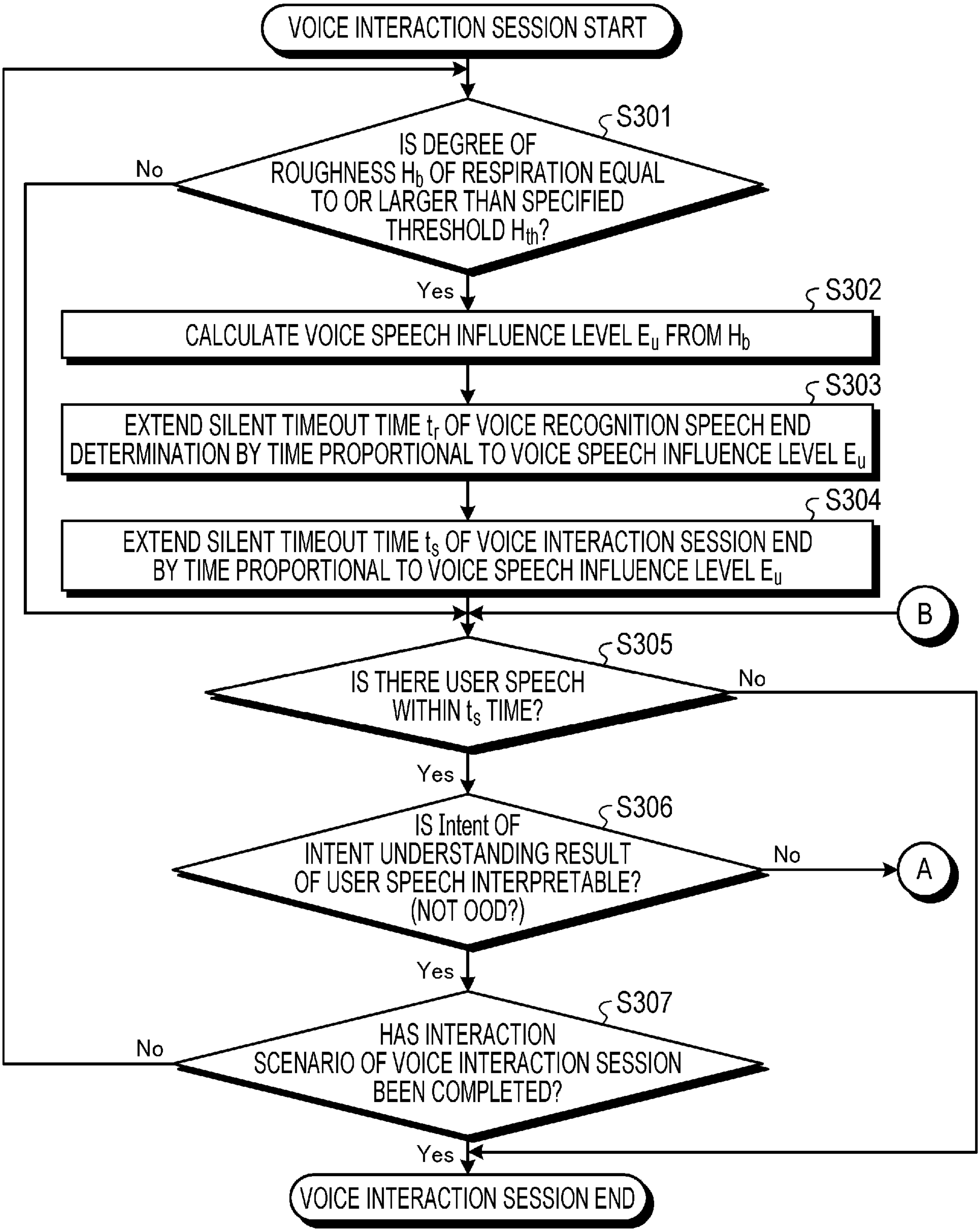
VOICE INTERACTION SESSION START
S301
IS DEGREE OF ROUGHNESS $H_b$ OF RESPIRATION EQUAL TO OR LARGER THAN SPECIFIED THRESHOLD $H_{th}$?
No
Yes
S302
CALCULATE VOICE SPEECH INFLUENCE LEVEL $E_u$ FROM $H_b$
S303
EXTEND SILENT TIMEOUT TIME $t_r$ OF VOICE RECOGNITION SPEECH END DETERMINATION BY TIME PROPORTIONAL TO VOICE SPEECH INFLUENCE LEVEL $E_u$
S304
EXTEND SILENT TIMEOUT TIME $t_s$ OF VOICE INTERACTION SESSION END BY TIME PROPORTIONAL TO VOICE SPEECH INFLUENCE LEVEL $E_u$
B
S305
IS THERE USER SPEECH WITHIN $t_s$ TIME?
No
Yes
S306
IS Intent OF INTENT UNDERSTANDING RESULT OF USER SPEECH INTERPRETABLE? (NOT OOD?)
No
A
Yes
S307
HAS INTERACTION SCENARIO OF VOICE INTERACTION SESSION BEEN COMPLETED?
No
Yes
VOICE INTERACTION SESSION END

FIG. 8B

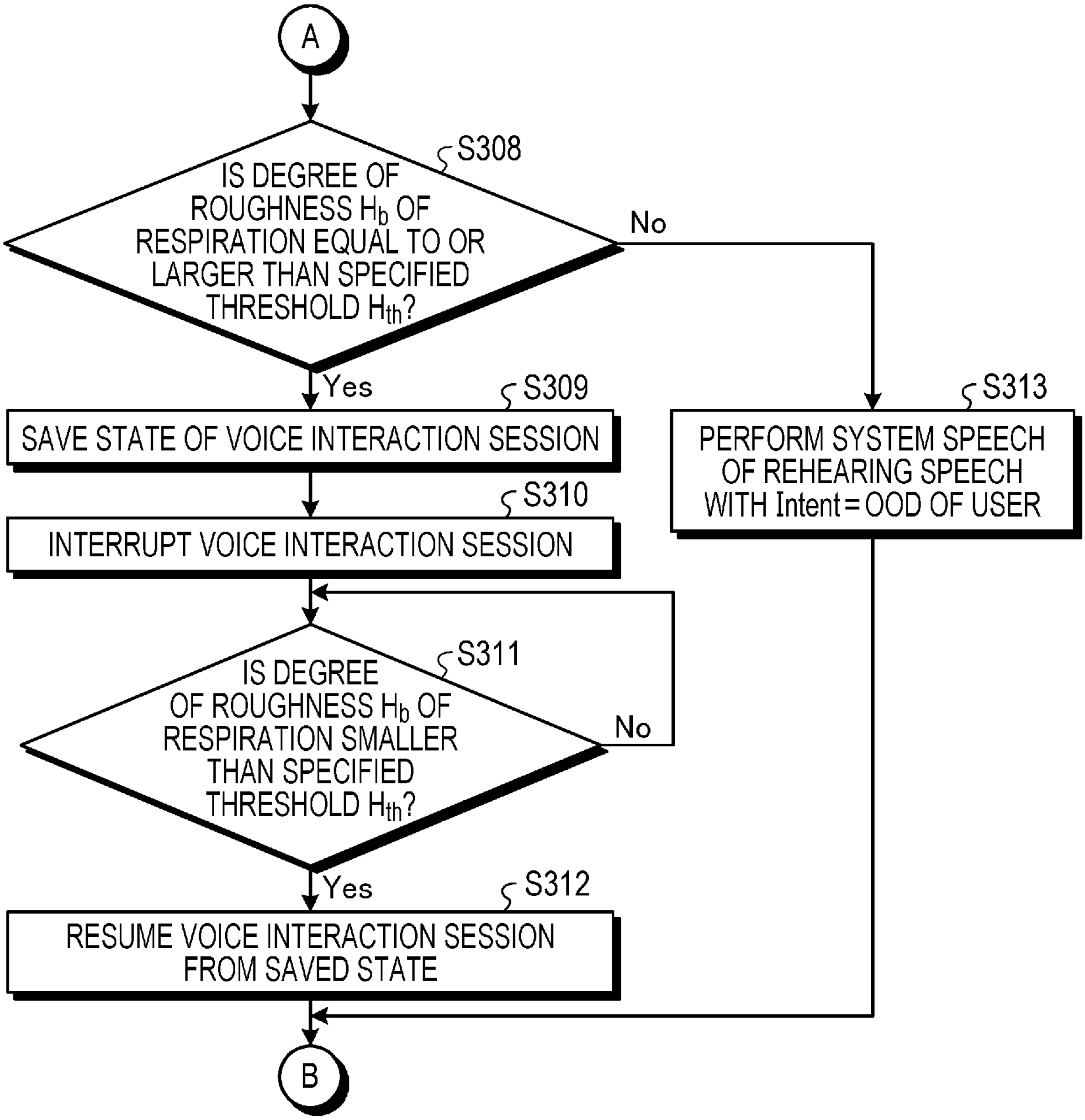
A
S308
IS DEGREE OF ROUGHNESS $H_b$ OF RESPIRATION EQUAL TO OR LARGER THAN SPECIFIED THRESHOLD $H_{th}$?
No
Yes
S309
SAVE STATE OF VOICE INTERACTION SESSION
S310
INTERRUPT VOICE INTERACTION SESSION
S311
IS DEGREE OF ROUGHNESS $H_b$ OF RESPIRATION SMALLER THAN SPECIFIED THRESHOLD $H_{th}$?
No
Yes
S312
RESUME VOICE INTERACTION SESSION FROM SAVED STATE
S313
PERFORM SYSTEM SPEECH OF REHEARING SPEECH WITH Intent = OOD OF USER
B

FIG. 9

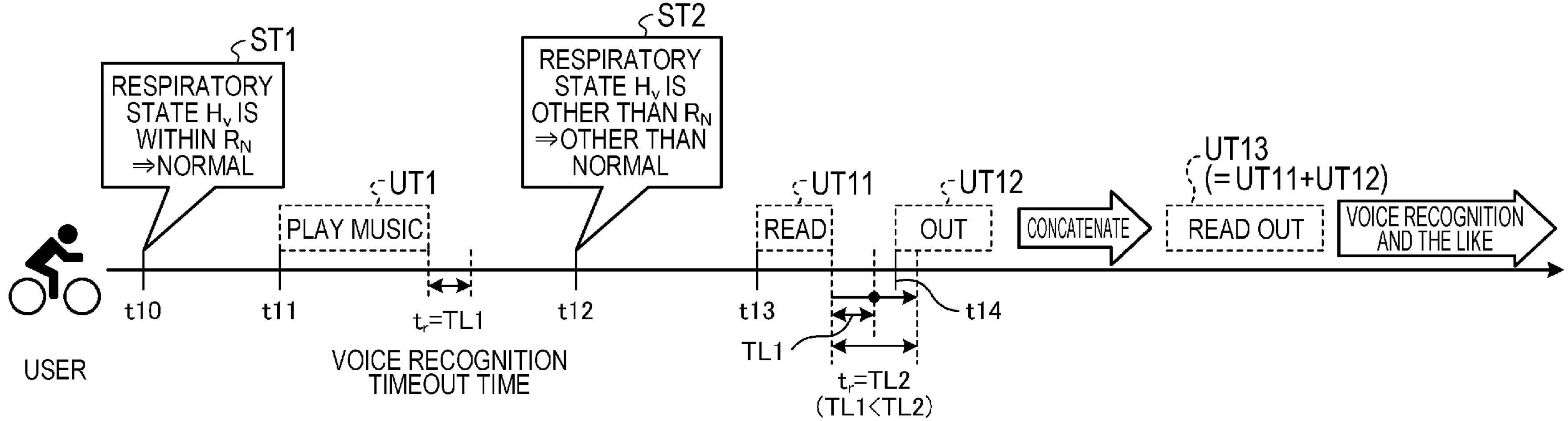
ST1
RESPIRATORY STATE $H_v$ IS WITHIN $R_N$ ⇒NORMAL
ST2
RESPIRATORY STATE $H_v$ IS OTHER THAN $R_N$ ⇒OTHER THAN NORMAL
UT1
PLAY MUSIC
UT11
READ
UT12
OUT
CONCATENATE
UT13
(=UT11+UT12)
READ OUT
VOICE RECOGNITION AND THE LIKE
USER
t10
t11
$t_r$=TL1
VOICE RECOGNITION TIMEOUT TIME
t12
t13
t14
TL1
$t_r$=TL2
(TL1<TL2)

FIG. 10

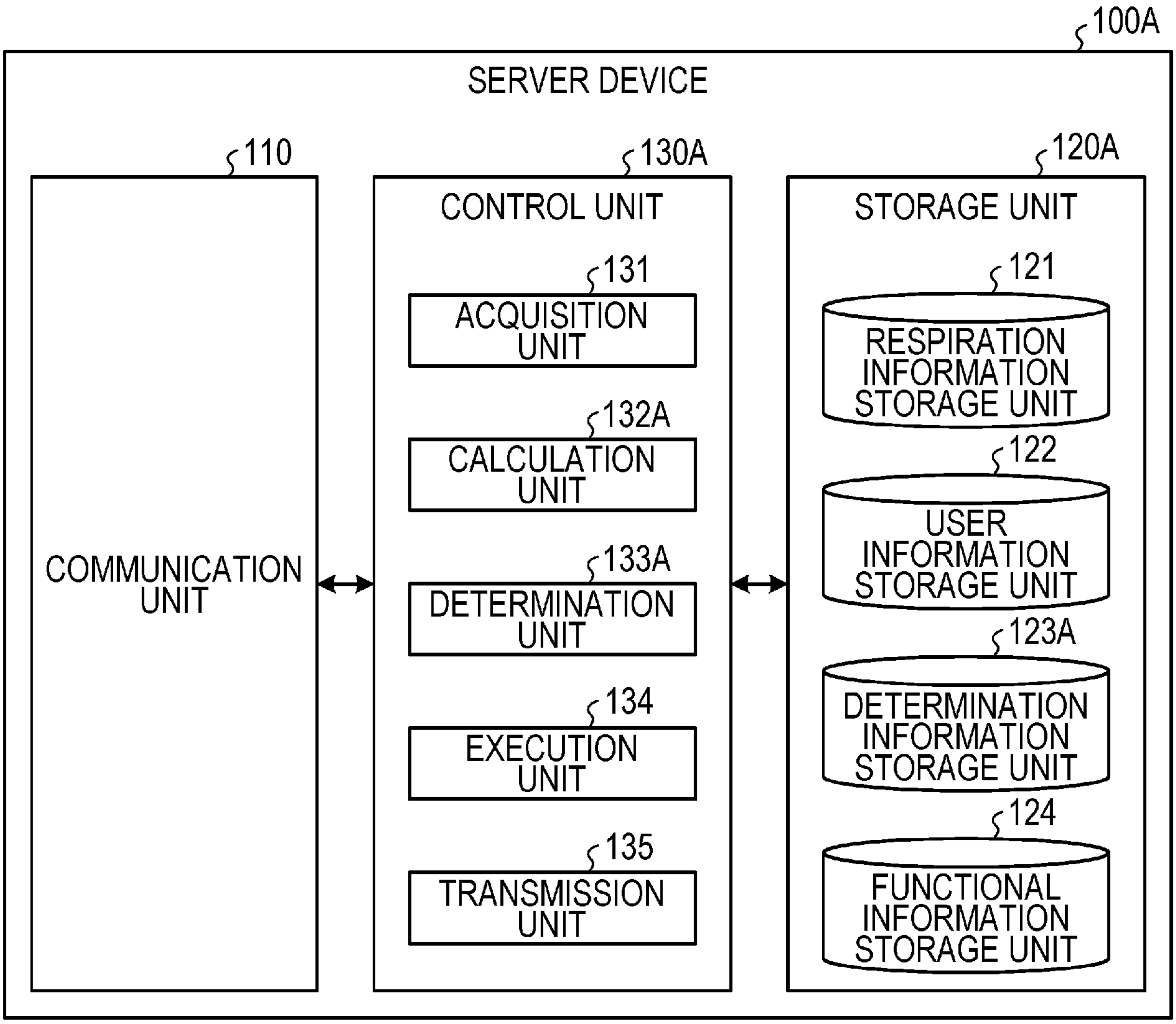
100A
SERVER DEVICE
110
COMMUNICATION UNIT
130A
CONTROL UNIT
131
ACQUISITION UNIT
132A
CALCULATION UNIT
133A
DETERMINATION UNIT
134
EXECUTION UNIT
135
TRANSMISSION UNIT
120A
STORAGE UNIT
121
RESPIRATION INFORMATION STORAGE UNIT
122
USER INFORMATION STORAGE UNIT
123A
DETERMINATION INFORMATION STORAGE UNIT
124
FUNCTIONAL INFORMATION STORAGE UNIT

FIG. 11

123A

| DETERMINATION INFORMATION ID | USE | NAME | CONTENT | ... |
|---|---|---|---|---|
| JD1 | NORMAL RANGE | $R_N$ | RANGE INFORMATION AINF | ... |
| ... | ... | ... | ... | ... |

FIG. 12A

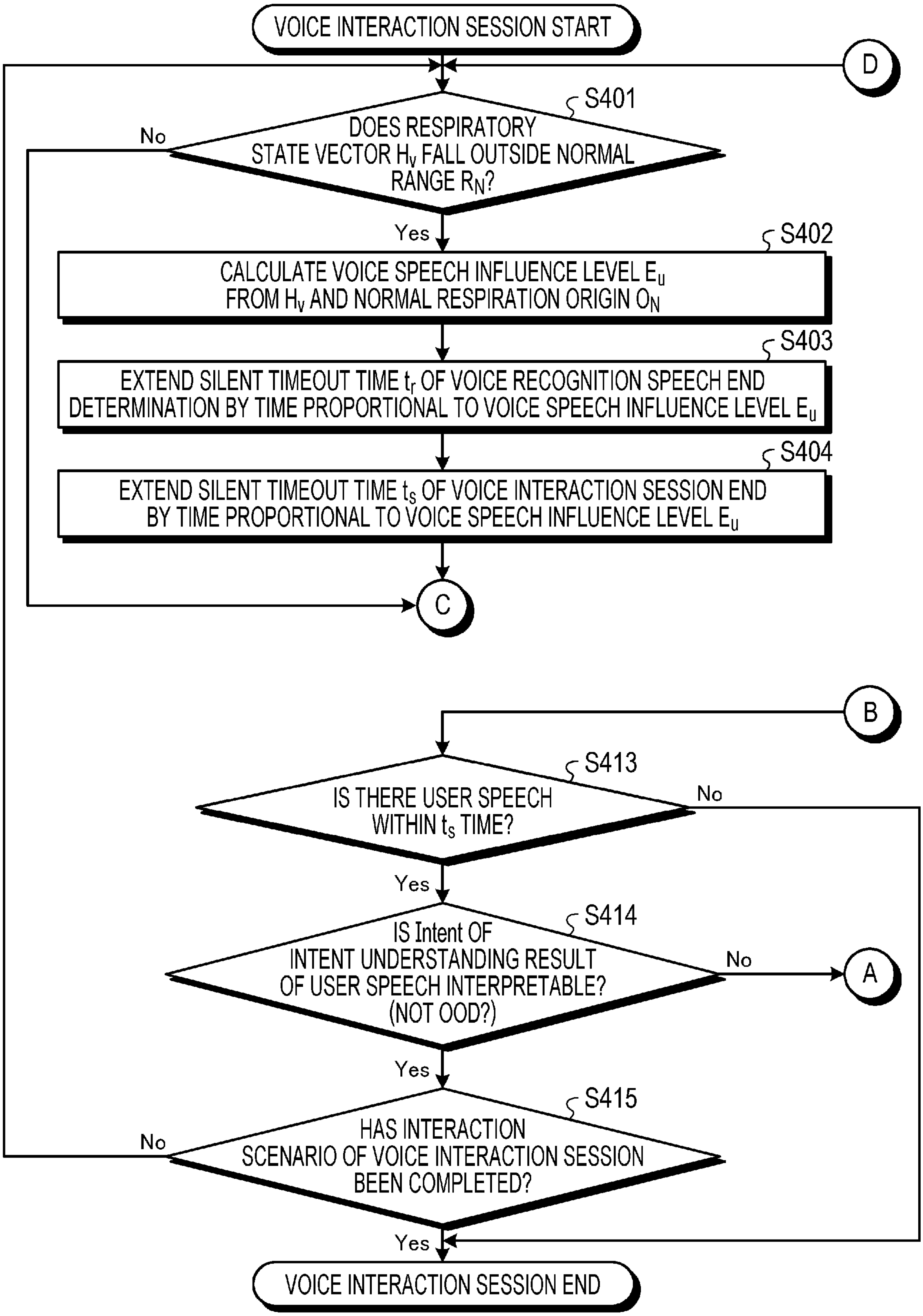
VOICE INTERACTION SESSION START
D
S401
DOES RESPIRATORY STATE VECTOR $H_V$ FALL OUTSIDE NORMAL RANGE $R_N$?
No
Yes
S402
CALCULATE VOICE SPEECH INFLUENCE LEVEL $E_u$ FROM $H_V$ AND NORMAL RESPIRATION ORIGIN $O_N$
S403
EXTEND SILENT TIMEOUT TIME $t_r$ OF VOICE RECOGNITION SPEECH END DETERMINATION BY TIME PROPORTIONAL TO VOICE SPEECH INFLUENCE LEVEL $E_u$
S404
EXTEND SILENT TIMEOUT TIME $t_S$ OF VOICE INTERACTION SESSION END BY TIME PROPORTIONAL TO VOICE SPEECH INFLUENCE LEVEL $E_u$
C
B
S413
IS THERE USER SPEECH WITHIN $t_S$ TIME?
No
Yes
S414
IS Intent OF INTENT UNDERSTANDING RESULT OF USER SPEECH INTERPRETABLE? (NOT OOD?)
No
A
Yes
S415
HAS INTERACTION SCENARIO OF VOICE INTERACTION SESSION BEEN COMPLETED?
No
Yes
VOICE INTERACTION SESSION END

FIG. 12B

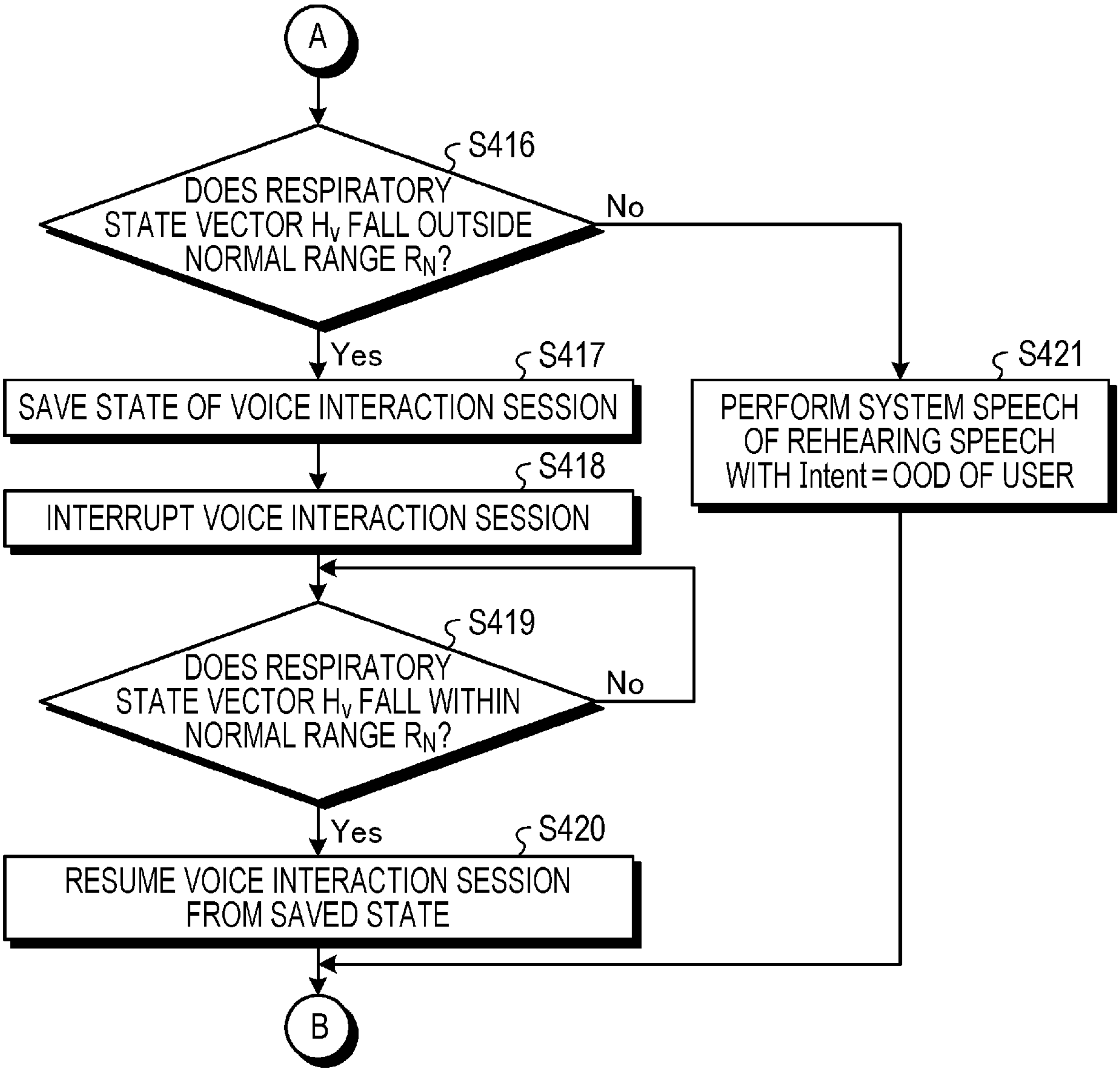
A
S416
DOES RESPIRATORY STATE VECTOR $H_V$ FALL OUTSIDE NORMAL RANGE $R_N$?
No
Yes
S417
SAVE STATE OF VOICE INTERACTION SESSION
S418
INTERRUPT VOICE INTERACTION SESSION
S419
DOES RESPIRATORY STATE VECTOR $H_V$ FALL WITHIN NORMAL RANGE $R_N$?
No
Yes
S420
RESUME VOICE INTERACTION SESSION FROM SAVED STATE
S421
PERFORM SYSTEM SPEECH OF REHEARING SPEECH WITH Intent = OOD OF USER
B

FIG. 13

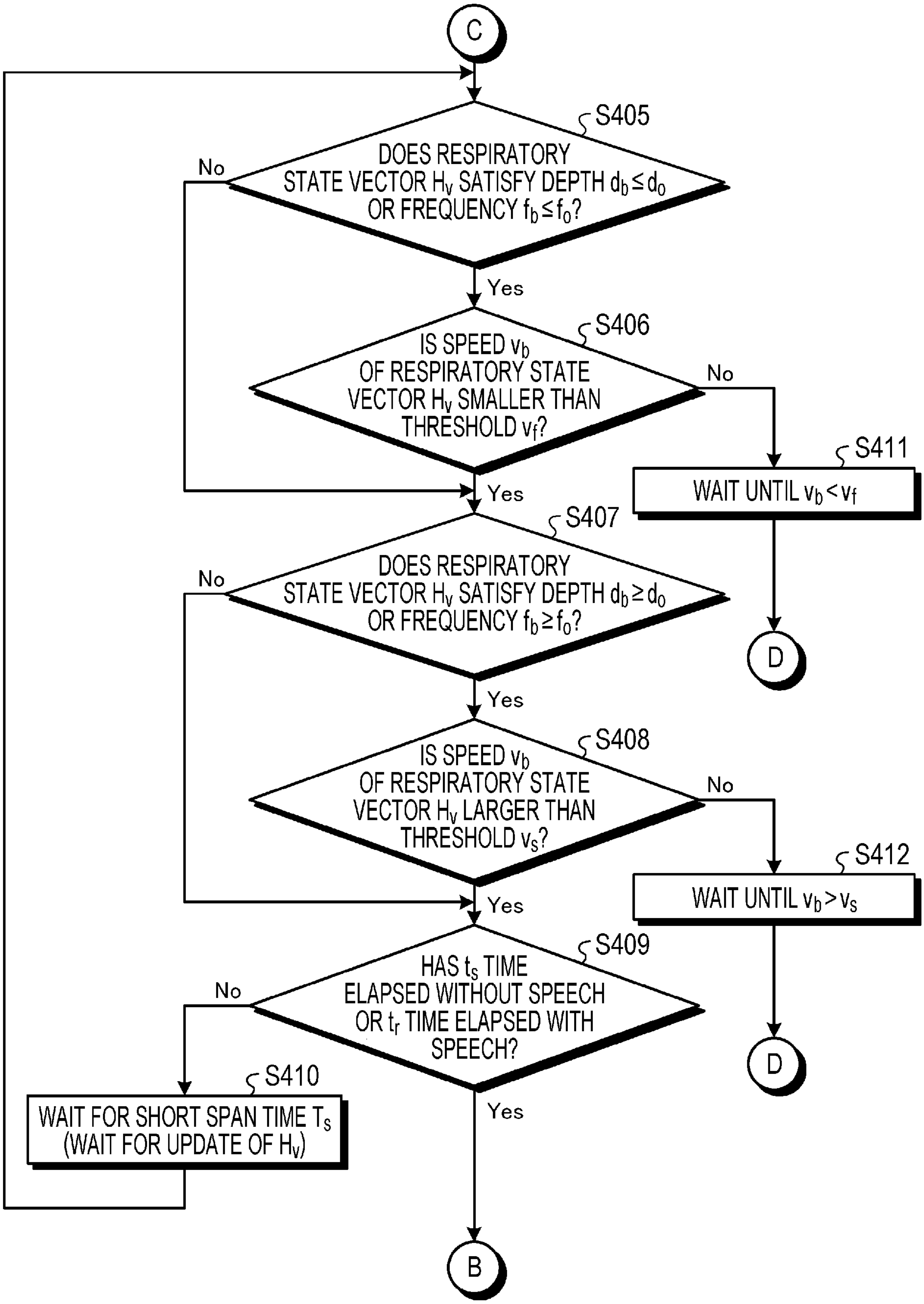
C
S405
DOES RESPIRATORY STATE VECTOR $H_v$ SATISFY DEPTH $d_b \leq d_0$ OR FREQUENCY $f_b \leq f_0$?
No
Yes
S406
IS SPEED $v_b$ OF RESPIRATORY STATE VECTOR $H_v$ SMALLER THAN THRESHOLD $v_f$?
No
S411
WAIT UNTIL $v_b < v_f$
D
Yes
S407
DOES RESPIRATORY STATE VECTOR $H_v$ SATISFY DEPTH $d_b \geq d_0$ OR FREQUENCY $f_b \geq f_0$?
No
Yes
S408
IS SPEED $v_b$ OF RESPIRATORY STATE VECTOR $H_v$ LARGER THAN THRESHOLD $v_s$?
No
S412
WAIT UNTIL $v_b > v_s$
D
Yes
S409
HAS $t_s$ TIME ELAPSED WITHOUT SPEECH OR $t_r$ TIME ELAPSED WITH SPEECH?
No
S410
WAIT FOR SHORT SPAN TIME $T_s$ (WAIT FOR UPDATE OF $H_v$)
Yes
B

# FIG. 14

| OBSERVED RESPIRATORY STATE | | | USER'S STATE/ BEHAVIOR THAT AFFECTS SPEECH (CANNOT OR LESS EASILY SPEAK) | INTERACTION CONTROL | |
|---|---|---|---|---|---|
| DEPTH $d_b$ | FREQUENCY $f_b$ | SHORT-TERM SPEED $v_b$ | | DURING SPEECH $t_r$ / BEFORE SPEECH $t_s$ | AFTER OOD SPEECH |
| NORMAL | NORMAL | NORMAL | NORMAL SPEECH IS POSSIBLE IN CALM STATE | PRIORITY GIVEN TO RESPONSE | – (NOT CAUSED BY RESPIRATION) |
| DEEP | HIGH | FAST | OUT OF BREATH/ HYPERVENTILATION DUE TO EXERCISE | PROPORTIONAL EXTENSION TO $E_u$ | RESUME INTERACTION WHEN $H_v$ FALLS WITHIN NORMAL RANGE $R_N$ |
| DEEP | $f_b \leq$ NORMAL | (INSTANTANEOUSLY) FAST | RESPIRATORY PHYSIOLOGICAL PHENOMENON (COUGH/SNEEZING/YAWNING) OR SIGHING | PROPORTIONAL EXTENSION TO $E_u$ + PERIOD EXTENSION OF $v_b \geq v_f$ | |
| $d_b \leq$ NORMAL | HIGH | | | | |
| $d_b \leq$ NORMAL | $f_b \leq$ NORMAL | | | | |
| SHALLOW | LOW | SLOW | CONCENTRATION/ ARRESTED RESPIRATION | PROPORTIONAL EXTENSION TO $E_u$ | |
| SHALLOW | $f_b \geq$ NORMAL | (INSTANTANEOUSLY) SLOW | HOLD BREATH OR BREATH BECOMES SHALLOW DUE TO SURPRISE OR STRAIN | PROPORTIONAL EXTENSION TO $E_u$ + PERIOD EXTENSION OF $v_b \leq v_f$ | |
| $d_b \geq$ NORMAL | LOW | | | | |
| $d_b \geq$ NORMAL | $f_b \geq$ NORMAL | | | | |

FIG. 15

1

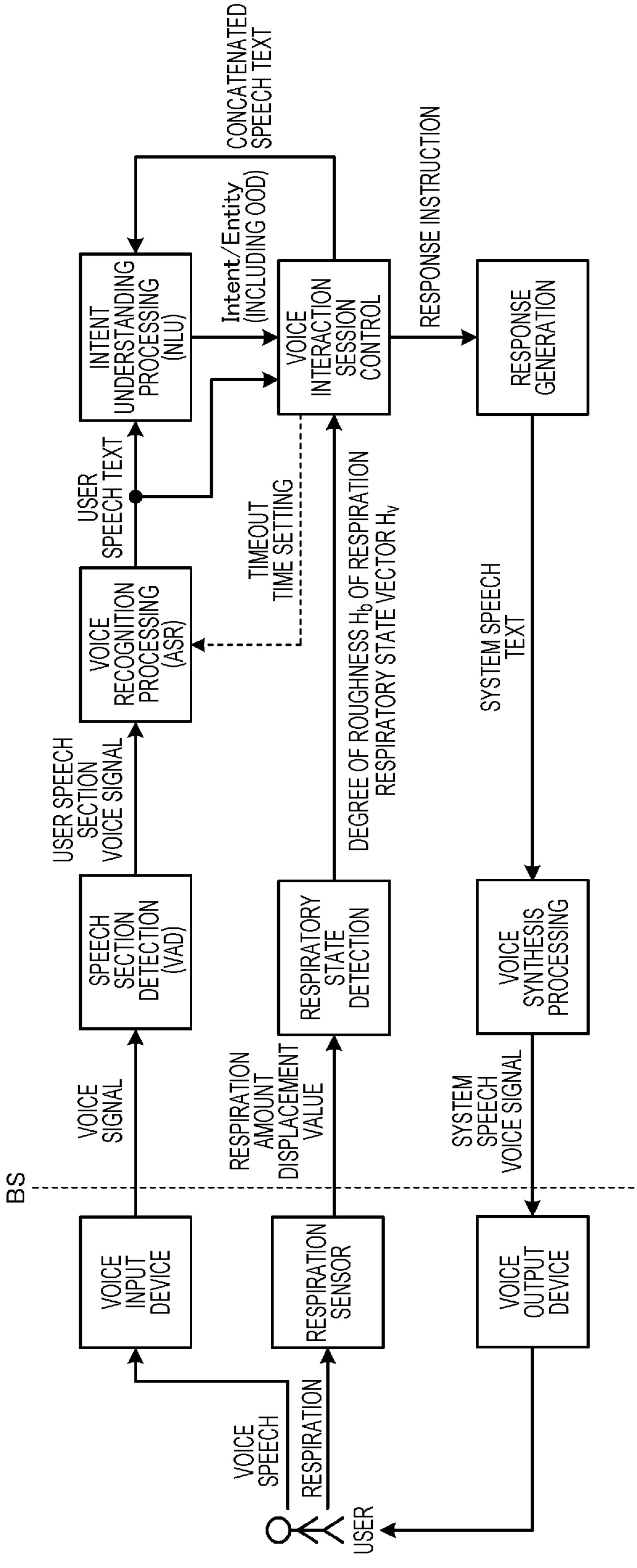
USER
VOICE SPEECH
RESPIRATION
VOICE INPUT DEVICE
RESPIRATION SENSOR
VOICE OUTPUT DEVICE
BS
VOICE SIGNAL
RESPIRATION AMOUNT DISPLACEMENT VALUE
SYSTEM SPEECH VOICE SIGNAL
SPEECH SECTION DETECTION (VAD)
RESPIRATORY STATE DETECTION
VOICE SYNTHESIS PROCESSING
USER SPEECH SECTION VOICE SIGNAL
DEGREE OF ROUGHNESS H_b OF RESPIRATION
RESPIRATORY STATE VECTOR H_v
SYSTEM SPEECH TEXT
VOICE RECOGNITION PROCESSING (ASR)
TIMEOUT TIME SETTING
USER SPEECH TEXT
INTENT UNDERSTANDING PROCESSING (NLU)
Intent/Entity (INCLUDING OOD)
VOICE INTERACTION SESSION CONTROL
RESPONSE INSTRUCTION
RESPONSE GENERATION
CONCATENATED SPEECH TEXT

FIG. 16

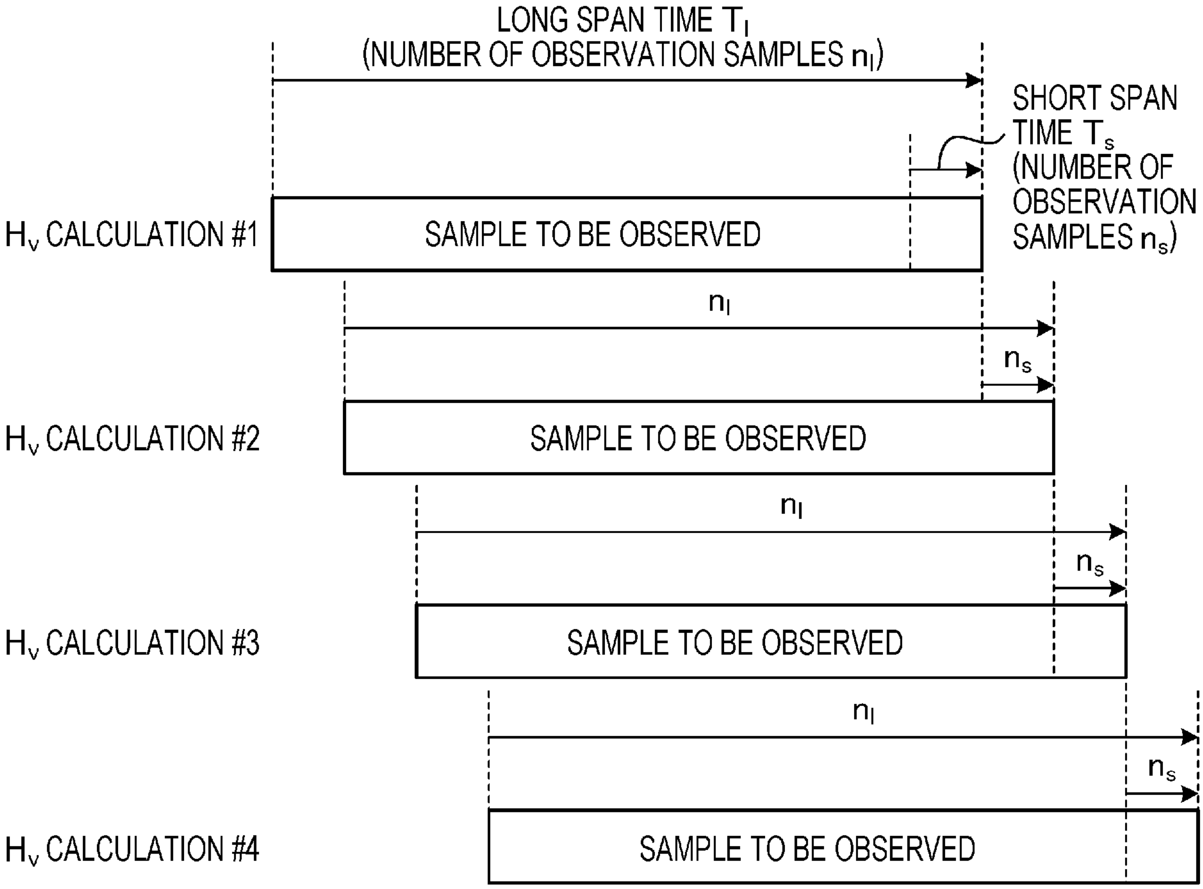
LONG SPAN TIME $T_l$
(NUMBER OF OBSERVATION SAMPLES $n_l$)
SHORT SPAN TIME $T_s$ (NUMBER OF OBSERVATION SAMPLES $n_s$)
$H_v$ CALCULATION #1
SAMPLE TO BE OBSERVED
$n_l$
$n_s$
$H_v$ CALCULATION #2
SAMPLE TO BE OBSERVED
$n_l$
$n_s$
$H_v$ CALCULATION #3
SAMPLE TO BE OBSERVED
$n_l$
$n_s$
$H_v$ CALCULATION #4
SAMPLE TO BE OBSERVED

FIG. 17

GR1

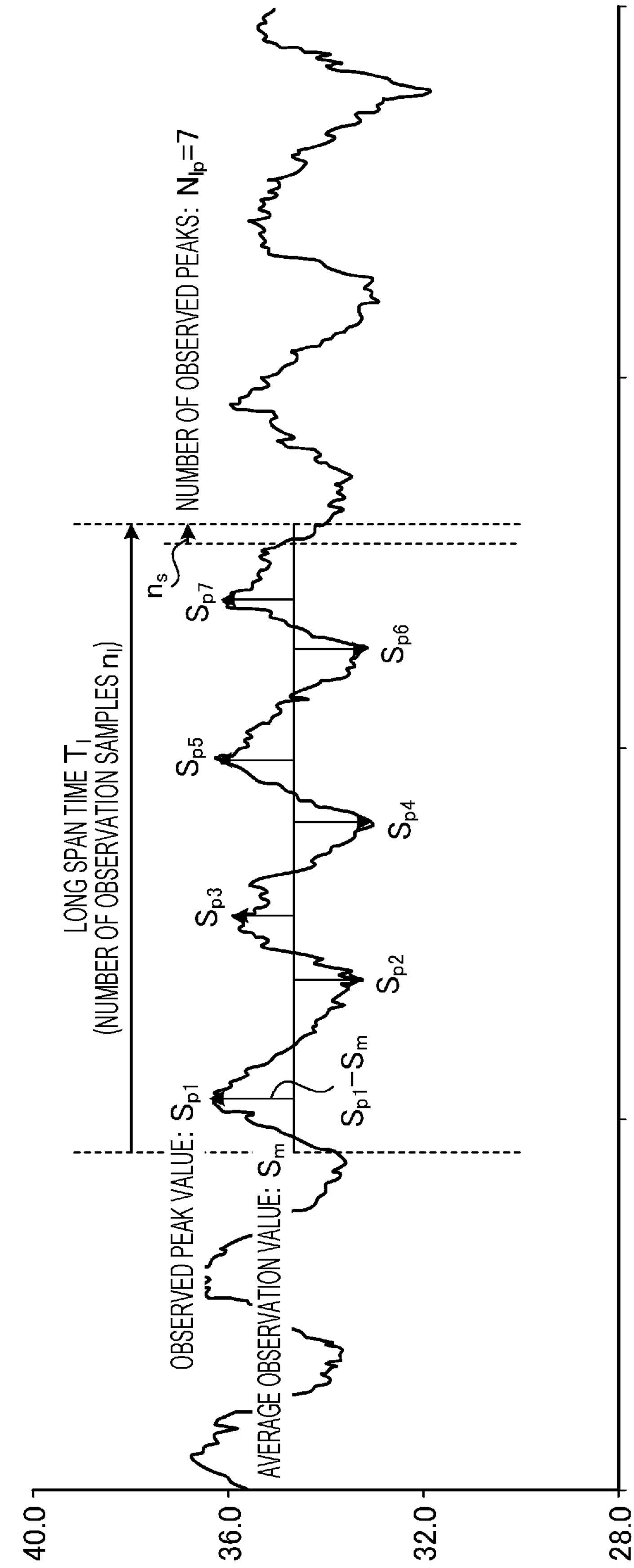

LONG SPAN TIME $T_l$
(NUMBER OF OBSERVATION SAMPLES $n_l$)
NUMBER OF OBSERVED PEAKS: $N_{lp}$=7
$n_s$
OBSERVED PEAK VALUE: $S_{p1}$
AVERAGE OBSERVATION VALUE: $S_m$
$S_{p1}-S_m$
$S_{p2}$
$S_{p3}$
$S_{p4}$
$S_{p5}$
$S_{p6}$
$S_{p7}$
40.0
36.0
32.0
28.0

FIG. 18

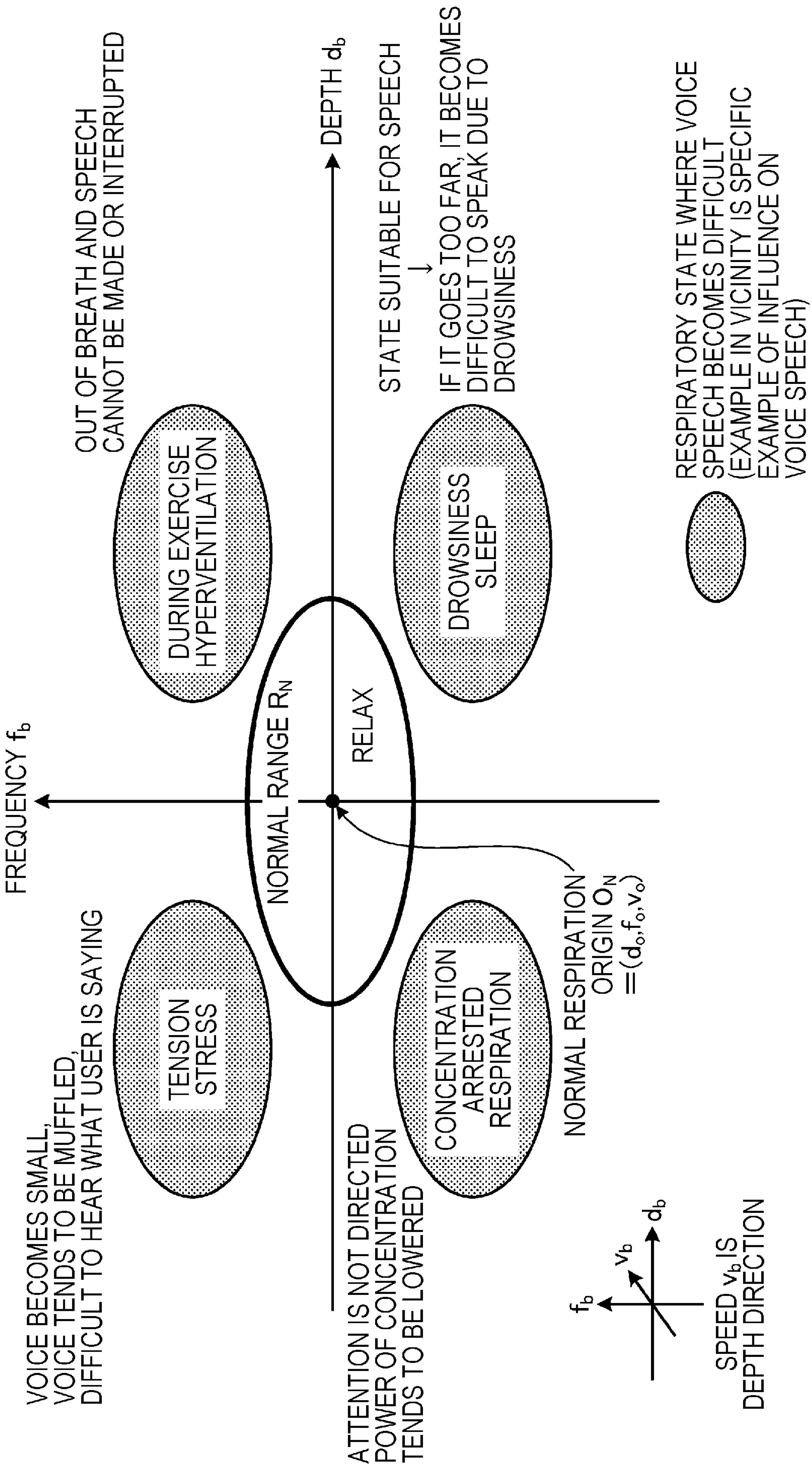
VOICE BECOMES SMALL,
VOICE TENDS TO BE MUFFLED,
DIFFICULT TO HEAR WHAT USER IS SAYING
FREQUENCY $f_b$
OUT OF BREATH AND SPEECH CANNOT BE MADE OR INTERRUPTED
TENSION STRESS
DURING EXERCISE HYPERVENTILATION
NORMAL RANGE $R_N$
RELAX
DEPTH $d_b$
ATTENTION IS NOT DIRECTED
POWER OF CONCENTRATION
TENDS TO BE LOWERED
CONCENTRATION ARRESTED RESPIRATION
DROWSINESS SLEEP
STATE SUITABLE FOR SPEECH
↓
IF IT GOES TOO FAR, IT BECOMES DIFFICULT TO SPEAK DUE TO DROWSINESS
NORMAL RESPIRATION
NORMAL RESPIRATION ORIGIN $O_N$ $=(d_o,f_o,v_o)$
$f_b$
$v_b$
$d_b$
SPEED $v_b$ IS DEPTH DIRECTION
RESPIRATORY STATE WHERE VOICE SPEECH BECOMES DIFFICULT (EXAMPLE IN VICINITY IS SPECIFIC EXAMPLE OF INFLUENCE ON VOICE SPEECH)

FIG. 19A

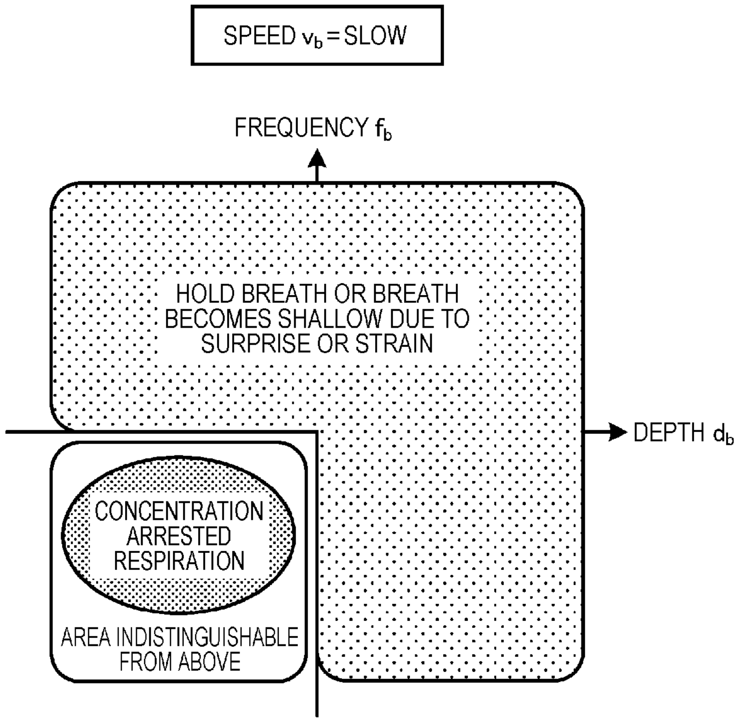


FIG. 19B

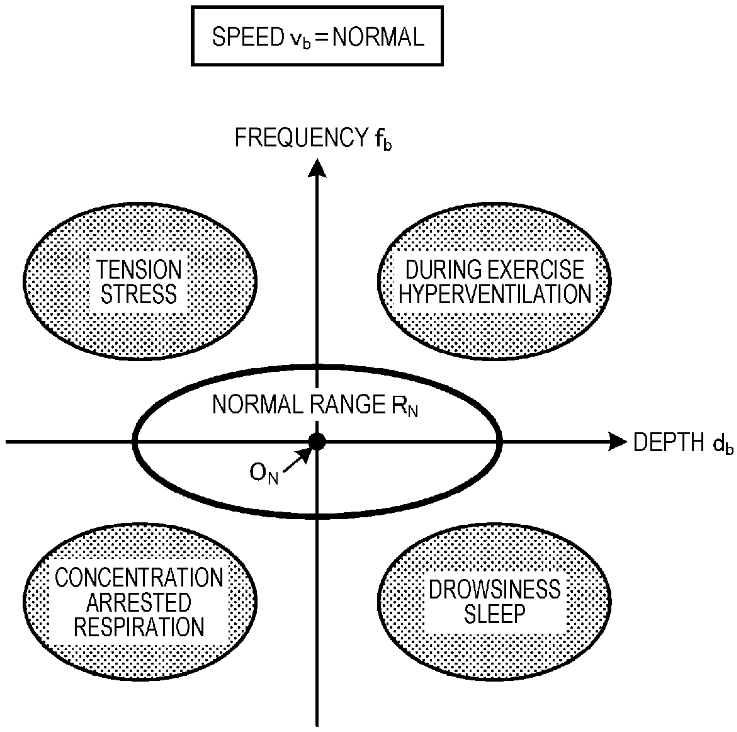

FIG. 19C

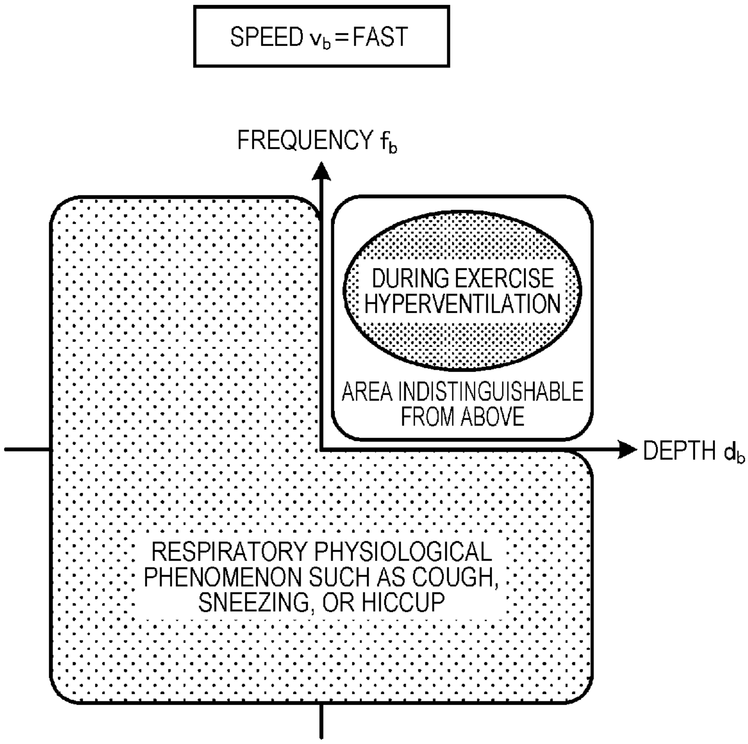
SPEED $v_b$ = FAST
FREQUENCY $f_b$
DURING EXERCISE HYPERVENTILATION
AREA INDISTINGUISHABLE FROM ABOVE
DEPTH $d_b$
RESPIRATORY PHYSIOLOGICAL PHENOMENON SUCH AS COUGH, SNEEZING, OR HICCUP

FIG. 20A

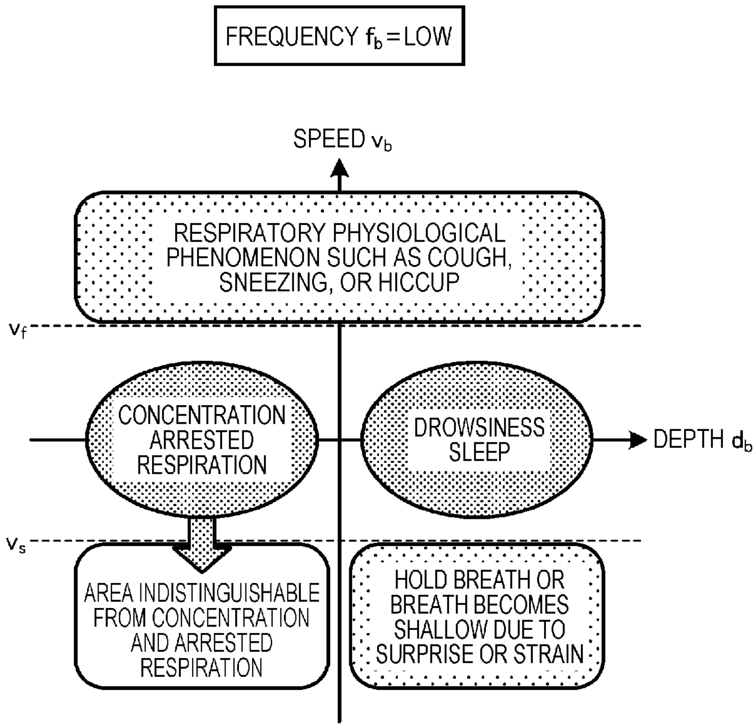


FIG. 20B

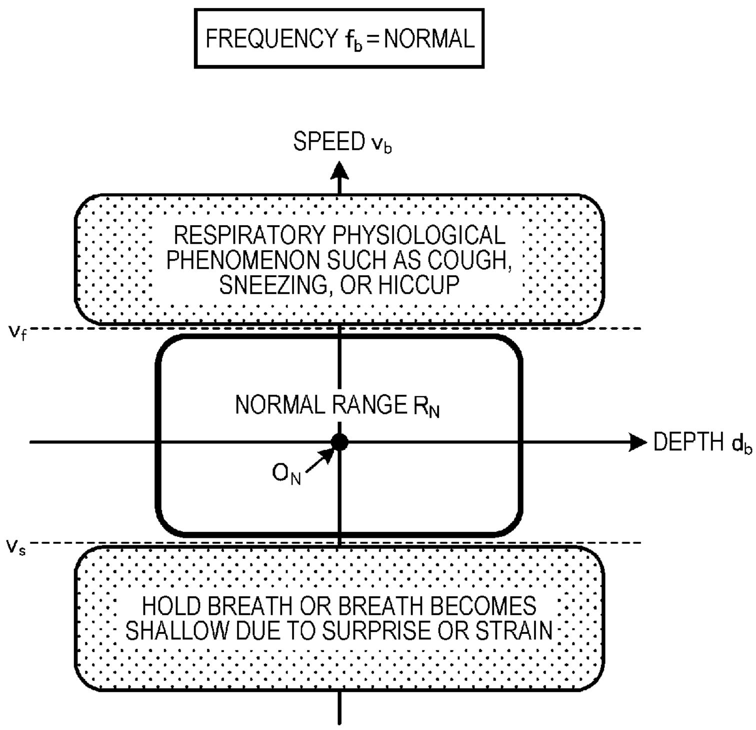

FIG. 20C

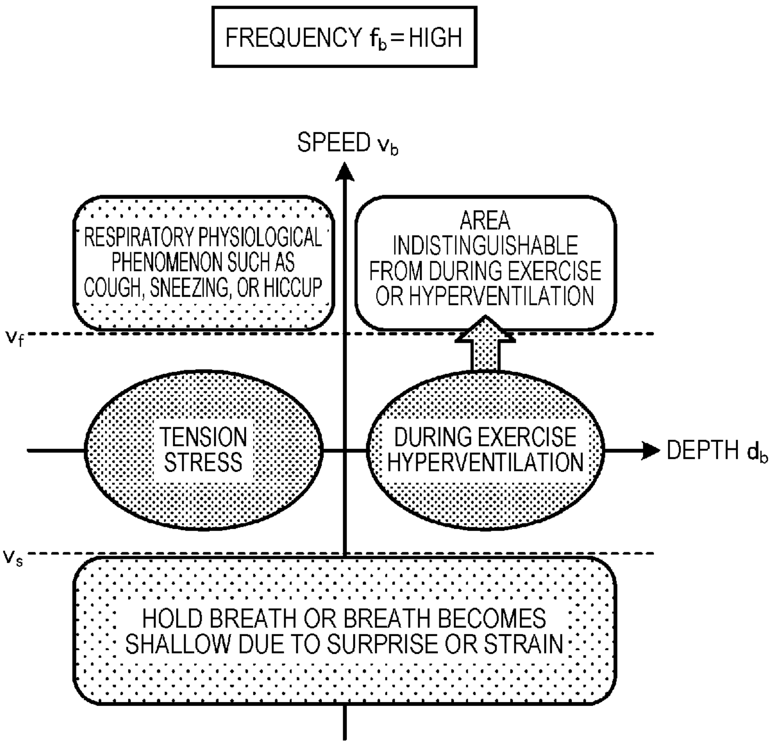
FREQUENCY $f_b$ = HIGH
SPEED $v_b$
RESPIRATORY PHYSIOLOGICAL PHENOMENON SUCH AS COUGH, SNEEZING, OR HICCUP
AREA INDISTINGUISHABLE FROM DURING EXERCISE OR HYPERVENTILATION
$v_f$
TENSION STRESS
DURING EXERCISE HYPERVENTILATION
DEPTH $d_b$
$v_s$
HOLD BREATH OR BREATH BECOMES SHALLOW DUE TO SURPRISE OR STRAIN

FIG. 21A

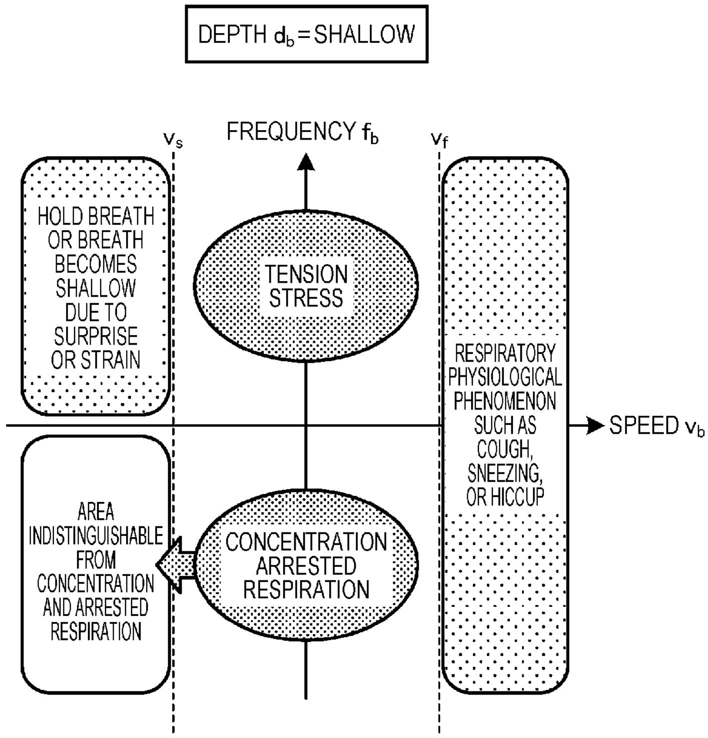


FIG. 21B

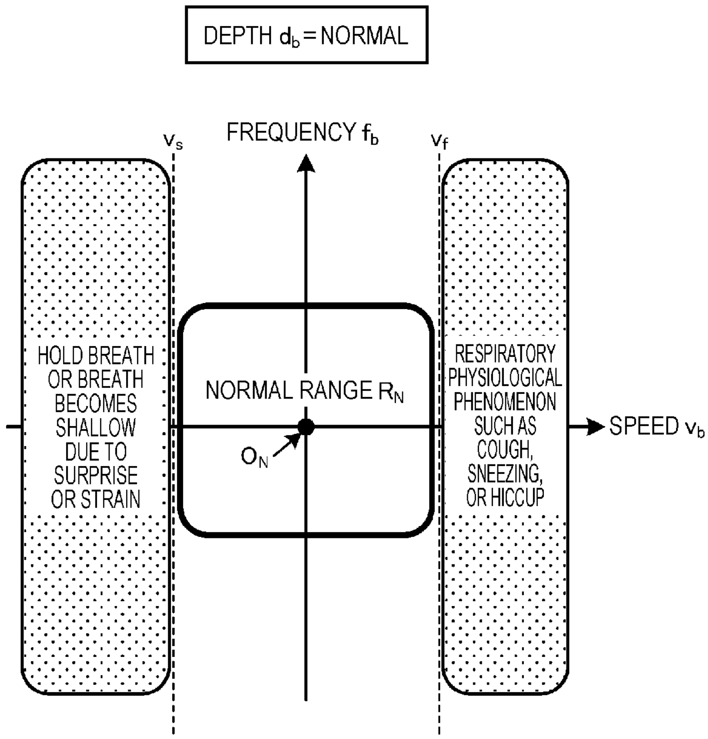

FIG. 21C

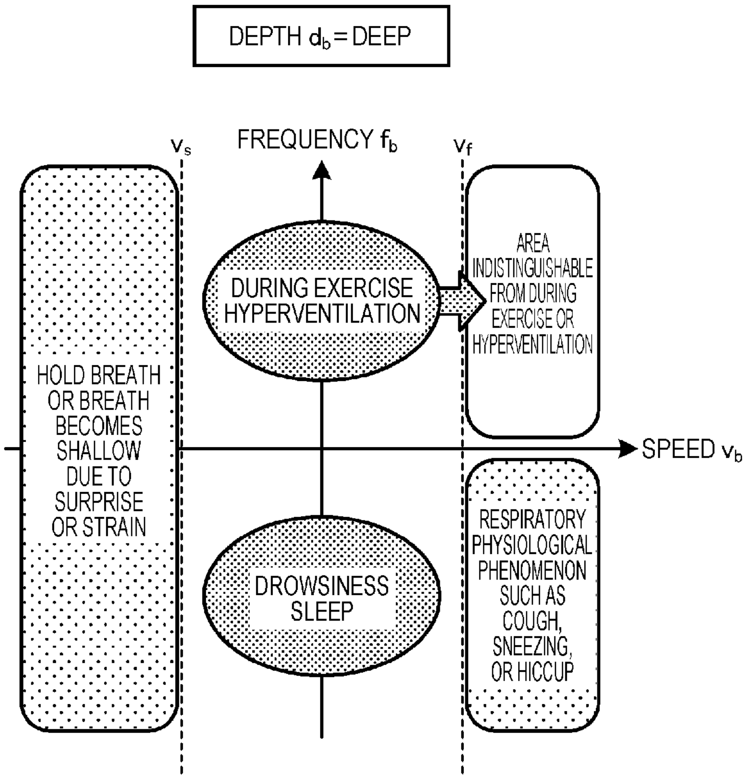
DEPTH $d_b$ = DEEP
$v_s$
FREQUENCY $f_b$
$v_f$
HOLD BREATH OR BREATH BECOMES SHALLOW DUE TO SURPRISE OR STRAIN
DURING EXERCISE HYPERVENTILATION
AREA INDISTINGUISHABLE FROM DURING EXERCISE OR HYPERVENTILATION
SPEED $v_b$
DROWSINESS SLEEP
RESPIRATORY PHYSIOLOGICAL PHENOMENON SUCH AS COUGH, SNEEZING, OR HICCUP

FIG. 22A

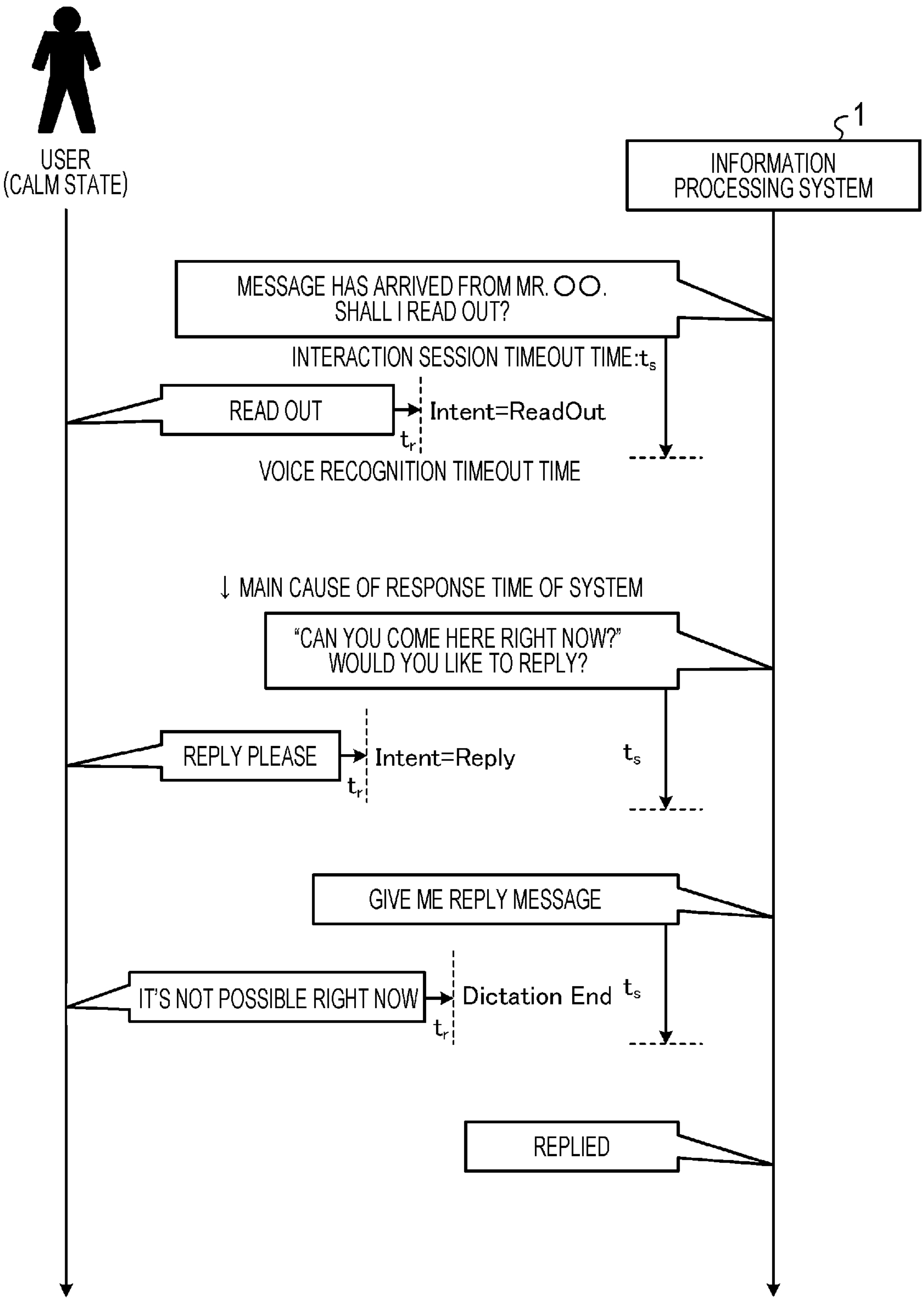
1
USER
(CALM STATE)
INFORMATION PROCESSING SYSTEM
MESSAGE HAS ARRIVED FROM MR. ○○. SHALL I READ OUT?
INTERACTION SESSION TIMEOUT TIME:$t_s$
READ OUT
Intent=ReadOut
$t_r$
VOICE RECOGNITION TIMEOUT TIME
↓ MAIN CAUSE OF RESPONSE TIME OF SYSTEM
"CAN YOU COME HERE RIGHT NOW?" WOULD YOU LIKE TO REPLY?
REPLY PLEASE
Intent=Reply
$t_r$
$t_s$
GIVE ME REPLY MESSAGE
IT'S NOT POSSIBLE RIGHT NOW
Dictation End
$t_r$
$t_s$
REPLIED

FIG. 22B

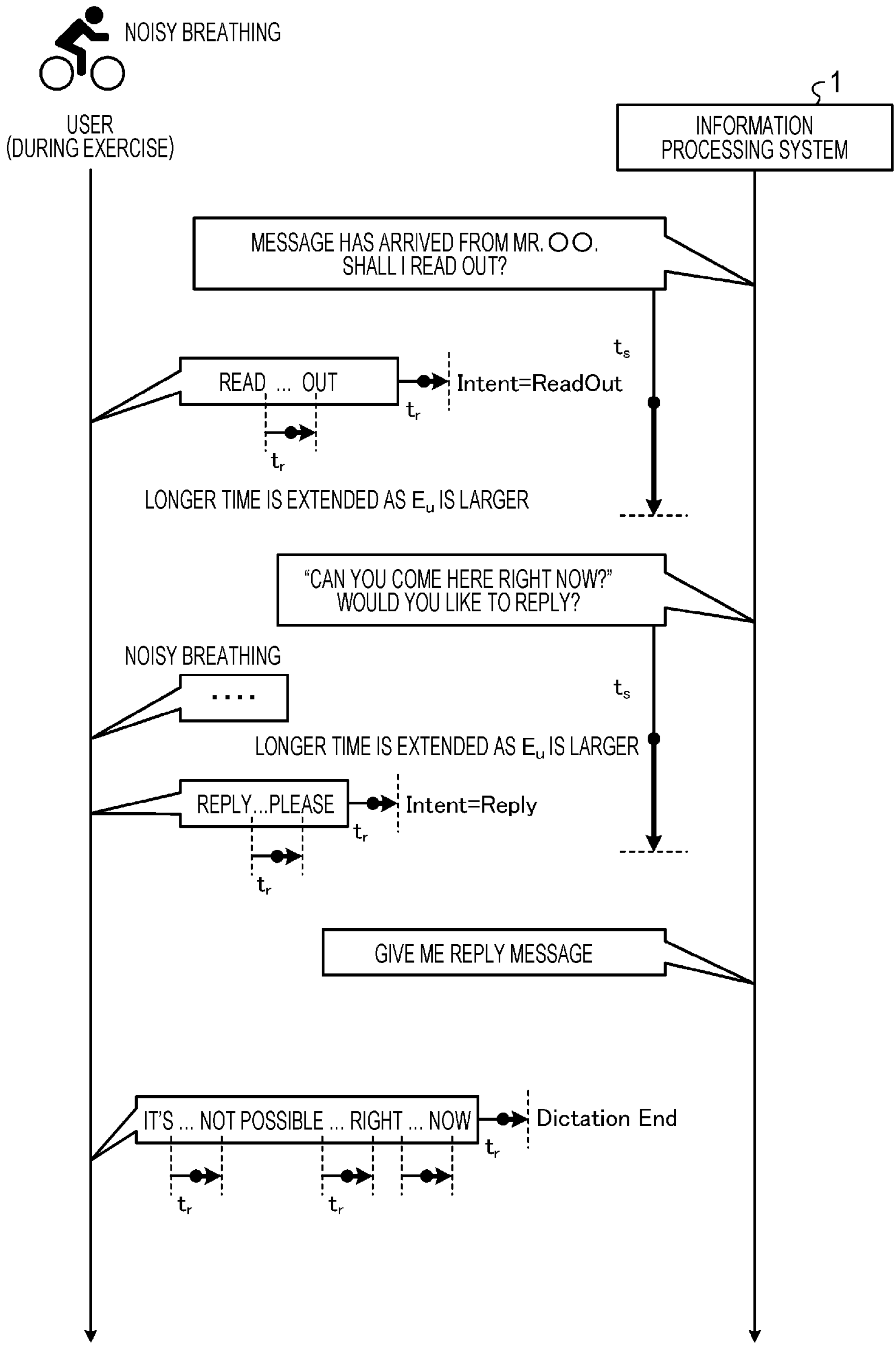
NOISY BREATHING
USER (DURING EXERCISE)
1
INFORMATION PROCESSING SYSTEM
MESSAGE HAS ARRIVED FROM MR. ○○. SHALL I READ OUT?
$t_s$
READ ... OUT
Intent=ReadOut
$t_r$
$t_r$
LONGER TIME IS EXTENDED AS $E_u$ IS LARGER
"CAN YOU COME HERE RIGHT NOW?" WOULD YOU LIKE TO REPLY?
NOISY BREATHING
....
$t_s$
LONGER TIME IS EXTENDED AS $E_u$ IS LARGER
REPLY...PLEASE
Intent=Reply
$t_r$
$t_r$
GIVE ME REPLY MESSAGE
IT'S ... NOT POSSIBLE ... RIGHT ... NOW
Dictation End
$t_r$
$t_r$
$t_r$

FIG. 23A

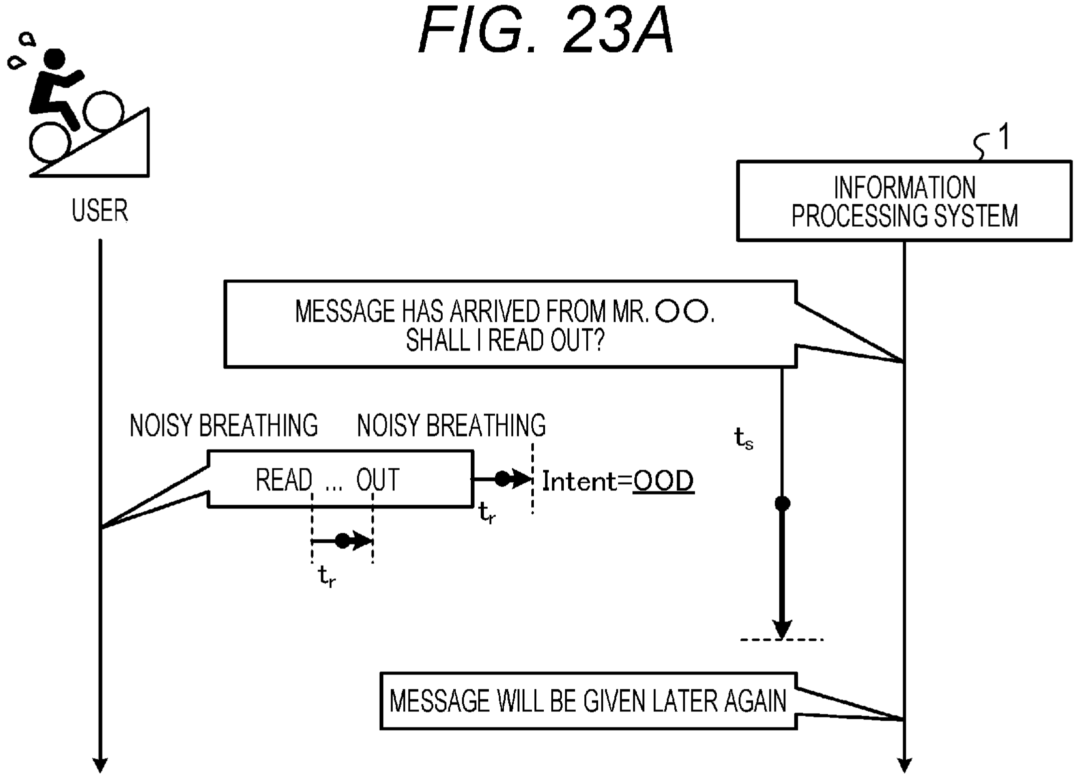


FIG. 23B

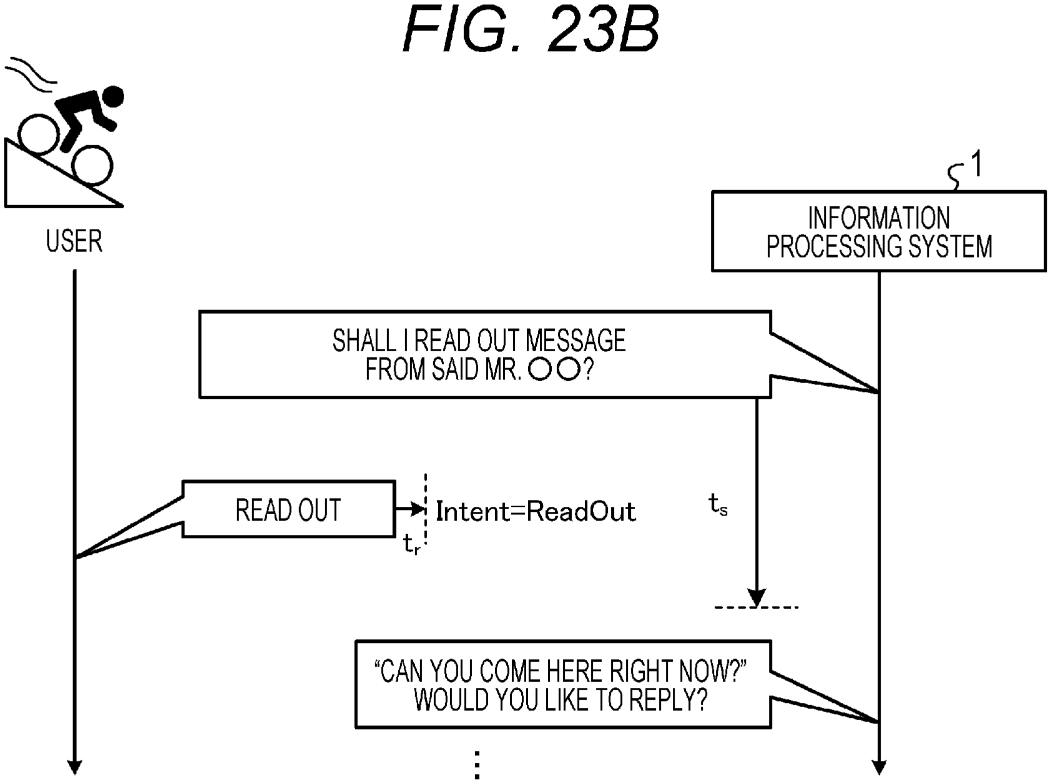

FIG. 24

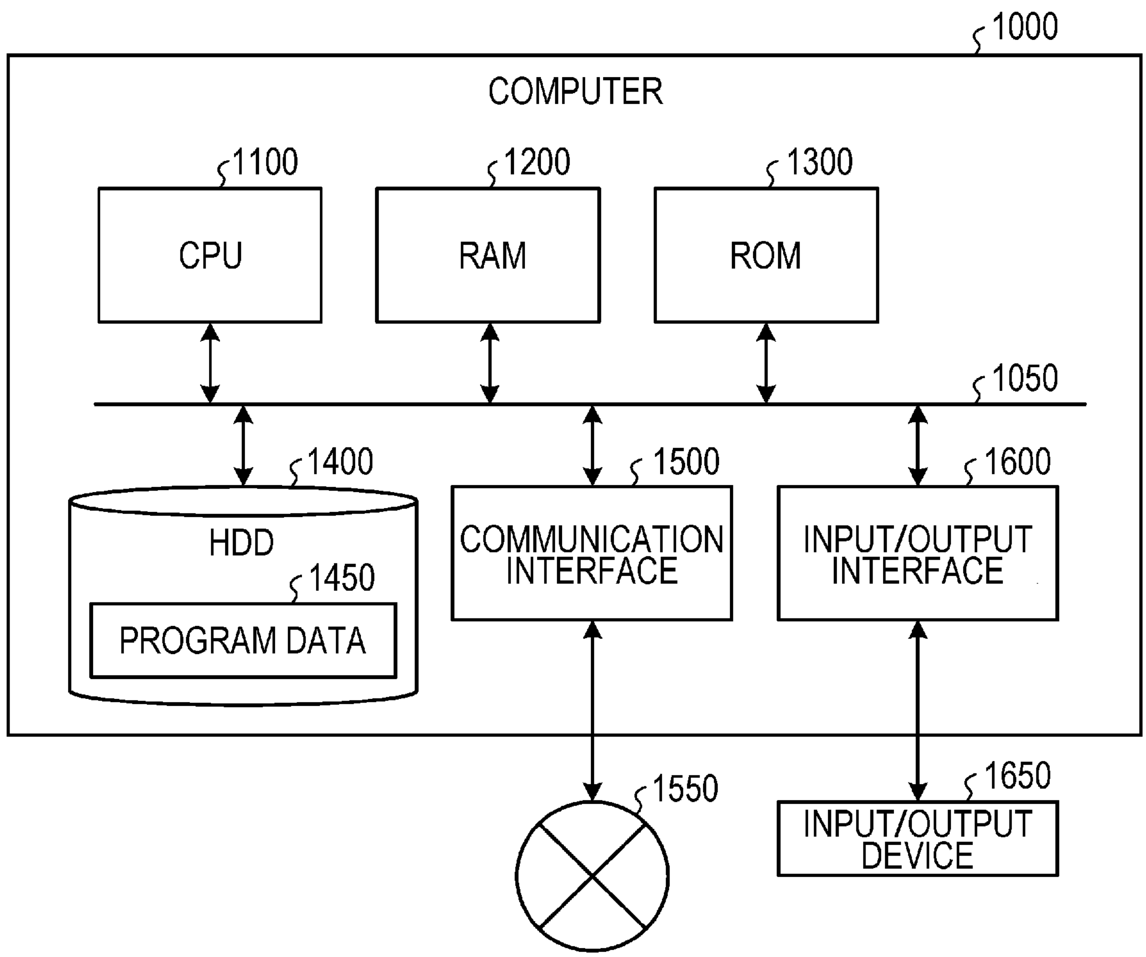
1000
COMPUTER
1100
CPU
1200
RAM
1300
ROM
1050
1400
HDD
1450
PROGRAM DATA
1500
COMMUNICATION INTERFACE
1600
INPUT/OUTPUT INTERFACE
1550
1650
INPUT/OUTPUT DEVICE

**INTERNATIONAL SEARCH REPORT**

International application No.
PCT/JP2021/002112

A. CLASSIFICATION OF SUBJECT MATTER
G10L 15/04(2013.01)i; G10L 15/10(2006.01)i; G10L 15/22(2006.01)i
FI: G10L15/04 300Z; G10L15/22 300Z; G10L15/10 500T

According to International Patent Classification (IPC) or to both national classification and IPC

B. FIELDS SEARCHED

Minimum documentation searched (classification system followed by classification symbols)
G10L15/00-15/34

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-017932 A (NISSAN MOTOR CO., LTD.) 20 January 2005 (2005-01-20) paragraphs [0001]-[0068] | 1-20 |
| A | JP 2004-272048 A (NISSAN MOTOR CO., LTD.) 30 September 2004 (2004-09-30) paragraphs [0004], [0018]-[0020] | 1-20 |
| A | WO 2019/239656 A1 (SONY CORP.) 19 December 2019 (2019-12-19) paragraphs [0015]-[0184] | 1-20 |
| A | JP 11-249773 A (TOSHIBA CORP.) 17 September 1999 (1999-09-17) paragraphs [0041]-[0043], [0050]-[0093], [0217]-[0218] | 1-20 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 March 2021 (31.03.2021) | 13 April 2021 (13.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/002112

| Patent Documents referred in the Report | Publication Date | Patent Family | Publication Date |
|---|---|---|---|
| JP 2005-017932 A | 20 Jan. 2005 | (Family: none) | |
| JP 2004-272048 A | 30 Sep. 2004 | (Family: none) | |
| WO 2019/239656 A1 | 19 Dec. 2019 | (Family: none) | |
| JP 11-249773 A | 17 Sep. 1999 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017211596 A